# EUROPÄISCHE PATENTANMELDUNG

(11) **EP 3 584 869 A2**
(43) Veröffentlichungstag der Anmeldung: **25.12.2019**
(21) Anmeldenummer: 19178991.6
(22) Anmeldetag: 07.06.2019
(51) Int. Cl.: H01M 10/052, H01M 10/0565, C25B 1/00, C08G 2/00, H01M 8/1025

(54) **SCHADSTOFFBINDENDER ELEKTROLYT FÜR ELEKTROCHEMISCHE ZELLEN**

(30) Priorität: 20.06.2018 DE 102018209933
(71) Anmelder: Robert Bosch GmbH, 70442 Stuttgart (DE)
(72) Erfinder: Buchkremer, Anne, 70193 Stuttgart (DE); Joost, Mario, 71229 Leonberg (DE); Gehrold, Andreas, 76228 Karlsruhe (DE)

(57) **Zusammenfassung**

Die vorliegende Erfindung betrifft einen Elektrolyt für eine elektrochemische Zelle (10), insbesondere für eine Batteriezelle und/oder Brennstoffzelle und/oder Elektrolysezelle. Um die Leistung, Lebensdauer und/oder Sicherheit der Zelle (10) zu verbessern, umfasst der Elektrolyt mindestens eine Verbindung mit mindestens einem Dreiring und/oder Vierring und/oder mit mindestens einer Doppelbindung und/oder mit mindestens einer Dreifachbindung. Darüber hinaus betrifft die Erfindung ein derartiges Polymer, ein Herstellungsverfahren hierfür sowie eine Funktionsschicht (13,13') für eine elektrochemische Zelle (10) und eine entsprechende Zelle (10).

## Beschreibung

Die vorliegende Erfindung betrifft einen Elektrolyten, ein Polymer, ein Herstellungsverfahren sowie eine Funktionsschicht für eine elektrochemische Zelle und eine entsprechende Zelle.

### Stand der Technik

Elektrochemische Zellen, wie Batteriezellen sowie Brennstoffzellen und/oder Elektrolysezellen, umfassen eine negative Elektrode und eine positive Elektrode, welche durch eine ionenleitende Schicht voneinander getrennt sind. Im Fall von Batteriezellen und Brennstoffzellen wird die negative Elektrode auch als Anode und die positive Elektrode auch als Kathode bezeichnet. Im Fall von Elektrolysezelle wird die negative Elektrode auch als Kathode und die positive Elektrode auch als Anode bezeichnet. Die ionenleitende Schicht wird im Fall einer Batteriezelle auch als Separatorschicht beziehungsweise Separator und im Fall einer Brennstoffzelle und/oder Elektrolysezelle auch als Elektrolytmembran bezeichnet.

Beim Betrieb dieser Zellen, beispielsweise beim Laden von Batteriezellen, können an den Oberflächen der Elektroden jedoch Spannungen erreicht werden, welche für viele Elektrolyte und/oder Bestandteile der ionenleitenden Schicht beziehungsweise deren Verunreinigungen eine Redox-Umgebung darstellen. Dies kann zu einer Bildung von, meist gasförmigen, Schadstoffen führen, welche Nebenreaktionen eingehen können und auf diese Weise die Effizienz und die Lebensdauer der Zelle verringern können. Dabei kann gegebenenfalls der Innenwiderstand der Zelle steigen, wodurch Überspannungen an den Oberflächen der Elektroden begünstigt werden können. Darüber hinaus können durch derartige Nebenreaktionen auch elektrochemisch aktive Komponenten, zum Beispiel im Fall von Lithium-Batteriezellen Lithium, irreversibel gebunden und somit dem elektrochemischen Prozess der Zelle entzogen werden. Im Fall von Lithium-Batteriezellen kann dies sogar gegebenenfalls zu einer ungeordneten Abscheidung von metallischem Lithium in Form von so genannten Dendriten an der negativen Elektrode führen, welche im ungünstigsten Fall durch die ionenleitende Schicht bis zur positiven Elektrode wachsen und gegebenenfalls sogar zu einem Kurzschluss der Zelle führen können.

Zudem können während des Herstellungsprozesses der Zelle Schadstoffe, zum Beispiel Gase, aus der Umgebungsatmosphäre in deren Materialien absorbiert und/oder adsorbiert werden und/oder noch von der Herstellung der Materialien, zum Beispiel Wasser infolge einer nasschemischen Herstellung, in den Materialien enthalten sein, welche auch nach ausgiebigem Trocknen der Materialien und durch Behandlung mit Vakuum nicht vollständig entfernt werden können und durch Nebenreaktionen die Effizienz und die Lebensdauer der Zelle verringern können.

Darüber hinaus sind in zahlreichen Veröffentlichungen, unter anderem von Jeff Dahn et al, diverse ungewollte chemische und/oder elektrochemische Nebenreaktionen innerhalb von Batteriezellen beschrieben, in denen gasförmige Schadstoffe und/oder Zersetzungsprodukte entstehen können, welche deren Lebensdauer signifikant herabsetzen können. In der Veröffentlichung J. Electrochem. Soc., 163, 2016, A546 wird zum Beispiel diskutiert, ob Gase mit Graphit einer Anode einer Batteriezelle reagieren und einen negativen Einfluss auf die Kapazität und Lebensdauer der Batteriezelle haben können.

Der Übersichtsartikel Nano Energy, 33, 2017, 363 behandelt das Thema Festkörperbatteriezellen.

Die Druckschriften US 2008/0070121 A1, US 2017/0005363 A1 und US 2003/0113634 A1 betreffen Lithium-Batteriezellen.

### Offenbarung der Erfindung

Gegenstand der vorliegenden Erfindung ist ein Elektrolyt für eine elektrochemische Zelle. Der Elektrolyt kann insbesondere für eine elektrochemische Zelle in Form einer Batteriezelle, beispielsweise einer Lithium-Batterie- und/oder -Zelle, zum Beispiel einer Lithium-Metall- und/oder Lithium-Ionen-Batterie- und/oder -Zelle, und/oder einer Brennstoffzelle und/oder einer Elektrolysezelle ausgelegt sein. Der Elektrolyt kann insbesondere ionenleitend, beispielsweise lithiumionenleitend, sein.

Insbesondere kann der Elektrolyt mindestens eine Verbindung mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Doppelbindung, insbesondere mit mindestens einer Kohlenstoff-Kohlenstoff-Doppelbindung (C=C), beispielsweise mit mindestens einer, insbesondere cyclische oder acyclische, Alken-Gruppe, und/oder mit mindestens einer Kohlenstoff-Sauerstoff-Doppelbindung (C=O), beispielsweise mit mindestens einer Carbonyl-Gruppe, und/oder mit mindestens einer Dreifachbindung, insbesondere mit mindestens einer Kohlenstoff-Kohlenstoff-Dreifachbindung (C≡C), beispielsweise mit mindestens einer Alkin-Gruppe, und/oder mit mindestens einer Kohlenstoff-Stickstoff-Dreifachbindung (C≡N), beispielsweise mit mindestens einer Nitril-Gruppe (-C≡N) und/oder mit mindestens einer Isonitril-Gruppe (-N≡C), umfassen.

Unter einer Alken-Gruppe kann insbesondere eine Gruppe verstanden werden, welche mindestens eine Kohlenstoff-Kohlenstoff-Doppelbindung umfasst. Beispielsweise kann die mindestens eine Alken-Gruppe mindestens eine Alkenyl-Gruppe, beispielsweise mindestens eine Ethenyl-Gruppe, und/oder mindestens eine Alkenylen-Gruppe, beispielsweise Ethenylen-Gruppe, und/oder mindestens ein Alken umfassen oder sein.

Unter einer Alkenyl-Gruppe kann insbesondere eine endständige Alken-Gruppe verstanden werden. Dementsprechend kann unter einer Ethenyl-Gruppe eine endständige Ethen-Gruppe verstanden werden. Spezielles Beispiele für eine Alkenyl-Gruppe sind eine Vinyl-Gruppe und/oder eine Allyl-Gruppe.

Unter einer Alkenylen-Gruppe kann insbesondere eine verbrückende und/oder ringbildende Alken-Gruppe verstanden werden. Dementsprechend kann unter einer Ethenylen-Gruppe eine verbrückende und/oder ringbildende Ethen-Gruppe verstanden werden. Ein spezielles Beispiel für eine Alkenylen-Gruppe beziehungsweise Ethenylen-Gruppe ist eine Vinylen-Gruppe.

Die mindestens eine Alken-Gruppe kann sowohl acyclisch als auch cyclisch sein. Zum Beispiel kann die mindestens eine Alken-Gruppe mindestens eine, insbesondere acyclische, Alkenyl-Gruppe, beispielsweise mindestens eine Vinyl-Gruppe und/oder mindestens eine Allyl-Gruppe und/oder mindestens eine Alkenylcarbonat-Gruppe, zum Beispiel mindestens eine Vinylcarbonat-Gruppe, und/oder mindestens eine Alkenyllacton-Gruppe, zum Beispiel mindestens eine Vinyllacton-Gruppe, und/oder mindestens eine, insbesondere cyclische oder acyclische, Alkenylen-Gruppe, beispielsweise mindestens eine, insbesondere cyclische, Alkenylencarbonat-Gruppe, zum Beispiel mindestens eine, insbesondere cyclische, Vinylencarbonat-Gruppe, und/oder mindestens eine, insbesondere cyclische, Alkenylenlacton-Gruppe, zum Beispiel mindestens eine, insbesondere cyclische, Vinylenlacton-Gruppe, umfassen oder sein.

Unter einer Alkin-Gruppe kann insbesondere eine Gruppe verstanden werden, welche mindestens eine Kohlenstoff-Kohlenstoff-Dreifachbindung umfasst. Beispielsweise kann die mindestens eine Alkin-Gruppe eine Alkinyl-Gruppe, beispielsweise eine Ethinyl-Gruppe, und/oder eine Alkinylen-Gruppe, beispielsweise eine Ethinylen-Gruppe, und/oder mindestens ein Alkin umfassen oder sein.

Unter einer Alkinyl-Gruppe kann insbesondere eine endständige Alkin-Gruppe verstanden werden. Dementsprechend kann unter einer Ethinyl-Gruppe eine endständige Ethin-Gruppe verstanden werden.

Unter einer Alkinylen-Gruppe kann insbesondere eine verbrückende Alkin-Gruppe verstanden werden. Dementsprechend kann unter einer Ethinylen-Gruppe eine verbrückende Ethin-Gruppe verstanden werden.

Verbindung mit mindestens einem Dreiring und/oder Vierring und/oder mit mindestens einer Doppelbindung und/oder Dreifachbindung können vorteilhafterweise Reaktionen, insbesondere Additionsreaktionen, mit in elektrochemischen Zellen auftretenden, unerwünschten, beispielsweise gasförmigen, Schadstoffen beziehungsweise Verunreinigungen, wie Kohlenstoffmonoxid (CO), Kohlenstoffdioxid (CO₂), Fluorwasserstoff (HF), Wasserstoff (H₂) sowie Sauerstoff (O₂) eingehen und diese dadurch, beispielsweise im laufenden Betrieb der Zelle, insbesondere durch Bildung einer beständigen Verbindung, insbesondere langfristig und/oder dauerhaft und/oder irreversibel, Abfangen.

So können vorteilhafterweise sowohl, beispielsweise von der Zellherstellung bereits vorhandene als auch während des Betriebs der Zelle neu gebildete oder vorliegende, beispielsweise ansonsten gegebenenfalls Defekte verursachende, zum Beispiel gasförmige, Schadstoffe, insbesondere langfristig beziehungsweise dauerhaft, aus dem System, beispielsweise einem elektrochemischen Reaktionszyklus beim Zellbetrieb, zum Beispiel beim Laden und Entladen einer Batteriezelle und/oder beim Betrieb einer Brennstoffzelle und/oder beim Betrieb einer Elektrolysezelle, entfernt und auf diese Weise die Leistung und/oder Lebensdauer und/oder Sicherheit der Zelle gesteigert werden.

Zum Beispiel können so, beispielsweise meist gasförmige, vorhandene Verunreinigungen und/oder entstehende Nebenprodukte, wie Kohlenstoffmonoxid, Kohlenstoffdioxid, Fluorwasserstoff, Wasserstoff und Sauerstoff, welche im Fall einer Batteriezelle zu einem Dendritenwachstum sowie anderen ungewollten, meist irreversiblen Reaktionen und gegebenenfalls so zu einer Komponentenschädigung führen können, und/oder unerwünschte Luftkomponenten, wie Kohlenstoffmonoxid, welche im Fall einer Brennstoffzelle und/oder Elektrolysezelle zu ungewollten, meist irreversiblen Reaktionen, zum Beispiel von Katalysatorschichten und/oder Membran, und gegebenenfalls so zu einer Komponentenschädigung führen können, insbesondere langfristig und/oder dauerhaft, aus dem System entfernt werden.

Zum Beispiel können Oxiran-Gruppen und/oder Oxetan-Gruppen Kohlenstoffmonoxid (CO) und/oder Kohlenstoffdioxid (CO₂) und Cyclopropan-Gruppen und/oder Cyclobutan-Gruppen und/oder Cyclopropen-Gruppen und/oder Cyclobuten-Gruppen und/oder Verbindungen mit einer Doppelbindung, beispielsweise mit einer Kohlenstoff-Kohlenstoff-Doppelbindung (C=C), zum Beispiel Alkenyl-Gruppen und/oder Alkenylen-Gruppen und/oder Alkene, und/oder mit einer Kohlenstoff-Sauerstoff-Doppelbindung (C=O), zum Beispiel Carbonyl-Gruppen, und/oder mit einer Dreifachbindung, zum Beispiel mit einer Kohlenstoff-Kohlenstoff-Dreifachbindung (C≡C), wie Alkinyl-Gruppen und/oder Alkinylen-Gruppen und/oder Alkine, und/oder mit einer Kohlenstoff-Stickstoff-Dreifachbindung (C≡N), zum Beispiel Nitril-Gruppen, Wasserstoff und/oder Fluorwasserstoff durch eine Additionsreaktion, beispielsweise unter Bildung einer gesättigten (Einfach-)Bindungen, binden.

Zum Beispiel können Oxiran-Gruppen, welche auch als Epoxid-Gruppen bezeichnet werden können, beispielsweise in Gegenwart eines Katalysators, Kohlenstoffmonoxid unter Bildung eines β-Lactons, zum Beispiel gemäß der folgenden Reaktionsgleichung: 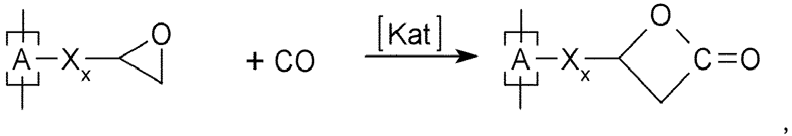 und/oder Kohlenstoffdioxid unter Bildung eines, insbesondere cyclischen, Ethylencarbonats, zum Beispiel gemäß der folgenden Reaktionsgleichung: 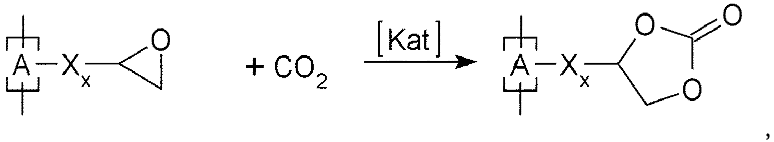 addieren. Vorteilhafterweise sind dabei sowohl die Oxiran-Gruppen als auch die ausgebildeten Lacton-Gruppen beziehungsweise Carbonat-Gruppen ionenleitfähig, beispielsweise lithiumionenleitfähig, so dass diese Gruppen sowohl vor als auch nach einer derartigen Reaktion zur lonenleitfähigkeit, beispielsweise Lithiumionenleitfähigkeit, des Elektrolyten beitragen können. Daher können Verbindungen mit Oxiran-Gruppen besonders bevorzugt eingesetzt werden.

Zum Beispiel können Alkenyl-Gruppen, zum Beispiel Ethenyl-Gruppen, wie Vinyl-Gruppen und/oder Allyl-Gruppen, und/oder Alkenylen-Gruppen, zum Beispiel Vinylen-Gruppen, beispielsweise in Gegenwart eines Katalysators, Fluorwasserstoff unter Bildung einer gesättigten Fluoralkyl/en-Gruppe, beispielsweise Fluorethyl/en-Gruppe, zum Beispiel gemäß der folgenden Reaktionsgleichung: 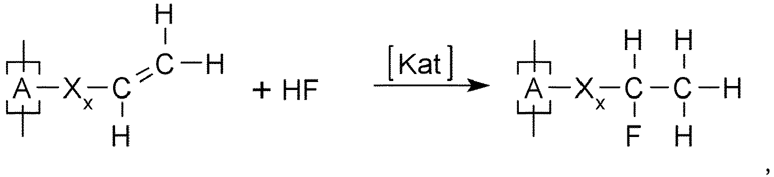 und/oder Wasserstoff unter Bildung einer gesättigten Alkyl/en-Gruppe, beispielsweise Ethyl/en-Gruppe, addieren.

Zum Beispiel können Alkinyl-Gruppen, zum Beispiel Ethinyl-Gruppen, und/oder Alkinylen-Gruppen, zum Beispiel Ethinylen-Gruppen, beispielsweise in Gegenwart eines Katalysators, Fluorwasserstoff unter Bildung einer Fluoralkyl/en-Gruppe und/oder Fluoralkenyl/en-Gruppe, beispielsweise einer Fluorethyl/en-Gruppe und/oder Fluorethenyl/en-Gruppe, und/oder Wasserstoff unter Bildung einer Alkyl/en-Gruppe und/oder Alkenyl/en-Gruppe, beispielsweise einer Ethyl/en-Gruppe und/oder Ethenyl/en-Gruppe, addieren.

Alkyl/en-Gruppen, Alkenyl/en-Gruppen, Fluoralkyl/en-Gruppen und/oder Fluoralkenyl/en-Gruppen beeinträchtigen in der Regel die Elektrolytfunktionalität kaum oder nicht, wohingegen sich Fluoralkyl/en-Gruppen und/oder Fluoralkenyl/en-Gruppen gegebenenfalls sogar vorteilhaft auf die lonenleitfähigkeit, beispielsweise Lithiumionenleitfähigkeit, des Elektrolyten und/oder die Zellfunktion auswirken können.

Zum Beispiel können Nitril-Gruppen, beispielsweise in Gegenwart eines Katalysators, (molekularen) Wasserstoff unter Bildung eines primären Amins, zum Beispiel gemäß der folgenden Reaktionsgleichung: 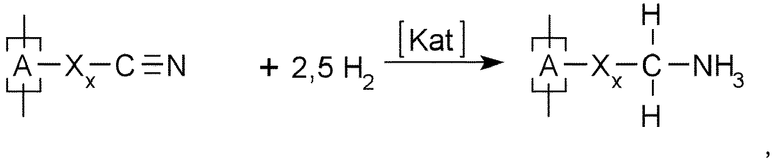 addieren.

Darüber hinaus kann das beim Betrieb der Zelle vorliegende elektrische Potential gegebenenfalls auch weitere bisher unbekannte Reaktionen von Verbindung mit mindestens einem Dreiring und/oder Vierring und/oder mit mindestens einer Doppelbindung und/oder Dreifachbindung mit, beispielsweise gasförmigen, Schadstoffen ermöglichen.

Additionsreaktionen an Verbindungen mit mindestens einem Dreiring und/oder Vierring und/oder mit mindestens einer Doppelbindung und/oder mit mindestens einer Dreifachbindung können vorteilhafterweise durch einen Katalysator begünstigt werden. Somit kann durch Zugabe mindestens eines Katalysators zur Katalyse einer Additionsreaktion zum Elektrolyten die Leistung und/oder Lebensdauer und/oder Sicherheit einer mit dem Elektrolyten ausgestatteten Zelle weiter gesteigert werden.

In einer Ausführungsform umfasst daher der Elektrolyt (weiterhin) mindestens einen Katalysator zur Katalyse einer, beispielsweise elektrophilen und/oder radikalischen, Additionsreaktion, insbesondere an die mindestens eine Verbindung. So kann vorteilhafterweise die Leistung und/oder Lebensdauer und/oder Sicherheit der Zelle weiter gesteigert werden.

Zum Beispiel kann der mindestens eine Katalysator mindestens ein Metall, beispielsweise in metallischer Form, gegebenenfalls in Form einer Legierung, und/oder mindestens ein Salz und/oder mindestens eine Lewis-Säure und/oder mindestens eine ionische Flüssigkeit und/oder mindestens einen Metall-Komplex umfassen oder sein.

Im Rahmen einer weiteren Ausführungsform umfasst oder ist der mindestens eine Katalysator mindestens ein Metall, insbesondere mindestens ein Übergangsmetall, also mindestens ein Metall der Übergangsgruppen des Periodensystems, zum Beispiel Platin und/oder Palladium und/oder Eisen und/oder Kupfer und/oder Cobalt und/oder Nickel, insbesondere in metallischer Form, gegebenenfalls in Form einer Legierung, und/oder mindestens ein einwertiges Salz, insbesondere mindestens ein Natrium-Salz und/oder mindestens ein Kalium-Salz und/oder mindestens ein, beispielsweise organisches, Ammonium-Salz, zum Beispiel in Form eines Chlorids und/oder Hydroxids, wie Natrium-Chlorid (NaCl) und/oder Natrium-Hydroxid (NaOH) und/oder Kalium-Chlorid (KCl) und/oder Tetramethylammonuim-Chlorid (NMe₄Cl), und/oder mindestens eine Lewis-Säure, zum Beispiel mindestens ein Bortrihalogenid, und/oder mindestens eine, insbesondere Brønsted saure, ionische Flüssigkeit, beispielsweise mindestens ein Brønsted saures Imidazolium-Tosylat, wie p-Toluolsulfonat-1-Methyl-3-H-imidazolium, und/oder mindestens einen Metall-Komplex, beispielsweise Übergangsmetall-Komplex, zum Beispiel mindestens einen Platin-, Palladium-, Eisen-, Kupfer-, Cobalt- und/oder Nickel-Komplex. Diese Katalysatoren können zur Katalyse einer Additionsreaktion, insbesondere an die mindestens eine Verbindung, vorteilhaft eingesetzt werden.

Zum Beispiel kann der Elektrolyt mindestens eine Verbindung mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Kohlenstoff-Kohlenstoff-Doppelbindung, beispielsweise mit mindestens einer, insbesondere cyclische oder acyclische, Alken-Gruppe, und/oder mit mindestens einer Kohlenstoff-Kohlenstoff-Dreifachbindung, beispielsweise mit mindestens einer Alkin-Gruppe, und/oder mit mindestens einer Kohlenstoff-Stickstoff-Dreifachbindung, zum Beispiel mit mindestens einer Nitril-Gruppe und/oder mit mindestens einer Isonitril-Gruppe, umfassen. Diese chemischen Gruppen können besonders geeignet sein.

Beispielsweise kann der Elektrolyt mindestens eine Verbindung mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Kohlenstoff-Kohlenstoff-Doppelbindung, beispielsweise mit mindestens einer, insbesondere cyclische oder acyclische, Alken-Gruppe, und/oder mit mindestens einer Kohlenstoff-Kohlenstoff-Dreifachbindung, beispielsweise mit mindestens einer Alkin-Gruppe, umfassen. Diese chemischen Gruppen können besonders geeignet sein.

Oxiran-Gruppen und gegebenenfalls auch Oxetan-Gruppen können vorteilhafterweise Schadstoffe, wie Kohlenstoffmonoxid und/oder Kohlenstoffdioxid und/oder gegebenenfalls auch Wasser, binden und zudem, insbesondere sowohl als solche sowie gegebenenfalls auch deren Additionsprodukt, ionenleitfähig, beispielsweise lithiumionenleitfähig, sein und somit zur lonenleitfähigkeit, beispielsweise Lithiumionenleitfähigkeit, des Elektrolyten beitragen.

Cyclopropan-Gruppen und/oder Cyclobutan-Gruppen können gegebenenfalls ebenfalls vorteilhafterweise Schadstoffe, wie Fluorwasserstoff und/oder Wasserstoff, binden, wobei in der Regel diese Gruppen, insbesondere sowohl als solche als auch deren Additionsprodukt, die Elektrolytfunktionalität kaum oder nicht beeinträchtigen und sich deren Additionsprodukte mit Fluorwasserstoff gegebenenfalls sogar vorteilhaft auf die lonenleitfähigkeit, beispielsweise Lithiumionenleitfähigkeit, des Elektrolyten und/oder die Zellfunktion auswirken können.

Alken-Gruppen, beispielsweise Ethen-Gruppen, wie Ethenyl-Gruppen, zum Beispiel Vinyl-Gruppen, und/oder Ethenylen-Gruppen, zum Beispiel Vinylen-Gruppen, und/oder Cyclopropen-Gruppen und/oder Cyclobuten-Gruppen, und/oder Alkin-Gruppen, beispielsweise Ethin-Gruppen, wie Ethinyl-Gruppen und/oder Ethinylen-Gruppen, können vorteilhafterweise ebenfalls Schadstoffe, wie Fluorwasserstoff und/oder Wasserstoff, binden, wobei in der Regel diese Gruppen, insbesondere sowohl als solche als auch deren Additionsprodukt, die Elektrolytfunktionalität kaum oder nicht beeinträchtigen und sich deren Additionsprodukte mit Fluorwasserstoff gegebenenfalls sogar vorteilhaft auf die lonenleitfähigkeit, beispielsweise Lithiumionenleitfähigkeit, des Elektrolyten und/oder die Zellfunktion auswirken können. Dabei können Alkin-Gruppen und/oder Cyclopropen-Gruppen und/oder Cyclobuten-Gruppen vorteilhafterweise potentiell eine vergleichsweise hohe Zahl von Schadstoffmolekülen binden.

Zum Beispiel kann der Elektrolyt mindestens eine Verbindung mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Kohlenstoff-Kohlenstoff-Doppelbindung, beispielsweise mit mindestens einer, insbesondere cyclische oder acyclische, Alken-Gruppe, zum Beispiel mit mindestens einer Vinyl-Gruppe und/oder mit mindestens einer Allyl-Gruppe und/oder mit mindestens einer Alkenylencarbonat-Gruppe, zum Beispiel mit mindestens einer Vinylencarbonat-Gruppe, und/oder mit mindestens einer Alkenylenlacton-Gruppe, zum Beispiel mit mindestens einer Vinylenlacton-Gruppe, und/oder mit mindestens einer Alkenylcarbonat-Gruppe, zum Beispiel mit mindestens einer Vinylcarbonat-Gruppe, und/oder mit mindestens einer Alkenyllacton-Gruppe, zum Beispiel mit mindestens einer Vinyllacton-Gruppe, und/oder mit mindestens einer Kohlenstoff-Stickstoff-Dreifachbindung, zum Beispiel mit mindestens einer Nitril-Gruppe und/oder mit mindestens einer Isonitril-Gruppe, umfassen. Diese chemischen Gruppen können besonders vorteilhaft sein.

Oxiran-Gruppen und/oder Oxetan-Gruppen und/oder Alkenylencarbonat- und/oder -lacton-Gruppen, wie Vinylencarbonat-Gruppen und/oder Vinylenlacton-Gruppen, und/oder Alkenylcarbonat- und/oder -lacton-Gruppen, wie Vinylcarbonat-Gruppen und/oder Vinyllacton-Gruppen, und/oder Nitril-Gruppen und/oder Isonitril-Gruppen, können vorteilhafterweise ebenso sowohl als solche sowie gegebenenfalls auch deren Additionsprodukt, ionenleitfähig, beispielsweise lithiumionenleitfähig, sein und somit zur lonenleitfähigkeit, beispielsweise Lithiumionenleitfähigkeit, des Elektrolyten beitragen.

Beispielsweise kann der Elektrolyt mindestens eine Verbindung mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, insbesondere mit mindestens einer Oxiran-Gruppe, umfassen. Dies kann besonders vorteilhaft sein.

Im Rahmen einer weiteren, alternativen oder zusätzlichen Ausführungsform umfasst der Elektrolyt mindestens ein Polymer mit mindestens einer kovalent (daran) gebundenen Gruppe. Dabei umfasst die mindestens eine kovalent gebundene Gruppe mindestens einen Dreiring und/oder Vierring, insbesondere Dreiring, beispielsweise mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe, und/oder mindestens eine Doppelbindung, insbesondere mindestens eine Kohlenstoff-Kohlenstoff-Doppelbindung, beispielsweise mindestens eine, insbesondere cyclische oder acyclische, Alken-Gruppe, und/oder mindestens eine Kohlenstoff-Sauerstoff-Doppelbindung, beispielsweise mindestens eine Carbonyl-Gruppe, und/oder mindestens eine Dreifachbindung, insbesondere mindestens eine Kohlenstoff-Kohlenstoff-Dreifachbindung, beispielsweise mindestens eine Alkin-Gruppe, und/oder mindestens eine Kohlenstoff-Stickstoff-Dreifachbindung, beispielsweise mindestens eine Nitril-Gruppe und/oder mindestens eine Isonitril-Gruppe.

Dabei kann die mindestens eine kovalent gebundene Gruppe, insbesondere direkt oder indirekt, beispielsweise über einen Spacer, kovalent an das mindestens eine Polymer des Elektrolyten gebunden sein. Beispielsweise kann die mindestens eine kovalent gebundene Gruppe an eine Seitenkette und/oder Hauptkette des mindestens einen Polymers des Elektrolyten, insbesondere direkt oder indirekt, beispielsweise über einen Spacer, kovalent angebunden und/oder in eine Seitenkette und/oder Hauptkette des mindestens einen Polymers des Elektrolyten kovalent eingebunden sein.

Durch die kovalente Anbindung der mindestens einen Gruppe an das mindestens eine Polymer kann eine Migration, insbesondere eine Abwanderung, der mindestens einen Gruppe aus dem gewünschten Einsatzbereich, beispielsweise einer mit dem mindestens einen Polymer ausgestatteten Zellkomponente, zum Beispiel einer zwischen einer negativen Elektrode und einer positiven Elektrode angeordneten Funktionsschicht und/oder Separatorschicht, beispielsweise in einen anderen Bereich, zum Beispiel in eine andere Zellkomponente, beispielsweise in die positive und/oder negative Elektrode, vermieden und auf diese Weise, gegebenenfalls unerwünschte, Reaktionen der mindestens einen Gruppe mit Bestandteilen des anderen Bereichs beziehungsweise der anderen Zellekomponente, beispielsweise der positiven und/oder negativen Elektrode, vermieden werden. So kann vorteilhafterweise die Leistung und/oder Lebensdauer und/oder Sicherheit der Zelle ebenfalls weiter gesteigert werden.

Darüber hinaus kann das mindestens eine Polymer mit der mindestens einen kovalent gebundenen Gruppe zusätzlich zu der Schadstoff bindenden und damit zellleistungs-, -lebensdauer- und/oder -sicherheitsverbessernden Funktion durch die mindestens eine kovalent gebundene Gruppe auch eine Binderfunktion erfüllen, was es ermöglicht den Anteil an anderen Bindern zu reduzieren, insbesondere zu minimieren, oder sogar auf den Zusatz von anderen Bindern zu verzichten und auf diese Weise die spezifische Energie der Zelle zu erhöhen.

Im Rahmen einer Ausgestaltung dieser Ausführungsform umfasst die mindestens eine kovalent gebundene Gruppe mindestens einen Dreiring und/oder Vierring, insbesondere Dreiring, beispielsweise mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe, und/oder mindestens eine Kohlenstoff-Kohlenstoff-Doppelbindung, beispielsweise mindestens eine, insbesondere cyclische oder acyclische, Alken-Gruppe, und/oder mindestens eine Kohlenstoff-Kohlenstoff-Dreifachbindung, beispielsweise mindestens eine Alkin-Gruppe, und/oder mindestens eine Kohlenstoff-Stickstoff-Dreifachbindung, beispielsweise mindestens eine Nitril-Gruppe und/oder mindestens eine Isonitril-Gruppe. Diese chemischen Gruppen können besonders geeignet sein.

Im Rahmen einer speziellen Ausgestaltung dieser Ausführungsform umfasst die mindestens eine kovalent gebundene Gruppe mindestens einen Dreiring und/oder Vierring, insbesondere Dreiring, beispielsweise mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe, und/oder mindestens eine Kohlenstoff-Kohlenstoff-Doppelbindung, beispielsweise mindestens eine, insbesondere cyclische oder acyclische, Alken-Gruppe, zum Beispiel mindestens eine Vinyl-Gruppe und/oder mindestens eine Allyl-Gruppe und/oder mindestens eine Alkenylencarbonat-Gruppe, zum Beispiel mindestens eine Vinylencarbonat-Gruppe, und/oder mindestens eine Alkenylenlacton-Gruppe, zum Beispiel mindestens eine Vinylenlacton-Gruppe, und/oder mindestens eine Alkenylcarbonat-Gruppe, zum Beispiel mindestens eine Vinylcarbonat-Gruppe, und/oder mindestens eine Alkenyllacton-Gruppe, zum Beispiel mindestens eine Vinyllacton-Gruppe, und/oder mindestens eine Kohlenstoff-Stickstoff-Dreifachbindung, beispielsweise mindestens eine Nitril-Gruppe und/oder mindestens eine Isonitril-Gruppe. Diese chemischen Gruppen können vorteilhaft sein.

Im Rahmen einer weiteren speziellen Ausgestaltung dieser Ausführungsform umfasst die mindestens eine kovalent gebundene Gruppe mindestens einen Dreiring und/oder Vierring, insbesondere Dreiring, beispielsweise mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe, insbesondere mindestens eine Oxiran-Gruppe. Dies kann besonders vorteilhaft sein.

Im Rahmen einer weiteren Ausführungsform umfasst oder ist das mindestens eine Polymer mit der mindestens einen kovalent (daran) gebundenen Gruppe ein Polyalkylenoxid, beispielsweise ein Polyethylenoxid und/oder Polypropylenoxid, und/oder ein Polyacrylat und/oder ein Polymethacrylat, zum Beispiel ein Poly(methyl)methacrylat, und/oder ein Polyallylether und/oder ein Polymer auf Basis von mindestens einer polymerisierten, mindestens eine, insbesondere organische, Carbonatgruppe umfassenden Wiederholungseinheit, beispielsweise ein Polycarbonat, zum Beispiel ein Polypropylencarbonat, und/oder ein Polymer, welches mindestens eine Polymerrücken bildenden Struktureinheit mit mindestens einer, mindestens eine Carbonatgruppe enthaltenden Seitengruppe umfasst, und/oder ein Polysiloxan und/oder ein Polyphosphazen und/oder ein Polyacrylnitril und/oder ein Polyolefin, beispielsweise ein Polypropylen und/oder ein Polyethylen.

Im Rahmen einer weiteren, alternativen oder zusätzlichen Ausführungsform umfasst der Elektrolyt mindestens ein Additiv mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Doppelbindung, insbesondere mit mindestens einer Kohlenstoff-Kohlenstoff-Doppelbindung, beispielsweise mit mindestens einer, insbesondere cyclische oder acyclische, Alken-Gruppe, und/oder mit mindestens einer Kohlenstoff-Sauerstoff-Doppelbindung, beispielsweise mit mindestens einer Carbonyl-Gruppe, und/oder mit mindestens einer Dreifachbindung, insbesondere mit mindestens einer Kohlenstoff-Kohlenstoff-Dreifachbindung, beispielsweise mit mindestens einer Alkin-Gruppe, und/oder mit mindestens einer Kohlenstoff-Stickstoff-Dreifachbindung, beispielsweise mit mindestens einer Nitril-Gruppe und/oder mit mindestens einer Isonitril-Gruppe.

Im Rahmen einer Ausgestaltung dieser Ausführungsform ist das mindestens eine Additiv mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Kohlenstoff-Kohlenstoff-Doppelbindung, beispielsweise mit mindestens einer, insbesondere cyclische oder acyclische, Alken-Gruppe, und/oder mit mindestens einer Kohlenstoff-Kohlenstoff-Dreifachbindung, beispielsweise mit mindestens einer Alkin-Gruppe, und/oder mit mindestens einer Kohlenstoff-Stickstoff-Dreifachbindung, beispielsweise mit mindestens einer Nitril-Gruppe und/oder mit mindestens einer Isonitril-Gruppe, ausgestattet. Diese chemischen Gruppen können besonders geeignet sein.

Im Rahmen einer speziellen Ausgestaltung dieser Ausführungsform ist das mindestens eine Additiv mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, und/oder mit mindestens einer Kohlenstoff-Kohlenstoff-Doppelbindung, beispielsweise mit mindestens einer, insbesondere cyclische oder acyclische, Alken-Gruppe, zum Beispiel mit mindestens einer Vinyl-Gruppe und/oder mit mindestens einer Allyl-Gruppe und/oder mit mindestens einer Alkenylencarbonat-Gruppe, zum Beispiel mit mindestens einer Vinylencarbonat-Gruppe, und/oder mit mindestens einer Alkenylenlacton-Gruppe, zum Beispiel mit mindestens einer Vinylenlacton-Gruppe, und/oder mit mindestens einer Alkenylcarbonat-Gruppe, zum Beispiel mit mindestens einer Vinylcarbonat-Gruppe, und/oder mit mindestens einer Alkenyllacton-Gruppe, zum Beispiel mit mindestens einer Vinyllacton-Gruppe, und/oder mit mindestens einer Kohlenstoff-Stickstoff-Dreifachbindung, beispielsweise mit mindestens einer Nitril-Gruppe und/oder mit mindestens einer Isonitril-Gruppe, ausgestattet. Diese chemischen Gruppen können vorteilhaft sein.

Im Rahmen einer weiteren speziellen Ausgestaltung dieser Ausführungsform ist das mindestens eine Additiv mit mindestens einem Dreiring und/oder Vierring, insbesondere Dreiring, beispielsweise mit mindestens einer Oxiran-Gruppe und/oder mit mindestens einer Oxetan-Gruppe und/oder mit mindestens einer Cyclopropan-Gruppe und/oder mit mindestens einer Cyclobutan-Gruppe und/oder mit mindestens einer Cyclopropen-Gruppe und/oder mit mindestens einer Cyclobuten-Gruppe, insbesondere mit mindestens einer Oxiran-Gruppe, ausgestattet. Dies kann besonders vorteilhaft sein.

Der Elektrolyt kann beispielsweise mindestens einen Festelektrolyten, insbesondere mindestens einen Polymerelektrolyten und/oder mindestens einen anorganischen, insbesondere keramischen und/oder glasartigen, lonenleiter, beispielsweise Lithium-Ionenleiter, und/oder mindestens einen Flüssigelektrolyten umfassen oder sein.

In einer speziellen Ausführungsform umfasst oder ist der Elektrolyt ein Polymerelektrolyt. So kann vorteilhafterweise die Leistung und/oder Lebensdauer und/oder Sicherheit einer damit ausgestatteten Zelle gesteigert werden.

Insbesondere kann das mindestens eine Polymer mit der mindestens einen kovalent gebundenen Gruppe ionenleitfähig und/oder ionenleitend, beispielsweise lithiumionenleitfähig und/oder lithiumionenleitend, sein. So kann das mindestens eine Polymer mit der mindestens einen kovalent gebundenen Gruppe einen Festelektrolyten, insbesondere einen Polymerelektrolyten, ausbilden.

Zum Beispiel kann das mindestens eine Polymer ein Polyalkylenoxid, beispielsweise ein Polyethylenoxid und/oder Polypropylenoxid, und/oder ein Polyacrylat und/oder ein Polymethacrylat, zum Beispiel ein Poly(methyl)methacrylat, und/oder ein Polyallylether und/oder ein Polymer auf Basis von mindestens einer polymerisierten, mindestens eine, insbesondere organische, Carbonatgruppe umfassenden Wiederholungseinheit, beispielsweise ein Polycarbonat, zum Beispiel ein Polypropylencarbonat, und/oder ein Polymer, welches mindestens eine Polymerrücken bildenden Struktureinheit mit mindestens einer, mindestens eine Carbonatgruppe enthaltenden Seitengruppe umfasst, und/oder ein Polysiloxan und/oder ein Polyphosphazen und/oder ein Polyacrylnitril umfassen oder sein.

In einer speziellen Ausgestaltung umfasst oder ist das mindestens eine Polymer mit der mindestens einen kovalent gebundenen Gruppe ein Polyalkylenoxid, insbesondere ein Polyethylenoxid und/oder Polypropylenoxid, und/oder ein Polyacrylat und/oder ein Polymethacrylat, und/oder ein Polyallylether und/oder ein Polymer auf Basis von mindestens einer polymerisierten, mindestens eine Carbonatgruppe umfassenden Wiederholungseinheit, insbesondere ein Polycarbonat, und/oder ein Polymer, welches mindestens eine Polymerrücken bildende Struktureinheiten mit mindestens einer, mindestens eine Carbonatgruppe enthaltenden Seitengruppe umfasst, und/oder ein Polysiloxan und/oder ein Polyphosphazen. Zum Beispiel kann das mindestens eine Polymer mit der mindestens einen kovalent gebundenen Gruppe ein Polyalkylenoxid, insbesondere ein Polyethylenoxid und/oder Polypropylenoxid, und/oder ein Polyacrylat und/oder ein Polymethacrylat und/oder einen Polyallylether und/oder ein Polycarbonat und/oder ein Polysiloxan und/oder ein Polyphosphazen umfassen oder sein. Beispielsweise kann das mindestens eine Polymer mit der mindestens einen kovalent gebundenen Gruppe ein Polyalkylenoxid, insbesondere ein Polyethylenoxid und/oder Polypropylenoxid, und/oder ein Polyacrylat und/oder ein Polymethacrylat und/oder einen Polyallylether umfassen oder sein.

Insofern das mindestens Polymer mit der mindestens einen kovalent gebundenen Gruppe ionenleitend, beispielsweise lithiumionenleitend, ist, kann dieses die zu leitenden Ionen, beispielsweise Lithium-Ionen, umfassen und insbesondere als solches bereits einen Festelektrolyten, insbesondere Polymerelektrolyten, ausbilden. Gegebenenfalls kann sich jedoch hierbei eine Zugabe von mindestens einem Leitsalz, beispielsweise Lithium-Leitsalz, insbesondere auf die lonenleitung, beispielsweise Lithiumionenleitung, vorteilhaft auswirken.

Insofern das mindestens Polymer mit der mindestens einen kovalent gebundenen Gruppe ionenleitfähig, beispielsweise lithiumionenleitfähig, ist, kann dieses beispielsweise, insbesondere in Gegenwart der zu leitenden Ionen, beispielsweise Lithium-Ionen, zum Beispiel in Form eines Lithium-Leitsalzes, ionenleitend, beispielsweise lithiumionenleitend, werden und einen Festelektrolyten, insbesondere Polymerelektrolyten, ausbilden.

Im Rahmen einer weiteren Ausführungsform umfasst der der Elektrolyt, insbesondere Polymerelektrolyt, insbesondere daher, (weiterhin) mindestens ein Leitsalz, beispielsweise Lithium-Leitsalz. Zum Beispiel kann der Elektrolyt, insbesondere Polymerelektrolyt, mindestens ein Lithium-Leitsalz, wie Lithium-Perchlorat (LiClO₄) und/oder Lithium-Tetrafluoroborat (LiBF₄) und/oder Lithium-Trifluormethansulfonat (LiTf) und/oder Lithium-Bisoxalatoborate (LiBOB) und/oder Lithium-Hexafluorophosphat (LiPF₆) und/oder Lithium-Bromid (LiBr) und/oder Lithium-Iodid (LiI) und/oder Lithium-Chlorid (LiCl) und/oder Lithium-Bis(trifluormethansulfonyl)imid (LiTFSI) und/oder Lithium-Difluorooxalatoborat (LiDFOB) und/oder Lithium-Tetracyanoborat (LiB(CN)₄) und/oder Lithium-Tris(pentafluorethan)trifluorophosphat (LIFAP) und/oder Lithium-4,5-Dicyano-2-(trifluormethyl)imidazol (LiTDI) und/oder Lithium-Bis-(pentafluorethansulfonyl)imide (LiBETI) und/oder Lithium-[3,5-bis(trifuormethyl)pyrazolid] (PFAP) und/oder Lithium-Bis(pentafluorphenylsulfonyl)imide (LiPDICF₆), umfassen .

Im Rahmen einer weiteren Ausführungsform ist das mindestens eine Polymer mit der mindestens einen kovalent gebundenen Gruppe ionenleitfähig und/oder ionenleitend, beispielsweise lithiumionenleitfähig und/oder lithiumionenleitend, und/oder bildet einen Festelektrolyten, insbesondere einen Polymerelektrolyten, aus. So kann das mindestens eine Polymer mit der mindestens einen kovalent gebundenen Gruppe direkt mehrerer Funktionen erfüllen, nämlich eine Schadstoff bindende und damit zellleistungs-, -lebensdauer- und/oder - sicherheitsverbessernden Funktion sowie eine Binderfunktion und eine lonenleiterfunktion, was es ermöglicht den Anteil an anderen Bindern und/oder anderen lonenleitern zu reduzieren, insbesondere zu minimieren, oder sogar auf den Zusatz von anderen Bindern und/oder anderen lonenleitern zu verzichten und auf diese Weise die spezifische Energie der Zelle zu erhöhen.

Dennoch ist es möglich, wie im Rahmen von später erläuterten Ausführungsformen beschrieben, auch insofern das mindestens eine Polymer mit der mindestens einen kovalent angebundenen Gruppe ionenleitfähig und/oder ionenleitend, beispielsweise lithiumionenleitfähig und/oder lithiumionenleitend, ist, dieses in Kombination mit mindestens einem, insbesondere weiteren beziehungsweise anderen, ionenleitfähigen und/oder ionenleitenden, beispielsweise lithiumionenleitfähigen und/oder lithiumionenleitenden, Material, beispielsweise mit mindestens einem, insbesondere weiteren beziehungsweise, anderen Festelektrolyten und/oder Flüssigelektrolyten, und/oder in Kombination mit mindestens einem nicht-ionenleitfähigen und/oder nicht-ionenleitenden, beispielsweise nicht-lithiumionenleitfähigen und/oder nicht-lithiumionenleitenden, Material, beispielsweise mit mindestens einem nicht-ionenleitfähigen und/oder nicht-ionenleitenden, beispielsweise nicht-lithiumionenleitfähigen und/oder nicht-lithiumionenleitenden, Polymer, zum Beispiel in Form einer porösen (Separator-)Schicht, beispielsweise einem, insbesondere herkömmlichen, Separator auf der Basis einer elektrolytgetränkten, porösen Schicht aus mindestens einem nicht-ionenleitfähigen und/oder nicht-ionenleitenden, beispielsweise nicht-lithiumionenleitfähigen und/oder nicht-lithiumionenleitenden, Polymer, wie Polyethylen und/oder Polypropylen, einzusetzen.

Im Rahmen einer weiteren, alternativen oder zusätzlichen Ausführungsform ist das mindestens eine Polymer mit der mindestens einen kovalent gebundenen Gruppe ein Co-Polymer, beispielsweise ein Block-Co-Polymer. Insbesondere kann das mindestens eine Polymer mit der mindestens einen kovalent gebundenen Gruppe ein Co-Polymer, beispielsweise ein Block-Co-Polymer, aus mindestens einem Polymer mit mindestens einer kovalent gebundenen Gruppe, insbesondere welche mindestens einen Dreiring und/oder Vierring und/oder mindestens eine Doppelbindung und/oder mindestens eine Dreifachbindung umfasst und insbesondere wie vorstehend ausführlich erläutert ausgestaltet sein kann, und/oder mindestens einer später erläuterten erfindungsgemäßen Wiederholungseinheit und aus mindestens einem weiteren Polymer und/oder mindestens einer weiteren Wiederholungseinheit, sein.

Im Rahmen einer weiteren, alternativen oder zusätzlichen Ausführungsform umfasst der Elektrolyt eine Polymermischung beziehungsweise ist das mindestens eine Polymer mit der mindestens einen kovalent gebundenen Gruppe Bestandteil einer Polymermischung, welche mindestens ein Polymer mit mindestens einer kovalent gebundenen Gruppe, insbesondere welche mindestens einen Dreiring und/oder Vierring und/oder mindestens eine Doppelbindung und/oder mindestens eine Dreifachbindung umfasst und insbesondere wie vorstehend ausführlich erläutert ausgestaltet sein kann, zum Beispiel auf Basis mindestens einer erfindungsgemäßen Wiederholungseinheit, und mindestens ein weiteres Polymer umfasst.

Im Rahmen dieser Ausführungsformen kann beispielsweise das mindestens eine weitere Polymer mindestens ein, gegebenenfalls weiteres beziehungsweise anderes, insbesondere ionenleitfähiges und/oder ionenleitendes, beispielsweise lithiumionenleitfähiges und/oder lithiumionenleitendes, Polymer, zum Beispiel ein Polyalkylenoxid, insbesondere ein Polyethylenoxid und/oder ein Polypropylenoxid, und/oder ein Polyacrylat und/oder ein Polymethacrylat, beispielsweise Polymethylmethacrylat, und/oder ein Polyallylether und/oder ein Polycarbonat, beispielsweise Polypropylencarbonat, und/oder ein Polysiloxan und/oder ein Polyphosphazen, insbesondere ein Polyethylenoxid und/oder ein Polypropylenoxid und/oder ein Polyacrylat und/oder ein Polymethacrylat und/oder ein Polyallylether, und/oder mindestens ein, gegebenenfalls weiteres beziehungsweise anderes, insbesondere nicht-ionenleitfähiges und/oder nichtionenleitendes, beispielsweise nicht-lithiumionenleitfähiges und/oder nichtlithiumionenleitendes, gegebenenfalls mechanisch stabilisierenden, Polymer, zum Beispiel Polystyrol, und/oder die mindestens eine weitere Wiederholungseinheit mindestens eine, gegebenenfalls weitere, ionenleitfähige und/oder ionenleitende, beispielsweise lithiumionenleitfähige und/oder lithiumionenleitende, Wiederholungseinheit, zum Beispiel eine Alkylenoxid-Einheit, beispielsweise eine Ethylenoxid-Einheit und/oder Propylenoxid-Einheit, und/oder eine Acrylat-Einheit und/oder eine Methacrylat-Einheit, zum Beispiel eine Methylmethacrylat-Einheit, und/oder eine Carbonat-Einheit, zum Beispiel eine Propylencarbonat-Einheit, und/oder eine Siloxan-Einheit und/oder eine Phosphazen-Einheit, insbesondere eine Ethylenoxid-Einheit und/oder Propylenoxid-Einheit und/oder eine Acrylat-Einheit und/oder Methacrylat-Einheit, und/oder mindestens eine, gegebenenfalls weitere, nicht-ionenleitfähige und/oder nicht-ionenleitende, beispielsweise nicht-lithiumionenleitfähige und/oder nicht-lithiumionenleitende, gegebenenfalls mechanisch stabilisierenden, Wiederholungseinheit, zum Beispiel eine Styrol-Einheit, umfassen oder sein.

Zum Beispiel kann im Rahmen dieser Ausführungsformen das mindestens eine weitere Polymer ein Poly(2-oxo-[1,3]-dioxolan-4-yl)alkylacrylat, zum Beispiel Poly(2-oxo-[1,3]-dioxolan-4-yl)methylacrylat (PDOA) und/oder Poly(2-oxo-[1,3]-dioxolan-4-yl)butylacrylat (PDOBA), und/oder mindestens ein Poly(2-oxo-[1,3]-dioxolan-4-yl)alkylmethacrylat, zum Beispiel Poly(2-oxo-[1,3]-dioxolan-4-yl)methylmethacrylat (PDOMA) und/oder Poly(2-oxo-[1,3]-dioxolan-4-yl)alkylmethacrylat (PDOBMA), und/oder die mindestens eine weitere Wiederholungseinheit eine (2-Oxo-[1,3]-dioxolan-4-yl)alkylacrylat-Einheit, zum Beispiel eine (2-Oxo-[1,3]-dioxolan-4-yl)methylacrylat-Einheit (DOA) und/oder eine (2-Oxo-[1,3]-dioxolan-4-yl)butylacrylat-Einheit (DOBA), und/oder mindestens ein (2-Oxo-[1,3]-dioxolan-4-yl)alkylmethacrylat-Einheit, zum Beispiel eine (2-Oxo-[1,3]-dioxolan-4-yl)methylmethacrylat-Einheit (DOMA) und/oder eine (2-Oxo-[1,3]-dioxolan-4-yl)alkylmethacrylat-Einheit (DOBMA), umfassen oder sein.

Im Rahmen einer weiteren, alternativen oder zusätzlichen Ausführungsform umfasst der Elektrolyt die mindestens eine Verbindung, insbesondere das mindestens eine Polymer mit der mindestens einen kovalent gebundenen Gruppe und/oder das mindestens eine Additiv, und mindestens einen, gegebenenfalls weiteren beziehungsweise anderen, Festelektrolyten, beispielsweise mindestens einen, gegebenenfalls weiteren beziehungsweise anderen, Polymerelektrolyten, zum Beispiel auf der Basis mindestens eines, gegebenenfalls weiteren beziehungsweise anderen, ionenleitfähigen und/oder ionenleitenden, beispielsweise lithiumionenleitfähigen und/oder lithiumionenleitenden, Polymers, zum Beispiel auf der Basis von Polyalkylenoxid, insbesondere Polyethylenoxid und/oder Polypropylenoxid, und/oder Polyacrylat und/oder Polymethacrylat und/oder Polyallylether, und den zu leitenden Ionen, beispielsweise Lithiumionen, gegebenenfalls in Form mindestens eines darin gelösten Leitsalzes, zum Beispiel Lithium-Leitsalzes, und/oder mindestens einen anorganischen, beispielsweise keramischen und/oder glasartigen, Ionenleitern, beispielsweise Lithium-Ionenleiter, und/oder mindestens einen Flüssigelektrolyten, beispielsweise auf Basis mindestens eines Elektrolytlösungsmittels und mindestens eines darin gelösten Leitsalzes, zum Beispiel Lithium-Leitsalzes.

Dabei kann die mindestens eine Verbindung, insbesondere das mindestens eine Polymer mit der mindestens einen kovalent gebundenen Gruppe und/oder das mindestens eine Additiv, sowohl ionenleitfähig und/oder ionenleitend, beispielsweise lithiumionenleitfähig und/oder lithiumionenleitend, als auch nicht-ionenleitfähig und/oder nicht-ionenleitend, beispielsweise nicht-lithiumionenleitfähig und/oder nicht-lithiumionenleitend, sein.

Insofern die mindestens eine Verbindung, beispielsweise das mindestens eine Polymer mit der mindestens einen kovalent gebundenen Gruppe und/oder das mindestens eine Additiv, nicht-ionenleitfähig und/oder nicht-ionenleitend, beispielsweise nicht-lithiumionenleitfähig und/oder nicht-lithiumionenleitend, ist, kann die lonenleitfähigkeit des Elektrolyten durch den mindestens einen, gegebenenfalls weiteren beziehungsweise anderen, Festelektrolyten und/oder den mindestens einen Flüssigelektrolyten bereitgestellt werden.

Insofern die mindestens eine Verbindung, beispielsweise das mindestens eine Polymer mit der mindestens einen kovalent gebundenen Gruppe und/oder das mindestens eine Additiv, ionenleitfähig und/oder ionenleitend, beispielsweise lithiumionenleitfähig und/oder nicht-lithiumionenleitend, ist, kann die lonenleitfähigkeit des Elektrolyten sowohl durch die mindestens eine Verbindung, insbesondere durch das mindestens eine Polymer mit der mindestens einen kovalent gebundenen Gruppe und/oder das mindestens eine Additiv, als auch durch den mindestens einen, gegebenenfalls weiteren beziehungsweise anderen, Festelektrolyten und/oder den mindestens einen Flüssigelektrolyten bereitgestellt werden.

Im Rahmen einer Ausgestaltung dieser Ausführungsform ist die mindestens eine Verbindung, insbesondere das mindestens eine Polymer mit der mindestens einen kovalent gebundenen Gruppe und/oder das mindestens eine Additiv, mit dem mindestens einen, gegebenenfalls weiteren beziehungsweise anderen, Festelektrolyten, insbesondere mit dem mindestens einen, gegebenenfalls weiteren beziehungsweise anderen, Polymerelektrolyten, und/oder mit dem mindestens einen anorganischen, beispielsweise keramischen und/oder glasartigen, Ionenleitern, gefüllt und/oder mit dem mindestens einen Flüssigelektrolyten gefüllt, beispielsweise getränkt, oder umgekehrt ist der mindestens eine, gegebenenfalls weitere beziehungsweise andere, Festelektrolyt, insbesondere der mindestens eine, gegebenenfalls zusätzlichen beziehungsweise anderen, Polymerelektrolyt, und/oder der mindestens eine anorganische, beispielsweise keramische und/oder glasartige, lonenleiter, und/oder der mindestens eine Flüssigelektrolyten mit der mindestens einen Verbindung, insbesondere mit dem mindestens einen Polymer mit der mindestens einen kovalent gebundenen Gruppe und/oder mit dem mindestens einen Additiv, gefüllt, beispielsweise getränkt. So kann die lonenleitfähigkeit, insbesondere Lithiumionenleitfähigkeit, des Elektrolyten verbessert und/oder bereitgestellt und/oder andere vorteilhafte Effekte erzielt werden.

Durch den mindestens einen, gegebenenfalls weiteren beziehungsweise anderen, Festelektrolyten, beispielsweise Polymerelektrolyten und/oder anorganischen lonenleiter, und/oder den mindestens einen Flüssigelektrolyten kann dabei vorteilhafterweise die lonenleitfähigkeit, insbesondere Lithiumionenleitfähigkeit, des Elektrolyten verbessert und/oder bereitgestellt werden.

Durch den mindestens einen anorganischen, beispielsweise keramischen und/oder glasartigen, Ionenleitern, beispielsweise Lithium-Ionenleiter kann dabei vorteilhafterweise zusätzlich die mechanische Stabilität des Elektrolyten und/oder (dadurch), insbesondere bei einer Verwendung des Elektrolyten als Elektroden trennende Funktionsschicht und/oder Separatorschicht, die Leistung und/oder Lebensdauer und/oder Sicherheit der Zelle weiter gesteigert werden.

Beispielsweise kann das mindestens eine Polymer mit der mindestens einen kovalent gebundenen Gruppe mindestens eine Wiederholungseinheit der allgemeinen chemischen Formel: 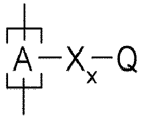 umfassen. A kann insbesondere für eine Polymerrücken bildende Einheit stehen. X kann insbesondere für einen, insbesondere kovalent an die Polymerrücken bildende Einheit A gebundenen, Spacer stehen, x kann insbesondere für die Anzahl, insbesondere das Vorhandensein beziehungsweise die Abwesenheit, des Spacers X stehen, x kann beispielsweise 1 oder 0 sein. Dabei kann im Fall x=1 ein Spacer X vorhanden und im Fall x=0 kein Spacer X vorhanden sein. Q kann insbesondere für die mindestens eine kovalent gebundene Gruppe, insbesondere welche mindestens einen Dreiring und/oder Vierring und/oder mindestens eine Doppelbindung und/oder mindestens eine Dreifachbindung umfasst, stehen. Dabei kann die mindestens eine kovalent gebundene Gruppe Q beispielsweise im Fall x=1 kovalent an den Spacer X (und über den Spacer X wiederum, insbesondere indirekt, kovalent an die Polymerrücken bildende Einheit A oder im Fall x= 0, insbesondere direkt, kovalent an die Polymerrücken bildende Einheit A angebunden sein.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Oxiran-Gruppe der allgemeinen chemischen Formel:

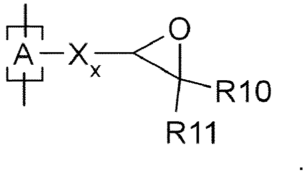

Oxiran-Gruppen können vorteilhafterweise Schadstoffe, Kohlenstoffmonoxid und/oder Kohlenstoffdioxid, binden und zudem, insbesondere sowohl als solche sowie gegebenenfalls auch deren Additionsprodukt, ionenleitfähig, beispielsweise lithiumionenleitfähig, sein und somit zur lonenleitfähigkeit, beispielsweise Lithiumionenleitfähigkeit, des Elektrolyten beitragen.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Oxetan-Gruppe der allgemeinen chemischen Formel:

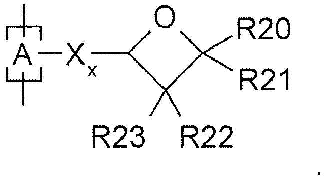

Gegebenenfalls können auch Oxetan-Gruppen vorteilhafterweise Schadstoffe, wie Kohlenstoffmonoxid und/oder Kohlenstoffdioxid, binden und zudem, insbesondere sowohl als solche sowie gegebenenfalls auch deren Additionsprodukt, ionenleitfähig, beispielsweise lithiumionenleitfähig, sein und somit zur lonenleitfähigkeit, beispielsweise Lithiumionenleitfähigkeit, des Elektrolyten beitragen.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Cyclopropan-Gruppe der allgemeinen chemischen Formel:

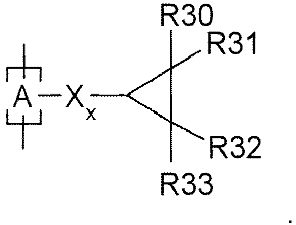

Gegebenenfalls können auch Cyclopropan-Gruppen Schadstoffe, wie Fluorwasserstoff und/oder Wasserstoff, binden, wobei in der Regel die Cyclopropan-Gruppen, insbesondere sowohl als solche als auch deren Additionsprodukt, die Elektrolytfunktionalität kaum oder nicht beeinträchtigen und sich deren Additionsprodukte mit Fluorwasserstoff gegebenenfalls sogar vorteilhaft auf die lonenleitfähigkeit, beispielsweise Lithiumionenleitfähigkeit, des Elektrolyten und/oder die Zellfunktion auswirken können.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Cyclobutan-Gruppe der allgemeinen chemischen Formel:

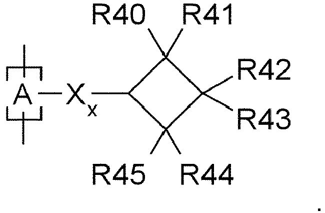

Gegebenenfalls können auch Cyclobutan-Gruppen Schadstoffe, wie Fluorwasserstoff und/oder Wasserstoff, binden, wobei in der Regel die Cyclobutan-Gruppen, insbesondere sowohl als solche als auch deren Additionsprodukt, die Elektrolytfunktionalität kaum oder nicht beeinträchtigen und sich deren Additionsprodukte mit Fluorwasserstoff gegebenenfalls sogar vorteilhaft auf die lonenleitfähigkeit, beispielsweise Lithiumionenleitfähigkeit, des Elektrolyten und/oder die Zellfunktion auswirken können.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Alken-Gruppe der allgemeinen chemischen Formel:

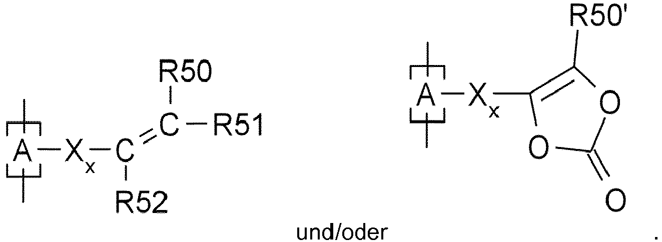

Alken-Gruppen, beispielsweise Ethen-Gruppen, wie Ethenyl-Gruppen, zum Beispiel Vinyl-Gruppen, und/oder Ethenylen-Gruppen, zum Beispiel Vinylen-Gruppen, können vorteilhafterweise Fluorwasserstoff und Wasserstoff binden, wobei in der Regel die Alken-Gruppen, insbesondere sowohl als solche als auch deren Additionsprodukt, die Elektrolytfunktionalität kaum oder nicht beeinträchtigen und sich deren Additionsprodukte mit Fluorwasserstoff gegebenenfalls sogar vorteilhaft auf die lonenleitfähigkeit, beispielsweise Lithiumionenleitfähigkeit, des Elektrolyten und/oder die Zellfunktion auswirken können. Alkenylencarbonat-Gruppen, wie Vinylencarbonat-Gruppen, können zudem vorteilhafterweise ebenso sowohl als solche sowie gegebenenfalls auch deren Additionsprodukt, ionenleitfähig, beispielsweise lithiumionenleitfähig, sein und somit zur lonenleitfähigkeit, beispielsweise Lithiumionenleitfähigkeit, des Elektrolyten beitragen.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Alkin-Gruppe der allgemeinen chemischen Formel:

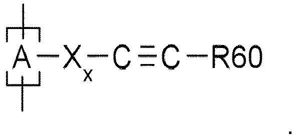

Alkin-Gruppen, beispielsweise Ethin-Gruppen, wie Ethinyl-Gruppen und/oder Ethinylen-Gruppen, können vorteilhafterweise Fluorwasserstoff und Wasserstoff binden, wobei in der Regel die Alkin-Gruppen, insbesondere sowohl als solche als auch deren Additionsprodukt, die Elektrolytfunktionalität kaum oder nicht beeinträchtigen und sich deren Additionsprodukte mit Fluorwasserstoff gegebenenfalls sogar vorteilhaft auf die lonenleitfähigkeit, beispielsweise Lithiumionenleitfähigkeit, des Elektrolyten und/oder die Zellfunktion auswirken können.

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Nitril-Gruppe der allgemeinen chemischen Formel:

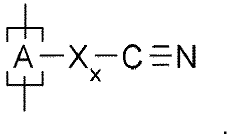

Im Rahmen einer weiteren, alternativen oder zusätzlichen Ausführungsform umfasst das mindestens eine Polymer mit der mindestens einen kovalent gebundenen Gruppe mindestens eine Wiederholungseinheit mit einer Isonitril-Gruppe der allgemeinen chemischen Formel:

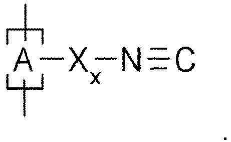

Nitril-Gruppen und/oder Isonitril-Gruppen können vorteilhafterweise Wasserstoff binden und sowohl als solche sowie gegebenenfalls auch deren Additionsprodukt, ionenleitfähig, beispielsweise lithiumionenleitfähig, sein und somit zur lonenleitfähigkeit, beispielsweise Lithiumionenleitfähigkeit, des Elektrolyten beitragen.

Im Rahmen dieser Ausführungsformen kann beispielsweise A kann für eine ionenleitfähige und/oder ionenleitende, beispielsweise lithiumionenleitfähige und/oder lithiumionenleitende, Polymerrücken bildende Einheit, zum Beispiel für eine Alkylenoxid-Einheit, beispielsweise für eine Ethylenoxid-Einheit und/oder für eine Propylenoxid-Einheit, und/oder für eine Acrylat-Einheit und/oder für eine Methacrylat-Einheit, zum Beispiel für eine Methylmethacrylat-Einheit, und/oder für eine Carbonat-Einheit, zum Beispiel für eine Propylencarbonat-Einheit, und/oder für eine Siloxan-Einheit und/oder für eine Phosphazen-Einheit und/oder für eine nicht-ionenleitfähige und/oder nicht-ionenleitende, beispielsweise nicht-lithiumionenleitfähige und/oder nicht-lithiumionenleitende, Polymerrücken bildende Einheit, zum Beispiel für eine Alkylen-Einheit, beispielsweise für eine Ethylen-Einheit oder für eine Propylen-Einheit oder für eine Styrol-Einheit, stehen.

X kann im Rahmen dieser Ausführungsformen beispielsweise für einen ionenleitfähigen und/oder ionenleitenden, beispielsweise lithiumionenleitfähigen und/oder lithiumionenleitenden, Spacer, zum Beispiel umfassend mindestens eine Alkylenoxid-Gruppe, beispielsweise mindestens eine Ethylenoxid-Gruppe und/oder mindestens eine Propylenoxid-Gruppe, zum Beispiel für eine Oligo- oder Poly-Alkylenoxid-Gruppe, beispielsweise für eine Oligo- oder Poly-Ethylenoxid-Gruppe, oder für einen nicht-ionenleitfähigen und/oder nicht-ionenleitenden, beispielsweise nicht-lithiumionenleitfähigen und/oder nicht-lithiumionenleitenden, Spacer, zum Beispiel für eine Alkylen-Gruppe, beispielsweise für eine Methylen-Gruppe oder für eine Ethylen-Gruppe oder für eine Propylen-Gruppe oder für eine Butylen-Gruppe, stehen.

R10 und R11 beziehungsweise R20, R21, R22 und R23 beziehungsweise R30, R31, R32 und R33 beziehungsweise R40, R41, R42, R43, R44 und R45 beziehungsweise R50, R51 und R52 beziehungsweise R50' beziehungsweise R60 können dabei beispielsweise jeweils unabhängig voneinander für Wasserstoff oder für eine Alkoxy-Gruppe, beispielsweise für eine Methoxy-Gruppe oder Ethoxy-Gruppe, oder für eine Alkyl-Gruppe, insbesondere für eine Methyl-Gruppe oder Ethyl-Gruppe, oder für mindestens eine, insbesondere endständige oder vernetzende, Alkylenoxid-Gruppe, beispielsweise umfassend mindestens eine Ethylenoxid-Gruppe und/oder Propylenoxid-Gruppe, zum Beispiel für eine Oligo- oder Poly-Alkylenoxid-Gruppe, beispielsweise für eine Oligo- oder Poly-Ethylenoxid-Gruppe, gegebenenfalls welche mit einer anderen Polymerrücken bildenden Einheit des mindestens einen Polymers oder eines anderen Polymeres des Elektrolyten vernetzt, oder für eine, insbesondere endständige oder vernetzende, Alkylen-Gruppe, gegebenenfalls vernetzend mit einer anderen Polymerrücken bildenden Einheit des mindestens einen Polymers oder eines anderen Polymeres des Elektrolyten, stehen.

Im Rahmen einer speziellen Ausgestaltung dieser Ausführungsformen steht A für eine ionenleitfähige und/oder ionenleitende, beispielsweise lithiumionenleitfähige und/oder lithiumionenleitende, Polymerrücken bildende Einheit, zum Beispiel für eine Alkylenoxid-Einheit, beispielsweise für eine Ethylenoxid-Einheit und/oder für eine Propylenoxid-Einheit, und/oder für eine Acrylat-Einheit und/oder für eine Methacrylat-Einheit, zum Beispiel für eine Methylmethacrylat-Einheit, und/oder für eine Carbonat-Einheit, zum Beispiel für eine Propylencarbonat-Einheit, und/oder für eine Siloxan-Einheit und/oder für eine Phosphazen-Einheit. So kann das mindestens eine Polymer mit der mindestens einen kovalent gebundenen Gruppe mit einer lonenleitfähigkeit ausgestattet beziehungsweise dessen lonenleitfähigkeit erhöht werden. Zum Beispiel kann A für eine Alkylenoxid-Einheit, beispielsweise für eine Ethylenoxid-Einheit und/oder für eine Propylenoxid-Einheit, und/oder für eine Acrylat-Einheit und/oder für eine Methacrylat-Einheit, zum Beispiel für eine Methylmethacrylat-Einheit, insbesondere für eine Alkylenoxid-Einheit, beispielsweise für eine Ethylenoxid-Einheit und/oder für eine Propylenoxid-Einheit, stehen.

Im Rahmen einer weiteren, alternativen oder zusätzlichen, speziellen Ausgestaltung dieser Ausführungsformen steht X für einen ionenleitfähigen und/oder ionenleitenden, beispielsweise lithiumionenleitfähigen und/oder lithiumionenleitenden, Spacer, zum Beispiel umfassend mindestens eine Alkylenoxid-Gruppe, beispielsweise mindestens eine Ethylenoxid-Gruppe und/oder mindestens eine Propylenoxid-Gruppe, zum Beispiel für eine Oligo- oder Poly-Alkylenoxid-Gruppe, beispielsweise für eine Oligo- oder Poly-Ethylenoxid-Gruppe. So kann das mindestens eine Polymer mit der mindestens einen kovalent gebundenen Gruppe mit einer lonenleitfähigkeit ausgestattet beziehungsweise dessen lonenleitfähigkeit erhöht werden.

Im Rahmen einer speziellen Ausgestaltung umfasst das mindestens eine Polymer mit der mindestens einen kovalent gebundenen Gruppe mindestens eine Wiederholungseinheit mit einer Oxiran-Gruppe der allgemeinen chemischen Formel: 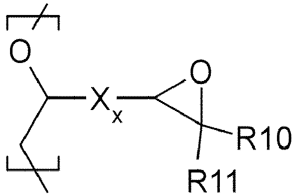 und/oder 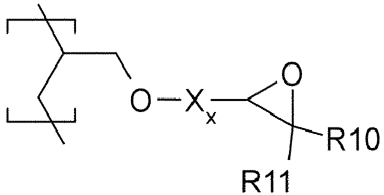 und/oder

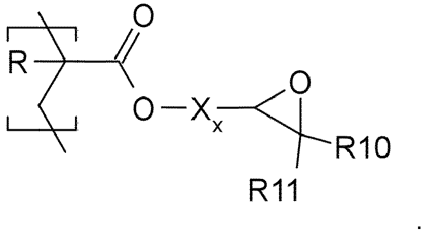

So kann das mindestens eine Polymer mit der mindestens einen kovalent gebundenen Gruppe vorteilhafterweise zusätzlich zu den bereits erläuterten Vorteilen einer Oxiran-Gruppe mit einer lonenleitfähigkeit durch die Polymerrücken bildende Einheit ausgestattet werden.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Oxetan-Gruppe der allgemeinen chemischen Formel: 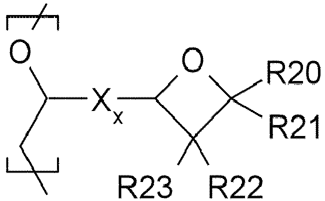 und/oder 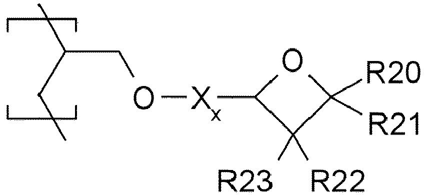 und/oder

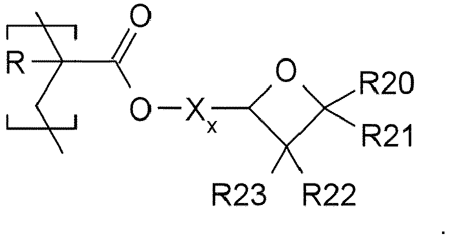

So kann das mindestens eine Polymer mit der mindestens einen kovalent gebundenen Gruppe vorteilhafterweise zusätzlich zu den bereits erläuterten Vorteilen einer Oxetan-Gruppe mit einer lonenleitfähigkeit durch die Polymerrücken bildende Einheit ausgestattet werden.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Cyclopropan-Gruppe der allgemeinen chemischen Formel: 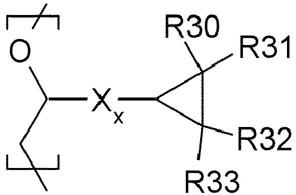 und/oder 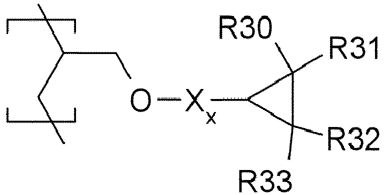 und/oder

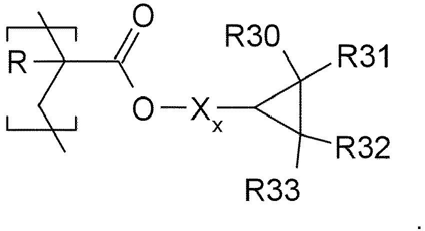

So kann das mindestens eine Polymer mit der mindestens einen kovalent gebundenen Gruppe vorteilhafterweise zusätzlich zu den bereits erläuterten Vorteilen einer Cyclopropan-Gruppe mit einer lonenleitfähigkeit durch die Polymerrücken bildende Einheit ausgestattet werden.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Cyclobutan-Gruppe der allgemeinen chemischen Formel: 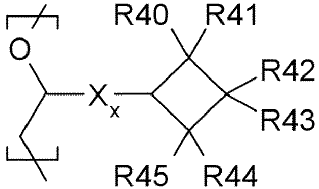 und/oder 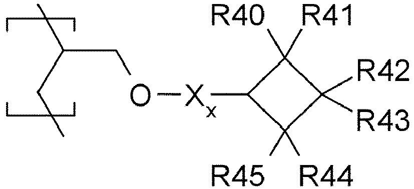 und/oder

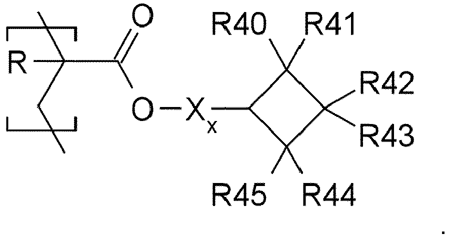

So kann das mindestens eine Polymer mit der mindestens einen kovalent gebundenen Gruppe vorteilhafterweise zusätzlich zu den bereits erläuterten Vorteilen einer Cyclobutan-Gruppe mit einer lonenleitfähigkeit durch die Polymerrücken bildende Einheit ausgestattet werden.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Alken-Gruppe der allgemeinen chemischen Formel: 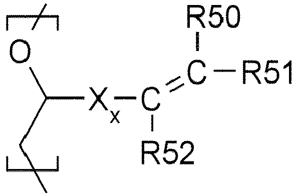 und/oder 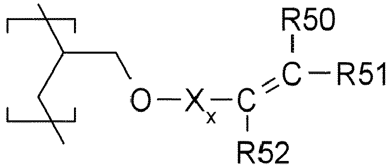 und/oder 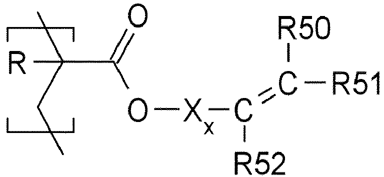 und/oder 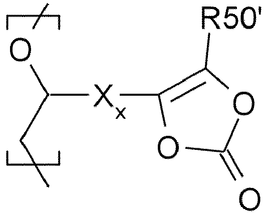 und/oder 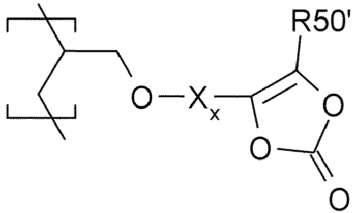 und/oder

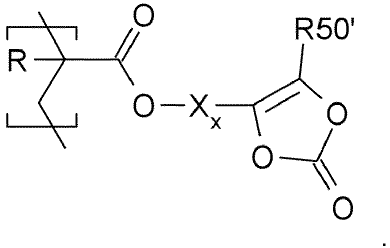

So kann das mindestens eine Polymer mit der mindestens einen kovalent gebundenen Gruppe vorteilhafterweise zusätzlich zu den bereits erläuterten Vorteilen einer Alken-Gruppe, beispielsweise einer Ethen-Gruppe, wie einer Ethenyl-Gruppe, zum Beispiel einer Vinyl-Gruppe, und/oder einer Ethenylen-Gruppe, zum Beispiel einer Vinylen-Gruppe, wie einer Vinylencarbonat-Gruppe, mit einer lonenleitfähigkeit durch die Polymerrücken bildende Einheit ausgestattet werden.

Zum Beispiel kann ein Polyethylenoxid mit einer kovalent gebundenen Ethen-Gruppe, wie einer Vinyl-Gruppe, beispielsweise in Gegenwart eines Katalysators, durch Addition an die Kohlenstoff-Kohlenstoff-Doppelbindung der Ethen-Gruppe, zum Beispiel gemäß der folgenden Reaktionsgleichung: 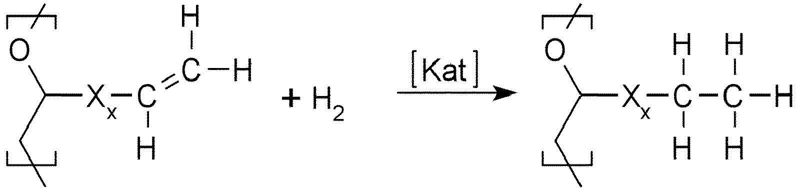 molekularen Wasserstoff, welcher beispielsweise als gasförmiges Zersetzungsprodukt, zum Beispiel in einer Batteriezelle, auftreten kann, unter Ausbildung einer gesättigten und damit insbesondere inerten Ethyl-Gruppe/Seitenkette addieren und auf diese Weise, insbesondere irreversibel, entfernen.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Alkin-Gruppe der allgemeinen chemischen Formel: 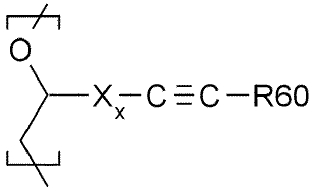 und/oder 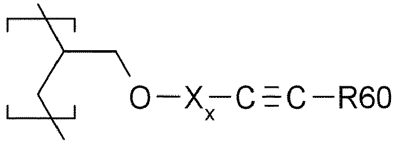 und/oder

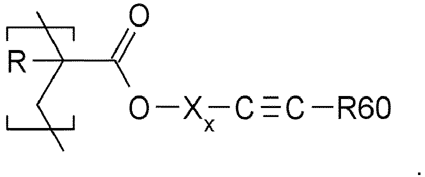

So kann das mindestens eine Polymer mit der mindestens einen kovalent gebundenen Gruppe vorteilhafterweise zusätzlich zu den bereits erläuterten Vorteilen einer Alkin-Gruppen, beispielsweise einer Ethin-Gruppe, zum Beispiel einer Ethinyl-Gruppe und/oder Ethinylen-Gruppe, mit einer lonenleitfähigkeit durch die Polymerrücken bildende Einheit ausgestattet werden.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Nitril-Gruppe der allgemeinen chemischen Formel: 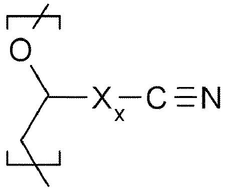 und/oder 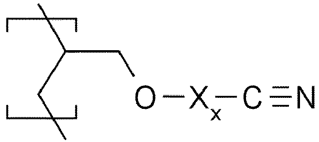 und/oder

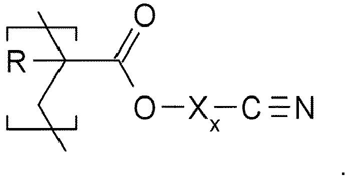

So kann das mindestens eine Polymer mit der mindestens einen kovalent gebundenen Gruppe vorteilhafterweise zusätzlich zu den bereits erläuterten Vorteilen einer Nitril-Gruppe mit einer lonenleitfähigkeit durch die Polymerrücken bildende Einheit ausgestattet werden.

Im Rahmen einer weiteren, alternativen oder zusätzlichen, speziellen Ausgestaltung umfasst das mindestens eine Polymer mit der mindestens einen kovalent gebundenen Gruppe mindestens eine Wiederholungseinheit mit einer Isonitril-Gruppe der allgemeinen chemischen Formel: 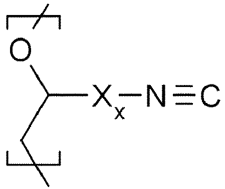 und/oder 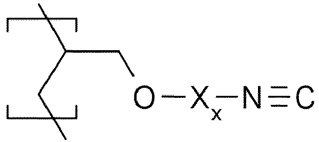 und/oder

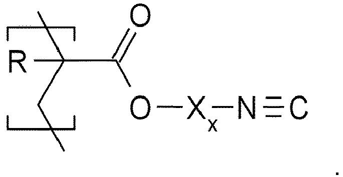

So kann das mindestens eine Polymer mit der mindestens einen kovalent gebundenen Gruppe vorteilhafterweise zusätzlich zu den bereits erläuterten Vorteilen einer Isonitril-Gruppe mit einer lonenleitfähigkeit durch die Polymerrücken bildende Einheit ausgestattet werden.

R kann im Rahmen dieser Ausgestaltungen beispielsweise für Wasserstoff oder für eine Alkyl-Gruppe, insbesondere für eine Methyl-Gruppe oder Ethyl-Gruppe, oder für eine Alkoxy-Gruppe, beispielsweise für eine Methoxy-Gruppe oder Ethoxy-Gruppe, oder für mindestens eine, insbesondere endständige oder vernetzende, Alkylenoxid-Gruppe, beispielsweise umfassend mindestens eine Ethylenoxid-Gruppe und/oder Propylenoxid-Gruppe, zum Beispiel für eine Oligo- oder Poly-Alkylenoxid-Gruppe, beispielsweise für eine Oligo- oder Poly-Ethylenoxid-Gruppe, gegebenenfalls welche mit einer anderen Polymerrücken bildenden Einheit des mindestens einen Polymers oder eines anderen Polymeres des Elektrolyten vernetzt, oder für eine, insbesondere endständige oder vernetzende, Alkylen-Gruppe, gegebenenfalls vernetzend mit einer anderen Polymerrücken bildenden Einheit des mindestens einen Polymers oder eines anderen Polymeres des Elektrolyten, stehen. Insbesondere kann R für Wasserstoff oder für eine Alkyl-Gruppe, insbesondere für eine Methyl-Gruppe, stehen.

Insbesondere kann das mindestens eine Polymer mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, bezogen auf das Gesamtgewicht des mindestens einen Polymers mit der mindestens einen kovalent gebundenen Gruppe und/oder bezogen auf das Polymer-Gesamtgewicht, beispielsweise des Elektrolyten, ≥ 0,1 Gew.-%, zum Bespiel ≥ 0,2 Gew.-%, insbesondere ≥ 0,5 Gew.-%, an mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestatteten Wiederholungseinheiten umfassen.

Zum Beispiel insofern die mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestatteten Wiederholungseinheiten des mindestens einen Polymers selbst eine ausreichend hohe lonenleitfähigkeit, beispielsweise Lithiumionenleitfähigkeit, aufweisen und/oder der Elektrolyt weiterhin mindestens einen, gegebenenfalls weiteren beziehungsweise anderen, Festelektrolyten und/oder mindestens einen Flüssigelektrolyten umfasst, kann das mindestens eine Polymer mit der mindestens einen kovalent gebundenen Gruppe, bezogen auf das Gesamtgewicht des mindestens einen Polymers mit der mindestens einen kovalent gebundenen Gruppe und/oder bezogen auf das Polymer-Gesamtgewicht, beispielsweise des Elektrolyten, bis zu ≤ 100 Gew.-% an mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestatteten Wiederholungseinheiten umfassen.

Zum Beispiel um die Eigenschaften des mindestens einen Polymers mit der mindestens einen kovalent gebundenen Gruppe, beispielsweise dessen lonenleitfähigkeit und/oder mechanische Stabilität, zu optimieren und/oder insofern die mit der mindestens einen kovalent gebundenen Gruppe ausgestatteten Wiederholungseinheiten des mindestens einen Polymers selbst wenig oder gar nicht zur lonenleitfähigkeit des mindestens einen Polymers beitragen, kann das mindestens eine Polymer mit der mindestens einen kovalent gebundenen Gruppe mindestens eine weitere Wiederholungseinheit, beispielsweise mindestens eine weitere, ionenleitfähige und/oder ionenleitende, beispielsweise lithiumionenleitfähige und/oder lithiumionenleitende, Wiederholungseinheit und/oder mindestens eine weitere, gegebenenfalls mechanisch stabilisierende, Wiederholungseinheit, umfassen. Insbesondere kann dabei das mindestens eine Polymer mit der mindestens einen kovalent gebundenen Gruppe mindestens eine weitere, ionenleitfähige und/oder ionenleitende, beispielsweise lithiumionenleitfähige und/oder lithiumionenleitende, Wiederholungseinheit umfassen.

Beispielsweise kann das mindestens eine Polymer mit der mindestens einen kovalent gebundenen Gruppe, bezogen auf das Gesamtgewicht des mindestens einen Polymers mit der mindestens einen kovalent gebundenen Gruppe und/oder bezogen auf das Polymer-Gesamtgewicht, beispielsweise des Elektrolyten, (lediglich) ≤ 30 Gew.-%, beispielsweise ≤ 15 Gew.-%, insbesondere ≤ 10 Gew.-%, an mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestatteten Wiederholungseinheiten umfassen.

Zum Beispiel kann das mindestens eine Polymer mit der mindestens einen kovalent gebundenen Gruppe, bezogen auf das Gesamtgewicht des mindestens einen Polymers mit der mindestens einen kovalent gebundenen Gruppe und/oder bezogen auf das Polymer-Gesamtgewicht, beispielsweise des Elektrolyten, ≥ 0,1 Gew.-% bis ≤ 30 Gew.-%, beispielsweise ≥ 0,2 Gew.-% bis ≤ 15 Gew.-%, insbesondere ≥ 0,5 Gew.-% bis ≤ 10 Gew.-%, an mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestatteten Wiederholungseinheiten umfassen.

Dabei kann das mindestens eine Polymer mit der mindestens einen kovalent gebundenen Gruppe, bezogen auf das Gesamtgewicht des mindestens einen Polymers mit der mindestens einen kovalent gebundenen Gruppe und/oder bezogen auf das Polymer-Gesamtgewicht, beispielsweise des Elektrolyten, ≥ 70 Gew.-% bis ≤ 99,9 Gew.-%, beispielsweise ≥ 85 Gew.-% bis ≤ 99,8 Gew.-%, insbesondere ≥ 90 Gew.-% bis ≤ 99,5 Gew.-%, an weiteren Wiederholungseinheiten, zum Beispiel an weiteren, ionenleitfähigen und/oder ionenleitenden, beispielsweise lithiumionenleitfähigen und/oder lithiumionenleitenden, Wiederholungseinheiten, zum Beispiel an Wiederholungseinheiten mit einer ionenleitfähigen und/oder ionenleitenden, beispielsweise lithiumionenleitfähigen und/oder lithiumionenleitenden, Polymerrücken bildenden Einheit und/oder mit mindestens einer ionenleitfähigen und/oder ionenleitenden, beispielsweise lithiumionenleitfähigen und/oder lithiumionenleitenden, Seitengruppe, umfassen.

Der Elektrolyt kann zum Beispiel, bezogen auf das Gesamtgewicht des Elektrolyten, ≥ 0,1 Gew.-% bis ≤ 30 Gew.-%, beispielsweise ≥ 0,2 Gew.-% bis ≤ 15 Gew.-%, insbesondere ≥ 0,5 Gew.-% bis ≤ 10 Gew.-%, an der mindestens einen Verbindung mit mindestens einem Dreiring und/oder Vierring und/oder mit mindestens einer Doppelbindung und/oder mit mindestens einer Dreifachbindung, insbesondere an mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestatteten Wiederholungseinheiten, insbesondere des mindestens einen Polymers, und/oder an dem mindestens einen Additiv mit mindestens einem Dreiring und/oder Vierring und/oder mit mindestens einer Doppelbindung und/oder mit mindestens einer Dreifachbindung, insbesondere in Summe, umfassen.

Der Elektrolyt kann gegebenenfalls, bezogen auf das Gesamtgewicht des Elektrolyten, ≥ 40 Gew.-% bis ≤ 95 Gew.-%, beispielsweise ≥ 50 Gew.-% bis ≤ 90 Gew.-%, insbesondere ≥ 60 Gew.-% bis ≤ 90 Gew.-%, an weiteren Polymeren und/oder weiteren Wiederholungseinheiten und/oder anorganischen lonenleitern und/oder Flüssigelektrolyten, insbesondere an weiteren Polymeren und/oder weiteren Wiederholungseinheiten, beispielsweise an weiteren, ionenleitfähigen und/oder ionenleitenden und/oder nicht-ionenleitfähigen und/oder nicht-ionenleitenden, beispielsweise lithiumionenleitfähigen und/oder lithiumionenleitenden und/oder nicht-lithiumionenleitfähigen und/oder nicht-lithiumionenleitenden, Polymeren und/oder an weiteren, ionenleitfähigen und/oder ionenleitenden und/oder nicht-ionenleitfähigen und/oder nicht-ionenleitenden, beispielsweise lithiumionenleitfähigen und/oder lithiumionenleitenden und/oder nicht-lithiumionenleitfähigen und/oder nicht-lithiumionenleitenden, Wiederholungseinheiten und/oder an anorganischen lonenleitern und/oder Flüssigelektrolyten, insbesondere in Summe, umfassen.

Insbesondere kann der Elektrolyt, bezogen auf das Gesamtgewicht des Elektrolyten, ≥ 60 Gew.-% bis ≤ 99,5 Gew.-% oder ≤ 95 Gew.-% oder ≤ 90 Gew.-%, beispielsweise ≥ 70 Gew.-% bis ≤ 99,5 Gew.-% oder ≤ 95 Gew.-% oder ≤ 90 Gew.-%, insbesondere ≥ 80 Gew.-% bis ≤ 99,5 Gew.-% oder ≤ 95 Gew.-% oder ≤ 90 Gew.-%, an Polymeren, insbesondere an dem mindestens einen Polymer mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, und gegebenenfalls an dem mindestens einen weiteren, beispielsweise ionenleitfähigen und/oder ionenleitenden, beispielsweise lithiumionenleitfähigen und/oder lithiumionenleitenden, Polymer und/oder gegebenenfalls an dem mindestens einen weiteren, beispielsweise nicht-ionenleitfähigen und/oder nicht ionenleitenden, beispielsweise nicht-lithiumionenleitfähigen und/oder nicht-lithiumionenleitenden, Polymer, insbesondere in Summe, umfassen.

Der Elektrolyt kann jedoch auch - insbesondere insofern das mindestens eine Polymer mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ionenleitfähig und/oder ionenleitend, beispielsweise lithiumionenleitfähig und/oder lithiumionenleitend, und/oder ein, insbesondere ionenleitfähiges und/oder ionenleitendes, beispielsweise lithiumionenleitfähiges und/oder lithiumionenleitendes, Co-Polymer ist - bezogen auf das Gesamtgewicht des Elektrolyten, 60 Gew.-% bis ≤ 99,5 Gew.-% oder ≤ 95 Gew.-% oder ≤ 90 Gew.-%, beispielsweise ≥ 70 Gew.-% bis ≤ 99,5 Gew.-% oder ≤ 95 Gew.-% oder ≤ 90 Gew.-%, insbesondere ≥ 80 Gew.-% bis ≤ 99,5 Gew.-% oder ≤ 95 Gew.-% oder ≤ 90 Gew.-%, an dem mindestens einen Polymer mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, umfassen. Dabei kann das mindestens eine Polymer mit der mindestens einen kovalent gebundenen Gruppe zusätzlich zu seiner Schadstoff bindenden Funktion auch zur lonenleitung und/oder als Binder dienen. Der Anteil an weiteren Polymeren kann so vorteilhafterweise minimiert oder sogar auf den Zusatz von weiteren Polymeren verzichtet werden.

Bezogen auf den stöchiometrischen Anteil des mindestens einen Dreirings und/oder Vierrings und/oder der mindestens einen Doppelbindung und/oder der mindestens einen Dreifachbindung der mindestens einen Verbindung, beispielsweise des mindestens einen Polymers und/oder des mindestens einen Additivs, insbesondere bezogen auf den stöchiometrischen Anteil der mindestens einen kovalent gebundenen Gruppe, insbesondere welche mindestens einen Dreiring und/oder Vierring und/oder mindestens eine Doppelbindung und/oder mindestens eine Dreifachbindung umfasst, des mindestens einen Polymers, kann der Elektrolyt insbesondere ≤ 5 Mol-%, beispielsweise ≤ 3 Mol-%, zum Beispiel ≤ 2,5 Mol-%, gegebenenfalls ≤ 1 Mol-%, an dem mindestens einen Katalysator umfassen.

Der Elektrolyt kann zum Beispiel, bezogen auf das Gesamtgewicht des Elektrolyten, ≥ 0,01 Gew.-% bis ≤ 15 Gew.-%, beispielsweise ≥ 0,01 Gew.-% bis ≤ 10 Gew.-%, insbesondere ≥ 0,01 Gew.-% bis ≤ 5 Gew.-%, an dem mindestens einen Katalysator, umfassen.

Der Elektrolyt kann zum Beispiel weiterhin, bezogen auf das Gesamtgewicht des Elektrolyten, ≥ 0,1 Gew.-% oder ≥ 1 Gew.-% oder ≥ 5 Gew.-% bis ≤ 30 Gew.-%, beispielsweise ≥ 0,1 Gew.-% oder ≥ 1 Gew.-% oder ≥ 5 Gew.-% bis ≤ 25 Gew.-%, insbesondere ≥ 0,1 Gew.-% oder ≥ 1 Gew.-% oder ≥ 5 Gew.-% oder ≥ 10 Gew.-% bis ≤ 20 Gew.-%, an dem mindestens einen Leitsalz, insbesondere Lithium-Leitsalz, umfassen.

In einer Ausgestaltung ist das mindestens eine Polymer mit der mindestens einen kovalent gebundenen Gruppe durch radikalische Polymerisation mindestens eines Monomers mit mindestens einer vorstehend erläuterten, kovalent gebundenen Gruppe, insbesondere welche mindestens einen Dreiring und/oder Vierring und/oder mindestens eine Doppelbindung und/oder mindestens eine Dreifachbindung umfasst, ausgebildet beziehungsweise erhältlich beziehungsweise hergestellt. Insbesondere kann das mindestens eine Polymer mit der mindestens einen kovalent gebundenen Gruppe durch ein später erläutertes erfindungsgemäßes Verfahren hergestellt sein. Das mindestens eine Monomer mit der mindestens einen kovalent gebundenen Gruppe kann beispielsweise mindestens einen Allylether und/oder mindestens ein Acrylat und/oder mindestens ein Methacrylat, zum Beispiel Allylglycidylether und/oder Glycidylacrylat und/oder Glycidylmethacrylat und/oder 2-Cyanoethylacrylat und/oder 2-Cyanoethylmethacrylat, umfassen oder sein. Das mindestens eine Polymer mit der mindestens einen kovalent gebundenen Gruppe kann dabei zum Beispiel auch durch radikalische Co-Polymerisation mit mindestens einem weiteren Monomer ausgebildet beziehungsweise erhältlich beziehungsweise hergestellt sein. Beispielsweise kann dabei das mindestens eine weitere Monomer mindestens ein, insbesondere weiteres beziehungsweise anderes, ionenleitfähiges und/oder ionenleitendes, beispielsweise lithiumionenleitfähiges und/oder lithiumionenleitendes, Monomer, beispielsweise mindestens ein, gegebenenfalls weiteres beziehungsweise anderes, Acrylat und/oder mindestens ein, gegebenenfalls weiteres beziehungsweise anderes, Methacrylat und/oder mindestens einen, gegebenenfalls weiteren beziehungsweise anderen, Allylether, zum Beispiel mindestens ein (2-Oxo-[1,3]-dioxolan-4-yl)alkylacrylat, wie (2-Oxo-[1,3]-dioxolan-4-yl)methylacrylat (DOA) und/oder (2-Oxo-[1,3]-dioxolan-4-yl)butylacrylat (DOBA), und/oder mindestens ein (2-Oxo-[1,3]-dioxolan-4-yl)alkylmethacrylat, wie (2-Oxo-[1,3]-dioxolan-4-yl)methylmethacrylat (DOMA) und/oder (2-Oxo-[1,3]-dioxolan-4-yl)alkylmethacrylat (DOBMA), und/oder mindestens ein, gegebenenfalls weiteres beziehungsweise anderes, beispielsweise mechanisch stabilisierendes, Monomer, zum Beispiel Styrol, umfassen oder sein.

Der Elektrolyt kann insbesondere zur Ausbildung einer später erläuterten erfindungsgemäßen Funktionsschicht und/oder Zelle ausgelegt sein und/oder verwendet werden. Beispielsweise kann der Elektrolyt mindestens ein später erläutertes erfindungsgemäßes Polymer, insbesondere mindestens einen aus mindestens einem erfindungsgemäßen Polymer ausgebildeten Polymerelektrolyten, umfassen beziehungsweise sein und/oder durch ein später erläutertes erfindungsgemäßes Verfahren hergestellt sein..

Der Elektrolyt und dessen Bestandteile können mit kristallographischen Methoden, zum Beispiel Röntgendiffraktion (Englisch: X-ray diffraction, XRD) und/oder mit organischen Analytikmethoden, zum Beispiel Infrarotspektroskopie (IR) und/oder Kernresonanzspektroskopie (Englisch: nuclear magnetic resonance, NMR), und/oder mit mikroskopischen Methoden, zum Beispiel Rasterelektronenmikroskopie (Englisch: scanning electron microscopy, SEM) und/oder durch, beispielsweise nasschemische, Nachweisreaktionen, zum Beispiel zum Nachweis von ungesättigten funktionellen Gruppen, beispielsweise einer Bromwasser-Entfärbung als Nachweis für Kohlenstoff-Kohlenstoff-Mehrfachbindungen, nachgewiesen werden.

Hinsichtlich weiterer technischer Merkmale und Vorteile des erfindungsgemäßen Elektrolyten wird hiermit explizit auf die Erläuterungen im Zusammenhang mit dem erfindungsgemäßen Polymer, dem erfindungsgemäßen Verfahren, der erfindungsgemäßen Funktionsschicht und der erfindungsgemäßen Zelle sowie auf die Figuren, die Figurenbeschreibung und die Ausführungsbeispiele verwiesen.

Ein weiterer Gegenstand der Erfindung ist ein Polymer, insbesondere zur Ausbildung eines Elektrolyten, insbesondere Polymerelektrolyten, beispielsweise zur Ausbildung eines erfindungsgemäßen Elektrolyten, insbesondere Polymerelektrolyten, und/oder zur Ausbildung einer später erläuterten erfindungsgemäßen Funktionsschicht und/oder Zelle, umfassend mindestens eine kovalent, insbesondere an das Polymer beziehungsweise daran, gebundenen Gruppe.

Aus dem Polymer kann vorteilhafterweise in Polymerelektrolyt und/oder eine Funktionsschicht ausgebildet werden, durch welche/n die Leistung und/oder Lebensdauer und/oder Sicherheit einer damit ausgestatteten Zelle gesteigert werden kann.

Beispielsweise kann das Polymer ein Polyalkylenoxid, insbesondere ein Polyethylenoxid und/oder Polypropylenoxid, und/oder ein Polyacrylat und/oder ein Polymethacrylat, beispielsweise ein Poly(methyl)methacrylat, und/oder ein Polyallylether und/oder ein Polymer auf Basis von mindestens einer polymerisierten, mindestens eine, insbesondere organische, Carbonatgruppe umfassenden Wiederholungseinheit, beispielsweise ein Polycarbonat, zum Beispiel ein Polypropylencarbonat, und/oder ein Polymer, welches mindestens eine Polymerrücken bildenden Struktureinheit mit mindestens einer, mindestens eine Carbonatgruppe enthaltenden Seitengruppe umfasst, und/oder ein Polysiloxan und/oder ein Polyphosphazen und/oder ein Polyacrylnitril und/oder ein Polyolefin, beispielsweise ein Polypropylen und/oder Polyethylen, umfassen oder sein.

Insbesondere kann das Polymer ein Polyalkylenoxid, beispielsweise ein Polyalkylenoxid, insbesondere ein Polyethylenoxid und/oder Polypropylenoxid, und/oder ein Polyacrylat und/oder ein Polymethacrylat und/oder einen Polyallylether und/oder ein Polymer auf Basis mindestens einer polymerisierten, mindestens eine, insbesondere organische, Carbonatgruppe umfassenden Wiederholungseinheit, beispielsweise ein Polycarbonat, zum Beispiel ein Polypropylencarbonat, und/oder ein Polymer, welches mindestens eine Polymerrücken bildenden Struktureinheit mit mindestens einer, mindestens eine Carbonatgruppe enthaltenden Seitengruppe umfasst, und/oder ein Polysiloxan und/oder ein Polyphosphazen umfassen oder sein.

Zum Beispiel kann das Polymer ein Polyalkylenoxid, beispielsweise ein Polyalkylenoxid, insbesondere ein Polyethylenoxid und/oder Polypropylenoxid, und/oder ein Polyacrylat und/oder ein Polymethacrylat und/oder einen Polyallylether und/oder ein Polycarbonat und/oder ein Polysiloxan und/oder ein Polyphosphazen umfassen oder sein.

Insbesondere kann die mindestens eine kovalent gebundene Gruppe mindestens einen Dreiring und/oder Vierring, insbesondere Dreiring, beispielsweise mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe, und/oder mindestens eine Doppelbindung, insbesondere mindestens eine Kohlenstoff-Kohlenstoff-Doppelbindung, beispielsweise mindestens eine, insbesondere cyclische oder acyclische, Alken-Gruppe, und/oder mindestens eine Kohlenstoff-Sauerstoff-Doppelbindung, beispielsweise mindestens eine Carbonyl-Gruppe, und/oder mindestens eine Dreifachbindung, insbesondere mindestens eine Kohlenstoff-Kohlenstoff-Dreifachbindung, beispielsweise mindestens eine Alkin-Gruppe, und/oder mindestens eine Kohlenstoff-Stickstoff-Dreifachbindung, beispielsweise mindestens eine Nitril-Gruppe und/oder mindestens eine Isonitril-Gruppe, umfassen.

Insbesondere kann die mindestens eine kovalent gebundene Gruppe mindestens einen Dreiring und/oder Vierring und/oder mindestens eine Kohlenstoff-Kohlenstoff-Doppelbindung, insbesondere mindestens eine Alken-Gruppe, und/oder mindestens eine Kohlenstoff-Kohlenstoff-Dreifachbindung, insbesondere mindestens eine Alkin-Gruppe, und/oder mindestens eine Kohlenstoff-Stickstoff-Dreifachbindung, insbesondere mindestens eine Nitril-Gruppe und/oder mindestens eine Isonitril-Gruppe, umfassen.

Im Rahmen einer Ausführungsform umfasst oder ist die mindestens eine kovalent gebundene Gruppe mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe und/oder mindestens eine Vinyl-Gruppe und/oder mindestens eine Allyl-Gruppe und/oder mindestens eine Alkenylencarbonat-Gruppe, insbesondere mindestens eine Vinylencarbonat-Gruppe, und/oder mindestens eine Alkenylenlacton-Gruppe, insbesondere mindestens eine Vinylenlacton-Gruppe, und/oder mindestens eine Alkenylcarbonat-Gruppe, insbesondere mindestens eine Vinylcarbonat-Gruppe, und/oder mindestens eine Alkenyllacton-Gruppe, insbesondere mindestens eine Vinyllacton-Gruppe, und/oder mindestens eine Nitril-Gruppe und/oder mindestens eine Isonitril-Gruppe.

Beispielsweise kann die mindestens eine kovalent gebundene Gruppe mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe und/oder mindestens eine Alkenylencarbonat-Gruppe, insbesondere mindestens eine Vinylencarbonat-Gruppe, und/oder mindestens eine Alkenylenlacton-Gruppe, insbesondere mindestens eine Vinylenlacton-Gruppe, und/oder mindestens eine Alkenylcarbonat-Gruppe, insbesondere mindestens eine Vinylcarbonat-Gruppe, und/oder mindestens eine Alkenyllacton-Gruppe, insbesondere mindestens eine Vinyllacton-Gruppe, und/oder mindestens eine Nitril-Gruppe und/oder mindestens eine Isonitril-Gruppe umfassen oder sein.

Im Rahmen einer weiteren Ausführungsform umfasst das Polymer mindestens eine Wiederholungseinheit mit einer kovalent gebundenen Oxiran-Gruppe der allgemeinen chemischen Formel: 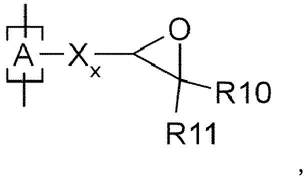 und/oder mindestens eine Wiederholungseinheit mit einer kovalent gebundenen Oxetan-Gruppe der allgemeinen chemischen Formel: 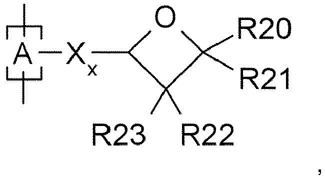 und/oder mindestens eine Wiederholungseinheit mit einer kovalent gebundenen Cyclopropan-Gruppe der allgemeinen chemischen Formel: 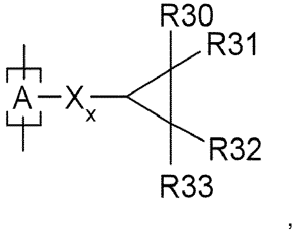 und/oder mindestens eine Wiederholungseinheit mit einer kovalent gebundenen Cyclobutan-Gruppe der allgemeinen chemischen Formel: 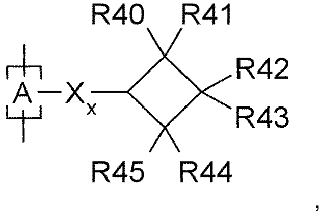 und/oder mindestens eine Wiederholungseinheit mit einer kovalent gebundenen Alken-Gruppe der allgemeinen chemischen Formel: 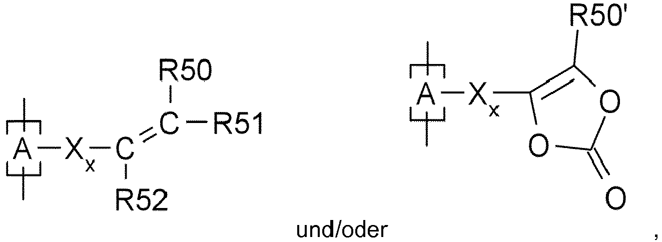 und/oder mindestens eine Wiederholungseinheit mit einer kovalent gebundenen Alkin-Gruppe der allgemeinen chemischen Formel: 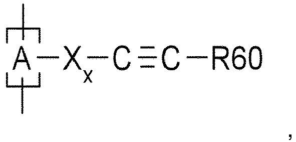 und/oder mindestens eine Wiederholungseinheit mit einer kovalent gebundenen Nitril-Gruppe der allgemeinen chemischen Formel: 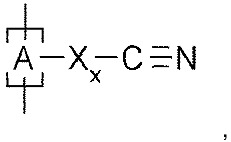 und/oder mindestens eine Wiederholungseinheit mit einer kovalent gebundenen Isonitril-Gruppe der allgemeinen chemischen Formel:

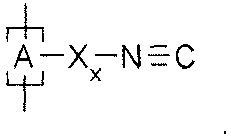

A kann dabei insbesondere für eine Polymerrücken bildende Einheit stehen. Insbesondere kann [A] für eine ionenleitfähige und/oder ionenleitende, beispielsweise lithiumionenleitfähige und/oder lithiumionenleitende, Polymerrücken bildende Einheit, zum Beispiel für eine Alkylenoxid-Einheit, beispielsweise für eine Ethylenoxid-Einheit und/oder für eine Propylenoxid-Einheit, und/oder für eine Acrylat-Einheit und/oder für eine Methacrylat-Einheit und/oder für eine Carbonat-Einheit, zum Beispiel für eine Propylencarbonat-Einheit, und/oder für eine Siloxan-Einheit und/oder für eine Phosphazen-Einheit stehen.

X kann dabei insbesondere für einen, insbesondere kovalent an die Polymerrücken bildende Einheit A gebundenen, Spacer. x kann dabei insbesondere für die Anzahl des Spacers X stehen, x kann insbesondere für die Anzahl, insbesondere das Vorhandensein beziehungsweise die Abwesenheit, des Spacers X stehen, x kann beispielsweise 1 oder 0 sein. Dabei kann im Fall x=1 ein Spacer X vorhanden und im Fall x=0 kein Spacer X vorhanden sein. Die kovalent gebundene Gruppe kann beispielsweise im Fall x=1 kovalent an den Spacer X (und über den Spacer X wiederum, insbesondere indirekt, kovalent an die Polymerrücken bildende Einheit A oder im Fall x= 0, insbesondere direkt, kovalent an die Polymerrücken bildende Einheit A angebunden sein. X kann beispielsweise für einen ionenleitfähigen und/oder ionenleitenden, beispielsweise lithiumionenleitfähigen und/oder lithiumionenleitenden, Spacer, zum Beispiel umfassend mindestens eine Alkylenoxid-Gruppe, beispielsweise mindestens eine Ethylenoxid-Gruppe und/oder mindestens eine Propylenoxid-Gruppe, zum Beispiel für eine Oligo- oder Poly-Alkylenoxid-Gruppe, beispielsweise für eine Oligo- oder Poly-Ethylenoxid-Gruppe, oder für einen nicht-ionenleitfähigen und/oder nicht-ionenleitenden, beispielsweise nicht-lithiumionenleitfähigen und/oder nicht-lithiumionenleitenden, Spacer, zum Beispiel für eine Alkylen-Gruppe, beispielsweise für eine Methylen-Gruppe oder für eine Ethylen-Gruppe oder für eine Propylen-Gruppe oder für eine Butylen-Gruppe, stehen.

R10 und R11 beziehungsweise R20, R21, R22 und R23 beziehungsweise R30, R31, R32 und R33 beziehungsweise R40, R41, R42, R43, R44 und R45 beziehungsweise R50, R51 und R52 beziehungsweise R50' beziehungsweise R60 können dabei insbesondere jeweils unabhängig voneinander für Wasserstoff oder für eine Alkoxy-Gruppe, beispielsweise für eine Methoxy-Gruppe oder Ethoxy-Gruppe, oder für eine Alkyl-Gruppe, beispielsweise für eine Methyl-Gruppe oder Ethyl-Gruppe, oder für mindestens eine, insbesondere endständige oder vernetzende, Alkylenoxid-Gruppe, beispielsweise umfassend mindestens eine Ethylenoxid-Gruppe und/oder Propylenoxid-Gruppe, zum Beispiel für eine Oligo- oder Poly-Alkylenoxid-Gruppe, beispielsweise für eine Oligo- oder Poly-Ethylenoxid-Gruppe, gegebenenfalls vernetzend mit einer anderen Polymerrücken bildenden Einheit des Polymers oder eines anderen Polymeres, oder für eine, insbesondere endständige oder vernetzende, Alkylen-Gruppe, gegebenenfalls vernetzend mit einer anderen Polymerrücken bildenden Einheit des Polymers oder eines anderen Polymeres, stehen.

Im Rahmen einer weiteren Ausführungsform umfasst oder ist das Polymer ein Polyalkylenoxid, insbesondere ein Polyethylenoxid und/oder Polypropylenoxid, und/oder ein Polyacrylat und/oder ein Polymethacrylat und/oder ein Polyallylether, und/oder steht A für eine Alkylenoxid-Einheit, beispielsweise für eine Ethylenoxid-Einheit und/oder für eine Propylenoxid-Einheit, und/oder für eine Acrylat-Einheit und/oder für eine Methacrylat-Einheit, zum Beispiel für eine Methylmethacrylat-Einheit, und/oder steht X für einen ionenleitfähigen und/oder ionenleitenden, insbesondere lithiumionenleitfähigen und/oder lithiumionenleitenden, Spacer, zum Beispiel umfassend mindestens eine Alkylenoxid-Gruppe, beispielsweise mindestens eine Ethylenoxid-Gruppe und/oder mindestens eine Propylenoxid-Gruppe, zum Beispiel eine Oligo- oder Poly-Alkylenoxid-Gruppe, beispielsweise eine Oligo- oder Poly-Ethylenoxid-Gruppe.

Im Rahmen einer Ausgestaltung dieser Ausführungsformen umfasst das Polymer mindestens eine Wiederholungseinheit mit einer kovalent gebundenen Oxiran-Gruppe der allgemeinen chemischen Formel: 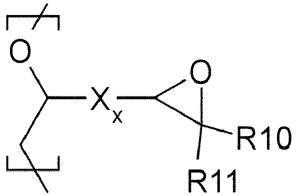 und/oder 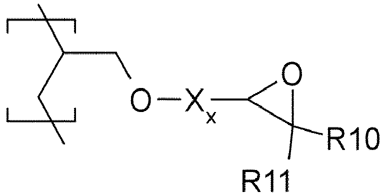 und/oder 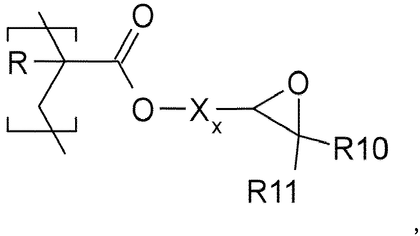 und/oder mindestens eine Wiederholungseinheit mit einer kovalent gebundenen Oxetan-Gruppe der allgemeinen chemischen Formel: 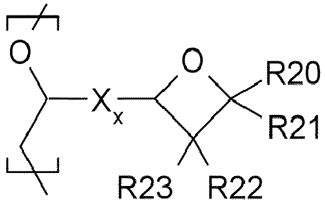 und/oder 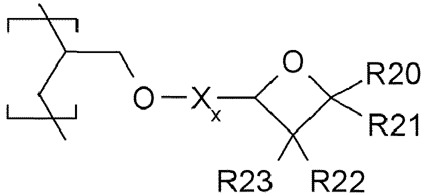 und/oder 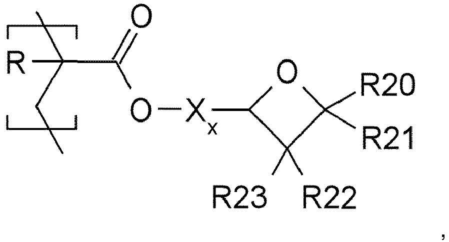 und/oder mindestens eine Wiederholungseinheit mit einer kovalent gebundenen Cyclopropan-Gruppe der allgemeinen chemischen Formel: 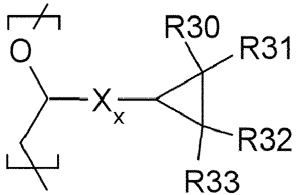 und/oder 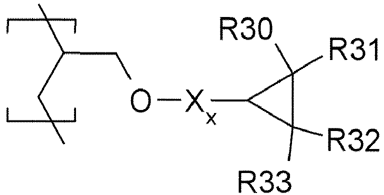 und/oder 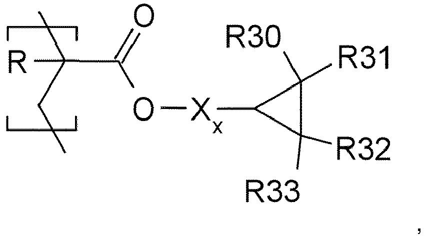 und/oder mindestens eine Wiederholungseinheit mit einer kovalent gebundenen Cyclobutan-Gruppe der allgemeinen chemischen Formel: 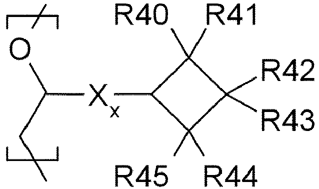 und/oder 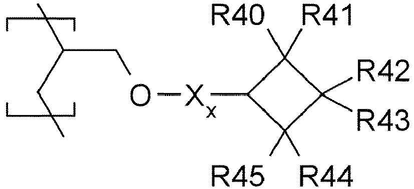 und/oder 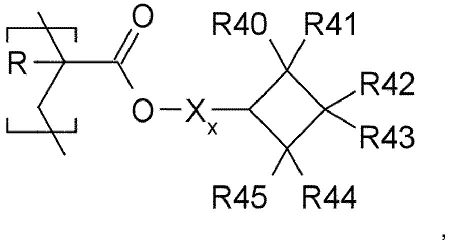 und/oder mindestens eine Wiederholungseinheit mit einer kovalent gebundenen Alken-Gruppe der allgemeinen chemischen Formel: 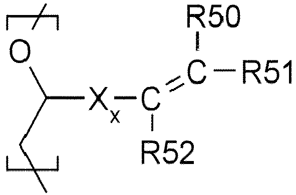 und/oder 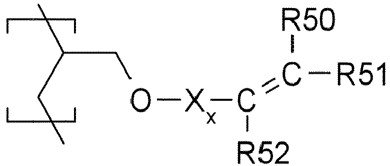 und/oder 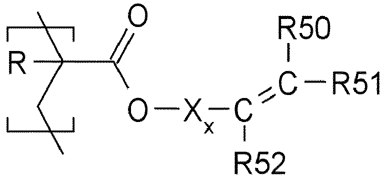 und/oder 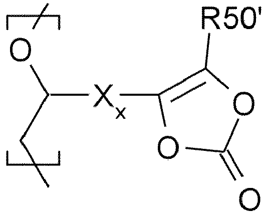 und/oder 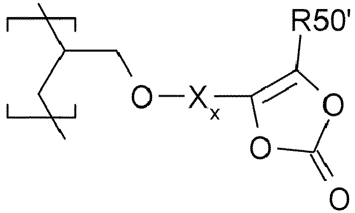 und/oder 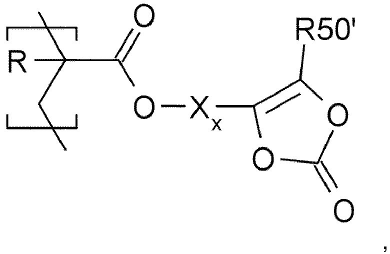 und/oder mindestens eine Wiederholungseinheit mit einer kovalent gebundenen Alkin-Gruppe der allgemeinen chemischen Formel: 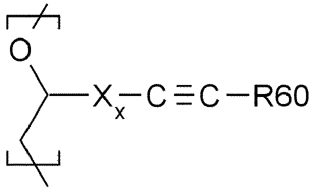 und/oder 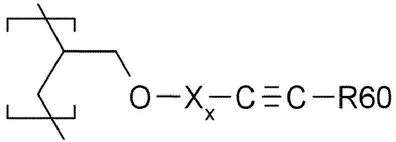 und/oder 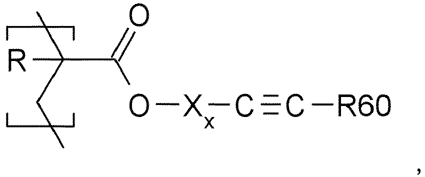 und/oder mindestens eine Wiederholungseinheit mit einer kovalent gebundenen Nitril-Gruppe der allgemeinen chemischen Formel: 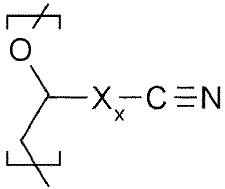 und/oder 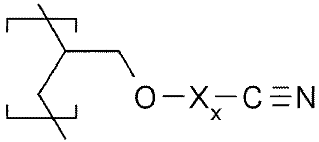 und/oder 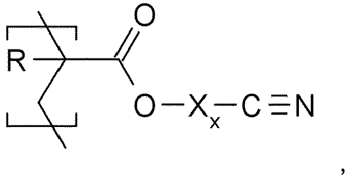 und/oder mindestens eine Wiederholungseinheit mit einer kovalent gebundenen Isonitril-Gruppe der allgemeinen chemischen Formel: 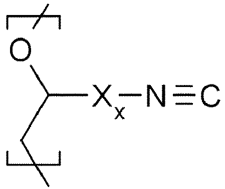 und/oder 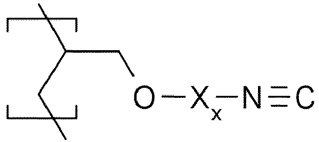 und/oder 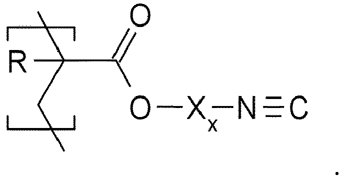 R kann im Rahmen dieser Ausgestaltungen beispielsweise für Wasserstoff oder für eine Alkyl-Gruppe, insbesondere für eine Methyl-Gruppe oder Ethyl-Gruppe, oder für eine Alkoxy-Gruppe, beispielsweise für eine Methoxy-Gruppe oder Ethoxy-Gruppe, oder für mindestens eine, insbesondere endständige oder vernetzende, Alkylenoxid-Gruppe, beispielsweise umfassend mindestens eine Ethylenoxid-Gruppe und/oder Propylenoxid-Gruppe, zum Beispiel für eine Oligo- oder Poly-Alkylenoxid-Gruppe, beispielsweise für eine Oligo- oder PolyEthylenoxid-Gruppe, gegebenenfalls welche mit einer anderen Polymerrücken bildenden Einheit des mindestens einen Polymers oder eines anderen Polymeres des Elektrolyten vernetzt, oder für eine, insbesondere endständige oder vernetzende, Alkylen-Gruppe, gegebenenfalls vernetzend mit einer anderen Polymerrücken bildenden Einheit des mindestens einen Polymers oder eines anderen Polymeres des Elektrolyten, stehen. Insbesondere kann R für Wasserstoff oder für eine Alkyl-Gruppe, insbesondere für eine Methyl-Gruppe, stehen.

Im Rahmen einer weiteren Ausführungsform ist das Polymer ein Co-Polymer, beispielsweise ein Block-Co-Polymer, insbesondere welches mindestens ein Polymer mit mindestens einer erfindungsgemäßen kovalent gebundenen Gruppe und/oder mindestens eine erfindungsgemäße Wiederholungseinheit und mindestens ein weiteres Polymer und/oder mindestens eine weitere Wiederholungseinheit umfasst.

Im Rahmen dieser Ausführungsformen kann beispielsweise das mindestens eine weitere Polymer mindestens ein, gegebenenfalls weiteres beziehungsweise anderes, ionenleitfähiges und/oder ionenleitendes, beispielsweise lithiumionenleitfähiges und/oder lithiumionenleitendes, Polymer, zum Beispiel mindestens ein, gegebenenfalls weiteres beziehungsweise anderes, Polyalkylenoxid, insbesondere Polyethylenoxid und/oder Polypropylenoxid, und/oder Polyacrylat und/oder Polymethacrylat und/oder Polyallylether und/oder Polycarbonat und/oder Polysiloxan und/oder Polyphosphazen, und/oder mindestens ein, gegebenenfalls weiteres beziehungsweise anderes, nichtionenleitfähiges und/oder nicht-ionenleitendes, beispielsweise nichtlithiumionenleitfähiges und/oder nicht-lithiumionenleitendes, Polymer, zum Beispiel Polystyrol, und/oder die mindestens eine weitere Wiederholungseinheit mindestens eine, gegebenenfalls weitere beziehungsweise andere, ionenleitfähige und/oder ionenleitende, beispielsweise lithiumionenleitfähige und/oder lithiumionenleitende, Wiederholungseinheit, zum Beispiel Alkylenoxid-Einheit, beispielsweise Ethylenoxid-Einheit und/oder Propylenoxid-Einheit, und/oder Acrylat-Einheit und/oder Methacrylat-Einheit, zum Beispiel Methylmethacrylat-Einheit, und/oder Carbonat-Einheit, zum Beispiel Propylencarbonat-Einheit, und/oder Siloxan-Einheit und/oder Phosphazen-Einheit, und/oder mindestens eine, gegebenenfalls weitere beziehungsweise andere, nicht-ionenleitfähige und/oder nicht-ionenleitende, beispielsweise nichtlithiumionenleitfähige und/oder nicht-lithiumionenleitende, Wiederholungseinheit, zum Beispiel Styrol-Einheit und/oder Alkylen-Einheit, beispielsweise Ethylen-Einheit oder Propylen-Einheit, umfassen oder sein.

Zum Beispiel kann im Rahmen dieser Ausführungsformen das mindestens eine weitere Polymer mindestens ein Poly(2-oxo-[1,3]-dioxolan-4-yl)alkylacrylat, zum Beispiel Poly(2-oxo-[1,3]-dioxolan-4-yl)methylacrylat (PDOA) und/oder Poly(2-oxo-[1,3]-dioxolan-4-yl)butylacrylat (PDOBA), und/oder mindestens ein Poly(2-oxo-[1,3]-dioxolan-4-yl)alkylmethacrylat, zum Beispiel Poly(2-oxo-[1,3]-dioxolan-4-yl)methylmethacrylat (PDOMA) und/oder Poly(2-oxo-[1,3]-dioxolan-4-yl)alkylmethacrylat (PDOBMA), und/oder die mindestens eine weitere Wiederholungseinheit mindestens eine (2-Oxo-[1,3]-dioxolan-4-yl)alkylacrylat-Einheit, zum Beispiel eine (2-Oxo-[1,3]-dioxolan-4-yl)methylacrylat-Einheit (DOA) und/oder eine (2-Oxo-[1,3]-dioxolan-4-yl)butylacrylat-Einheit (DOBA), und/oder mindestens eine (2-Oxo-[1,3]-dioxolan-4-yl)alkylmethacrylat-Einheit, zum Beispiel eine (2-Oxo-[1,3]-dioxolan-4-yl)methylmethacrylat-Einheit (DOMA) und/oder eine (2-Oxo-[1,3]-dioxolan-4-yl)alkylmethacrylat-Einheit (DOBMA), umfassen oder sein.

Beispielsweise kann das Polymer und/oder der Polymerelektrolyt, bezogen auf das Gesamtgewicht des Polymers und/oder bezogen auf das Polymer-Gesamtgewicht, beispielsweise des Elektrolyten, ≥ 0,1 Gew.-%, insbesondere ≥ 0,2 Gew.-%, zum Beispiel ≥ 0,5 Gew.-%, beispielsweise bis ≤ 100 Gew.-%, insbesondere im Fall eines Homopolymers, und beispielsweise bis ≤ 30 Gew.-%, zum Beispiel bis ≤ 15 Gew.-%, beispielsweise bis ≤ 10 Gew.-%, insbesondere im Fall eines Co-Polymers, an mit der mindestens einen kovalent gebundenen Gruppe ausgestatteten Wiederholungseinheiten, insbesondere welche mindestens einen Dreiring und/oder Vierring und/oder mindestens eine Doppelbindung und/oder mindestens eine Dreifachbindung umfassen, umfassen.

In einer Ausgestaltung ist das Polymer mit der mindestens einen kovalent gebundenen Gruppe durch radikalische Polymerisation mindestens eines Monomers mit mindestens einer vorstehend erläuterten, kovalent gebundenen Gruppe, insbesondere welche mindestens einen Dreiring und/oder Vierring und/oder mindestens eine Doppelbindung und/oder mindestens eine Dreifachbindung umfasst, ausgebildet beziehungsweise erhältlich beziehungsweise hergestellt. Insbesondere kann das Polymer mit der mindestens einen kovalent gebundenen Gruppe durch ein später erläutertes erfindungsgemäßes Verfahren hergestellt sein. Das mindestens eine Monomer mit der mindestens einen kovalent gebundenen Gruppe kann beispielsweise mindestens einen Allylether und/oder mindestens ein Acrylat und/oder mindestens ein Methacrylat, zum Beispiel Allylglycidylether und/oder Glycidylacrylat und/oder Glycidylmethacrylat und/oder 2-Cyanoethylacrylat und/oder 2-Cyanoethylmethacrylat, umfassen oder sein. Das Polymer mit der mindestens einen kovalent gebundenen Gruppe kann dabei zum Beispiel auch durch radikalische Co-Polymerisation mit mindestens einem weiteren Monomer ausgebildet beziehungsweise erhältlich beziehungsweise hergestellt sein. Beispielsweise kann dabei das mindestens eine weitere Monomer mindestens ein, gegebenenfalls weiteres beziehungsweise anderes, ionenleitfähiges und/oder ionenleitendes, beispielsweise lithiumionenleitfähiges und/oder lithiumionenleitendes, Monomer, beispielsweise mindestens ein, gegebenenfalls weiteres beziehungsweise anderes, Acrylat und/oder mindestens ein, gegebenenfalls weiteres beziehungsweise anderes, Methacrylat und/oder mindestens einen, gegebenenfalls weiteren beziehungsweise anderen, Allylether, zum Beispiel mindestens ein (2-Oxo-[1,3]-dioxolan-4-yl)alkylacrylat, wie (2-Oxo-[1,3]-dioxolan-4-yl)methylacrylat (DOA) und/oder (2-Oxo-[1,3]-dioxolan-4-yl)butylacrylat (DOBA), und/oder mindestens ein (2-Oxo-[1,3]-dioxolan-4-yl)alkylmethacrylat, wie (2-Oxo-[1,3]-dioxolan-4-yl)methylmethacrylat (DOMA) und/oder (2-Oxo-[1,3]-dioxolan-4-yl)alkylmethacrylat (DOBMA), und/oder mindestens ein, gegebenenfalls weiteres beziehungsweise anderes, beispielsweise mechanisch stabilisierendes, Monomer, zum Beispiel Styrol, umfassen oder sein.

Das Polymer kann weiterhin mindestens ein Leitsalz, insbesondere mindestens ein Lithium-Leitsalz, zum Beispiel mindestens ein im Zusammenhang mit dem erfindungsgemäßen Elektrolyten erläutertes Leitsalz, umfassen. So kann vorteilhafterweise ein Polymerelektrolyt ausgebildet werden.

Das Polymer kann darüber hinaus wie das mindestens eine, im Zusammenhang mit dem erfindungsgemäßen Elektrolyten ausführlich erläuterte, Polymer mit der mindestens einen kovalent gebundenen Gruppe, insbesondere welche mindestens einen Dreiring und/oder Vierring und/oder mindestens eine Doppelbindung und/oder mindestens eine Dreifachbindung umfasst, ausgestaltet sein.

Hinsichtlich weiterer technischer Merkmale und Vorteile des erfindungsgemäßen Polymers wird hiermit explizit auf die Erläuterungen im Zusammenhang mit dem erfindungsgemäßen Elektrolyten, dem erfindungsgemäßen Verfahren, der erfindungsgemäßen Funktionsschicht und der erfindungsgemäßen Zelle sowie auf die Figuren, die Figurenbeschreibung und die Ausführungsbeispiele verwiesen.

Ein weiterer Gegenstand der Erfindung ist ein Verfahren zur Herstellung eines Elektrolyten, insbesondere Polymerelektrolyten, und/oder Polymers, insbesondere zur Ausbildung eines Polymerelektrolyten, insbesondere zur Herstellung eines erfindungsgemäßen Elektrolyten, insbesondere Polymerelektrolyten, und/oder eines erfindungsgemäßen Polymers und/oder einer später erläuterten erfindungsgemäßen Funktionsschicht und/oder einer später erläuterten erfindungsgemäßen Zelle.

In dem Verfahren kann insbesondere mindestens eine Verbindung mit mindestens einem Dreiring und/oder Vierring und/oder mit mindestens einer Doppelbindung und/oder mit mindestens einer Dreifachbindung, insbesondere mindestens ein Polymer mit mindestens einer kovalent gebundenen Gruppe, welche mindestens einen Dreiring und/oder Vierring und/oder mindestens eine Doppelbindung und/oder mindestens eine Dreifachbindung umfasst, und/oder mindestens ein Additiv mit mindestens einem Dreiring und/oder Vierring und/oder mit mindestens einer Doppelbindung und/oder mit mindestens einer Dreifachbindung, bereitgestellt werden.

Insbesondere kann in dem Verfahren mindestens ein Monomer mit mindestens einer vorstehend erläuterten, kovalent gebundenen Gruppe, welche mindestens einen Dreiring und/oder Vierring und/oder mindestens eine Doppelbindung und/oder mindestens eine Dreifachbindung umfasst, durch radikalische Polymerisation, insbesondere in Gegenwart mindestens eines Radikalstarters, wie Azobis(isobutyronitril) (AIBN), polymerisiert werden. So kann vorteilhafterweise ein Polymer mit mindestens einer kovalent gebundenen Gruppe, welche mindestens einen Dreiring und/oder Vierring und/oder mindestens eine Doppelbindung und/oder mindestens eine Dreifachbindung umfasst, auf einfache Weise bereitgestellt werden.

Das mindestens eine Monomer mit der mindestens einen kovalent gebundenen Gruppe kann dabei beispielsweise mindestens einen Allylether und/oder mindestens ein Acrylat und/oder mindestens ein Methacrylat, zum Beispiel Allylglycidylether und/oder Glycidylacrylat und/oder Glycidylmethacrylat und/oder 2-Cyanoethylacrylat und/oder 2-Cyanoethylmethacrylat, umfassen oder sein. Bei einer radikalischen Polymerisation eines Allylethers mit mindestens einer kovalent gebundenen Gruppe, beispielsweise von Allylglycidylether, kann insbesondere eine Wiederholungseinheit mit mindestens kovalent gebundenen Gruppe, beispielsweise mit einer kovalent gebundenen Oxiran-Gruppe, ausgebildet werden, welche eine Propylenoxid-Einheit als Polymerrücken bildende Einheit aufweist.

Das mindestens eine Monomer mit der mindestens einen kovalent gebundenen Gruppe kann beispielsweise auch mit mindestens einem weiteren Monomer durch radikalische Polymerisation polymerisiert, insbesondere co-polymerisiert, werden. Das mindestens eine weitere Monomer kann dabei zum Beispiel mindestens ein, gegebenenfalls weiteres beziehungsweise anderes, ionenleitfähiges und/oder ionenleitendes, beispielsweise lithiumionenleitfähiges und/oder lithiumionenleitendes, Monomer, beispielsweise mindestens ein, gegebenenfalls weiteres beziehungsweise anderes, Acrylat und/oder mindestens ein, gegebenenfalls weiteres beziehungsweise anderes, Methacrylat und/oder mindestens einen, gegebenenfalls weiteren beziehungsweise anderen, Allylether, zum Beispiel mindestens ein (2-Oxo-[1,3]-dioxolan-4-yl)alkylacrylat, wie (2-Oxo-[1,3]-dioxolan-4-yl)methylacrylat (DOA) und/oder (2-Oxo-[1,3]-dioxolan-4-yl)butylacrylat (DOBA), und/oder mindestens ein (2-Oxo-[1,3]-dioxolan-4-yl)alkylmethacrylat, wie (2-Oxo-[1,3]-dioxolan-4-yl)methylmethacrylat (DOMA) und/oder (2-Oxo-[1,3]-dioxolan-4-yl)alkylmethacrylat (DOBMA), und/oder mindestens ein, gegebenenfalls weiteres beziehungsweise anderes, beispielsweise mechanisch stabilisierendes, Monomer, zum Beispiel Styrol, umfassen oder sein.

Beispielsweise kann in dem Verfahren die mindestens eine Verbindung mit dem mindestens einen Dreiring und/oder Vierring und/oder mit der mindestens einen Doppelbindung und/oder mit der mindestens einen Dreifachbindung, beispielsweise das (mindestens eine), insbesondere aus dem mindestens einen Monomer mit der mindestens einen kovalent gebundenen Gruppe ausgebildete, Polymer beziehungsweise Co-Polymer mit der mindestens einen kovalent gebundenen Gruppe, welche mindestens einen Dreiring und/oder Vierring und/oder mindestens eine Doppelbindung und/oder mindestens eine Dreifachbindung umfasst, und/oder das mindestens ein Additiv mit dem mindestens einen Dreiring und/oder Vierring und/oder mit der mindestens einen Doppelbindung und/oder mit der mindestens einen Dreifachbindung, mit mindestens einem Leitsalz, beispielsweise Lithium-Leitsalz, und/oder mit mindestens einem Katalysator zur Katalyse einer Additionsreaktion an die mindestens eine Verbindung gemischt werden. Durch Mischen des (mindestens einen), insbesondere aus dem mindestens einen Monomer mit der mindestens einen kovalent gebundenen Gruppe ausgebildeten, Polymers beziehungsweise Co-Polymers mit der mindestens einen kovalent gebundenen Gruppe, welche mindestens einen Dreiring und/oder Vierring und/oder mindestens eine Doppelbindung und/oder mindestens eine Dreifachbindung umfasst, mit dem mindestens einen Leitsalz kann dabei aus dem Polymer ein Polymerelektrolyt ausgebildet werden.

Aus der Mischung kann dann eine, insbesondere ionenleitende, beispielsweise lithiumionenleitende, Schicht, zum Beispiel Funktionsschicht, für eine elektrochemische Zelle, insbesondere für eine Batteriezelle, beispielsweise für eine Lithium-Batterie- und/oder -Zelle, zum Beispiel für eine Lithium-Metall- und/oder Lithium-Ionen-Batterie- und/oder -Zelle, und/oder für eine Brennstoffzelle und/oder für eine Elektrolysezelle, ausgebildet werden. Die Funktionsschicht kann (dann) in beziehungsweise zu einer, insbesondere derartigen, Zelle verbaut werden.

Insgesamt kann so vorteilhafterweise die Leistung und/oder Lebensdauer und/oder Sicherheit einer damit ausgestatteten Zelle gesteigert werden.

Hinsichtlich weiterer technischer Merkmale und Vorteile des erfindungsgemäßen Verfahrens wird hiermit explizit auf die Erläuterungen im Zusammenhang mit dem erfindungsgemäßen Elektrolyten, dem erfindungsgemäßen Polymer, der erfindungsgemäßen Funktionsschicht und der erfindungsgemäßen Zelle sowie auf die Figuren, die Figurenbeschreibung und die Ausführungsbeispiele verwiesen.

Ein weiterer Gegenstand der Erfindung ist eine, insbesondere ionenleitende, beispielsweise lithiumionenleitende, Funktionsschicht für eine elektrochemische Zelle, insbesondere für eine Batteriezelle, beispielsweise für eine Lithium-Batterie- und/oder -Zelle, zum Beispiel für eine Lithium-Metall- und/oder Lithium-Ionen-Batterie- und/oder -Zelle, und/oder für eine Brennstoffzelle und/oder für eine Elektrolysezelle, welche mindestens einen erfindungsgemäßen Elektrolyten und/oder mindestens einen erfindungsgemäßen Polymerelektrolyten und/oder mindestens ein erfindungsgemäßes Polymer umfasst.

Durch eine derartige Funktionsschicht kann vorteilhafterweise die Leistung und/oder Lebensdauer und/oder Sicherheit einer damit ausgestatteten Zelle gesteigert werden.

Beispielsweise kann die Funktionsschicht aus dem erfindungsgemäßen Elektrolyten und/oder aus dem erfindungsgemäßen Polymerelektrolyten ausgebildet sein.

Insbesondere kann die Funktionsschicht zur Anordnung zwischen einer negativen Elektrode und einer positiven Elektrode einer/der elektrochemischen Zelle, beispielsweise Batteriezelle und/oder Brennstoffzelle und/oder Elektrolysezelle, ausgelegt sein.

Die, insbesondere ionenleitende, beispielsweise lithiumionenleitende, Funktionsschicht kann gegebenenfalls auch als Elektrolytschicht bezeichnet werden. Zum Beispiel kann die Funktionsschicht eine Separatorschicht und/oder ein Bestandteil eines Separators und/oder ein Separator, beispielsweise einer Batteriezelle, und/oder eine Elektrolytmembran, beispielsweise einer Brennstoffzelle und/oder Elektrolysezelle, sein.

Die, insbesondere ionenleitende, beispielsweise lithiumionenleitende, Funktionsschicht kann beispielsweise durch ein erfindungsgemäßes Verfahren hergestellt sein.

Hinsichtlich weiterer technischer Merkmale und Vorteile der erfindungsgemäßen Funktionsschicht wird hiermit explizit auf die Erläuterungen im Zusammenhang mit dem erfindungsgemäßen Elektrolyten, dem erfindungsgemäßen Polymer, dem erfindungsgemäßen Verfahren und der erfindungsgemäßen Zelle sowie auf die Figuren, die Figurenbeschreibung und die Ausführungsbeispiele verwiesen.

Ferner betrifft die Erfindung eine elektrochemische Zelle, insbesondere eine Batteriezelle, beispielsweise eine Lithium-Batterie- und/oder -Zelle, zum Beispiel eine Lithium-Metall- und/oder Lithium-Ionen-Batterie- und/oder -Zelle, und/oder eine Brennstoffzelle und/oder eine Elektrolysezelle, welche einen erfindungsgemäßen Elektrolyten und/oder mindestens einen erfindungsgemäßen Polymerelektrolyten und/oder mindestens ein erfindungsgemäßes Polymer und/oder mindestens eine erfindungsgemäße Funktionsschicht umfasst.

Eine derartige Zelle kann vorteilhafterweise eine gesteigerte Leistung und/oder Lebensdauer und/oder Sicherheit aufweisen.

Die Zelle kann insbesondere eine negative Elektrode und eine positive Elektrode umfassen. Im Fall einer Batteriezelle beziehungsweise Brennstoffzelle kann die negative Elektrode auch als Anode und die positive Elektrode auch als Kathode bezeichnet werden. Im Fall einer Elektrolysezelle kann die negative Elektrode auch als Kathode und die positive Elektrode auch als Anode bezeichnet werden.

Zwischen der negativen Elektrode und der positiven Elektrode kann dabei insbesondere mindestens eine ionenleitende, beispielsweise lithiumionenleitende, Schicht angeordnet sein. Die mindestens eine ionenleitende Schicht kann auch als Elektrolytschicht bezeichnet werden. Insbesondere kann die mindestens eine ionenleitende Schicht als ionenleitende Trennschicht zwischen der negativen Elektrode und der positiven Elektrode dienen. Im Fall einer Batteriezelle kann die mindestens eine ionenleitende Schicht daher auch als Separatorschicht und/oder Bestandteil eines Separators und/oder Separator bezeichnet werden. Im Fall einer Brennstoffzelle und/oder Elektrolysezelle kann die mindestens eine ionenleitende Schicht auch als Elektrolytmembran und/oder Bestandteil einer Elektrolytmembran bezeichnet werden.

Beispielsweise kann die mindestens eine ionenleitende Schicht und/oder die negative Elektrode und/oder die positive Elektrode mindestens einen erfindungsgemäßen Elektrolyten, insbesondere Polymerelektrolyten, und/oder mindestens ein erfindungsgemäßes Polymer und/oder mindestens eine erfindungsgemäße Funktionsschicht umfassen.

Insbesondere kann die mindestens eine ionenleitende Schicht mindestens einen erfindungsgemäßen Elektrolyten, insbesondere Polymerelektrolyten, und/oder mindestens ein erfindungsgemäßes Polymer und/oder mindestens eine erfindungsgemäße Funktionsschicht umfassen oder sein.

Der mindestens eine erfindungsgemäße Elektrolyt kann insbesondere mindestens einen Polymerelektrolyten, insbesondere mindestens einen aus dem mindestens einen Polymer mit der mindestens einen kovalent gebundenen Gruppe, insbesondere in Kombination mit mindestens einem Leitsalz, zum Beispiel Lithium-Leitsalz, ausgebildeten Polymerelektrolyten umfassen und/oder ein Polymerelektrolyt sein.

Das mindestens eine erfindungsgemäße Polymer kann insbesondere - beispielsweise in Kombination mit mindestens einem Leitsalz, zum Beispiel Lithium-Leitsalz - einen, insbesondere funktionalisierten, Polymerelektrolyten ausbilden.

Die Zelle kann beispielsweise als Feststoffzelle, insbesondere als polymerbasierte und/oder polymerelektrolyt-basierte Feststoffzelle, ausgestaltet sein.

Die mindestens eine Funktionsschicht kann insbesondere zwischen der negativen Elektrode und der positiven Elektrode angeordnet sein.

Im Rahmen einer Ausführungsform umfasst die Zelle zwischen der mindestens einen Funktionsschicht und der negativen Elektrode eine weitere, insbesondere zur negativen Elektrode benachbarte, ionenleitende, beispielsweise lithiumionenleitende, Schicht. So kann vorteilhafterweise eine direkte Wechselwirkungen zwischen den Komponenten der Funktionsschicht mit Komponenten der negativen Elektrode vermeiden und auf diese Weise beispielsweise die Leistung und/oder Lebensdauer und/oder Sicherheit der Zelle weiter erhöht werden.

Im Rahmen einer weiteren, alternativen oder zusätzlichen Ausführungsform umfasst die Zelle zwischen der mindestens einen Funktionsschicht und der positiven Elektrode eine weitere, insbesondere zur positiven Elektrode benachbarte, ionenleitende, beispielsweise lithiumionenleitende, Schicht. So kann vorteilhafterweise eine direkte Wechselwirkungen zwischen den Komponenten der Funktionsschicht mit Komponenten der positiven Elektrode vermeiden und auf diese Weise beispielsweise die Leistung und/oder Lebensdauer und/oder Sicherheit der Zelle weiter erhöht werden.

Insbesondere kann die Zelle zwischen der mindestens einen Funktionsschicht und der negativen Elektrode eine weitere, insbesondere zur negativen Elektrode benachbarte, ionenleitende, beispielsweise lithiumionenleitende, Schicht und zwischen der mindestens einen Funktionsschicht und der positiven Elektrode eine weitere, insbesondere zur positiven Elektrode benachbarte, ionenleitende, beispielsweise lithiumionenleitende, Schicht umfassen. Dies kann besonders vorteilhaft sein, beispielsweise um eine direkte Wechselwirkungen zwischen den Komponenten der Funktionsschicht mit Komponenten sowohl der negativen Elektrode als auch der positiven Elektrode zu vermeiden und auf diese Weise beispielsweise die Leistung und/oder Lebensdauer und/oder Sicherheit der Zelle weiter zu erhöhen.

Im Rahmen einer weiteren, alternativen Ausführungsform ist die mindestens eine ionenleitende Schicht der Zelle durch die mindestens eine Funktionsschicht ausgebildet und/oder zwischen der negativen Elektrode und der positiven Elektrode lediglich eine (einzige), insbesondere erfindungsgemäße, Funktionsschicht vorgesehen. Dies kann, insbesondere im Fall einer Kompatibilität der Komponenten der Funktionsschicht mit den Komponenten der negativen Elektrode und der positiven Elektrode, besonders vorteilhaft sein, beispielsweise da so der Materialeinsatz minimiert und dadurch die spezifische Energie der Zelle erhöht werden kann.

Im Rahmen einer weiteren, alternativen Ausführungsform umfasst die Zelle zwischen einer weiteren, ionenleitenden, beispielsweise lithiumionenleitenden, Schicht und der negativen Elektrode eine, insbesondere zur negativen Elektrode benachbarte, Funktionsschicht und zwischen der weiteren, ionenleitenden, beispielsweise lithiumionenleitenden, Schicht und der positiven Elektrode eine, insbesondere zur positiven Elektrode benachbarte, weitere Funktionsschicht. Durch die jeweils zur negativen Elektrode beziehungsweise zur positiven Elektrode benachbarten Funktionsschichten können an der negativen Elektrode beziehungsweise an der positiven Elektrode vorliegende oder entstehende Schadstoffe direkt abgefangen werden.

Im Rahmen einer weiteren Ausführungsform ist die weitere ionenleitende Schicht beziehungsweise sind die weiteren ionenleitenden Schichten (jeweils) eine Festelektrolytschicht und/oder eine, insbesondere poröse, Schicht, welche mindestens einen Flüssigelektrolyten umfasst.

Die Festelektrolytschicht kann dabei zum Beispiel aus mindestens einem, insbesondere weiteren beziehungsweise anderen, Polymerelektrolyten, zum Beispiel auf der Basis mindestens eines ionenleitfähigen und/oder ionenleitenden, beispielsweise lithiumionenleitfähigen und/oder lithiumionenleitenden, Polymers, zum Beispiel von Polyethylenoxid, und den zu leitenden Ionen, beispielsweise Lithiumionen, gegebenenfalls in Form mindestens eines darin gelösten Leitsalzes, beispielsweise Lithium-Leitsalzes, und/oder aus mindestens einem anorganischen, beispielsweise keramischen und/oder glasartigen, Ionenleitern, beispielsweise Lithium-Ionenleiter, ausgebildet sein.

Die, insbesondere poröse, Schicht kann dabei zum Beispiel eine poröse, mit mindestens einem Flüssigelektrolyten getränkte Schicht, zum Beispiel Polymerschicht, sein.

Die negative Elektrode kann insbesondere mindestens ein elektrochemisch aktives Material, zum Beispiel im Fall einer Batteriezelle, beispielsweise einer Lithium-Batterie- und/oder -Zelle, metallisches Lithium, zum Beispiel in Form von Lithiummetall oder einer Lithiummetalllegierung, und/oder mindestens ein Lithium-Insertions- und/oder -Interkalationsmaterial, beispielsweise Kohlenstoff, zum Beispiel in Form von Graphit und/oder amorphem Kohlenstoff, und/oder Silicium, beispielsweise in Form einer Legierung, zum Beispiel einer Lithium-Silicium-Legierung, und/oder zum Beispiel im Fall einer Brennstoffzelle, beispielsweise einer Polymer-Elektrolyt-Membran-Brennstoffzelle, metallisches Platin auf und/oder an Kohlenstoff, und/oder zum Beispiel im Fall einer Elektrolysezelle, beispielsweise einer SPE-Wasserstoffelektrolyse, ein Rutheniumoxyhydrat und/oder metallisches Iridium auf und/oder an Kohlenstoff, umfassen.

Die positive Elektrode kann insbesondere ebenfalls mindestens ein elektrochemisch aktives Material, zum Beispiel im Fall einer Batteriezelle, beispielsweise einer Lithium-Batterie- und/oder -Zelle, mindestens ein Lithium-Insertions- und/oder -Interkalationsmaterial, beispielsweise mindestens ein Schichtoxid und/oder Spinell und/oder Phosphat, und/oder zum Beispiel im Fall einer Brennstoffzelle, beispielsweise einer Polymer-Elektrolyt-Membran-Brennstoffzelle, metallisches Platin auf und/oder an Kohlenstoff, und/oder zum Beispiel im Fall einer Elektrolysezelle, beispielsweise einer SPE-Wasserstoffelektrolyse, metallisches Platin auf und/oder an Kohlenstoff, umfassen.

Die elektrochemische Zelle kann beispielsweise durch ein erfindungsgemäßes Verfahren hergestellt sein.

Die elektrochemische Zelle kann zum Beispiel als Batteriezelle in Batterie, zum beispielsweise einer Primärbatterie und/oder Sekundärbatterie, zum Beispiel für ein Fahrzeug, beispielsweise für ein Hybrid-Fahrzeug und/oder Plug-in-HybridFahrzeuge und/oder Elektrofahrzeug, und/oder für eine Consumeranwendung, wie ein Mobiltelefon beziehungsweise Smartphone und/oder einen Laptop und/oder einen Tabletcomputer und/oder einen persönlichen digitalen Assistenten (PDA), und/oder für ein Elektrowerkzeug und/oder Gartenwerkzeuge, eingesetzt werden.

Hinsichtlich weiterer technischer Merkmale und Vorteile der erfindungsgemäßen Zelle wird hiermit explizit auf die Erläuterungen im Zusammenhang mit dem erfindungsgemäßen Elektrolyten, dem erfindungsgemäßen Polymer, dem erfindungsgemäßen Verfahren und der erfindungsgemäßen Funktionsschicht sowie auf die Figuren, die Figurenbeschreibung und die Ausführungsbeispiele verwiesen.

### Zeichnungen und Ausführungsbeispiele

Weitere Vorteile und vorteilhafte Ausgestaltungen der erfindungsgemäßen Gegenstände werden durch die Zeichnungen und Ausführungsbeispiele veranschaulicht und in der nachfolgenden Beschreibung erläutert. Dabei ist zu beachten, dass die Zeichnungen und Ausführungsbeispiele nur beschreibenden Charakter haben und nicht dazu gedacht sind, die Erfindung in irgendeiner Form einzuschränken. Es zeigen
- Fig. 1: einen schematischen Querschnitt durch eine erste Ausführungsform einer erfindungsgemäßen elektrochemischen Zelle;
- Fig. 2: einen schematischen Querschnitt durch eine zweite Ausführungsform einer erfindungsgemäßen elektrochemischen Zelle;
- Fig. 3: einen schematischen Querschnitt durch eine dritte Ausführungsform einer erfindungsgemäßen elektrochemischen Zelle;
- Fig. 4: einen schematischen Querschnitt durch eine vierte Ausführungsform einer erfindungsgemäßen elektrochemischen Zelle; und
- Fig. 5: einen schematischen Querschnitt durch eine fünfte Ausführungsform einer erfindungsgemäßen elektrochemischen Zelle.

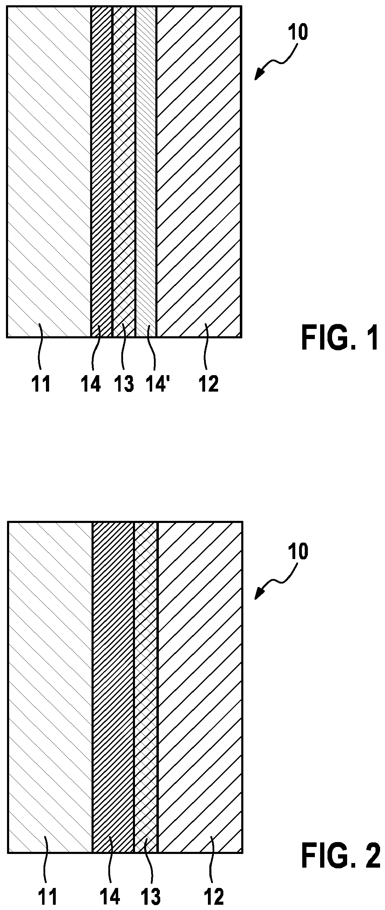

Die Figur 1 bis 5 zeigen unterschiedliche Ausführungsformen von elektrochemischen Zellen 10, insbesondere von Batteriezellen und/oder Brennstoffzellen und/oder Elektrolysezellen, welche jeweils eine negative Elektrode 11, eine positive Elektrode 12 und mindestens eine zwischen der negativen Elektrode 11 und der positiven Elektrode 12 angeordnete ionenleitende Schicht 13,13',14,14' umfassen.

Insbesondere ist dabei zwischen der negativen Elektrode 11 und der positiven Elektrode 12 mindestens eine ionenleitende Funktionsschicht 13,13' angeordnet. Die mindestens eine Funktionsschicht 13,13' umfasst dabei einen Elektrolyten, welcher mindestens eine Verbindung mit mindestens einem Dreiring und/oder Vierring und/oder mit mindestens einer Doppelbindung und/oder mit mindestens einer Dreifachbindung umfasst. Insbesondere kann es sich hierbei um mindestens ein Polymer mit mindestens einer kovalent gebundenen Gruppe, welche mindestens einen Dreiring und/oder Vierring und/oder mindestens eine Doppelbindung und/oder mindestens eine Dreifachbindung umfasst, und/oder um mindestens ein Additiv mit mindestens einem Dreiring und/oder Vierring und/oder mit mindestens einer Doppelbindung und/oder mit mindestens einer Dreifachbindung handeln. Derartige Verbindungen können durch eine Additionsreaktion Schadstoffe beziehungsweise Verunreinigungen der Zelle, wie Kohlenstoffmonoxid (CO), Kohlenstoffdioxid (CO₂), Fluorwasserstoff (HF), Wasserstoff (H₂) und Sauerstoff (O₂), binden und auf diese Weise unschädlich machen, was sich vorteilhaft auf die Leistung, Lebensdauer und/oder Sicherheit der Zelle 10 auswirken kann. Dies kann noch durch Zugabe mindestens eines Katalysators zur Katalyse einer Additionsreaktion an die mindestens eine Verbindung zum Elektrolyten weiter gesteigert werden.

Das mindestens eine Polymer mit der mindestens einen kovalent gebundenen Gruppe kann zum Beispiel ionenleitfähig und/oder ionenleitend, beispielsweise lithiumionenleitfähig und/oder lithiumionenleitend, sein und selbst den Elektrolyten in Form eines Polymerelektrolyten ausbilden. Dies ermöglicht die mindestens eine Funktionsschicht 13,13' aus dem aus dem Polymer ausgebildeten Polymerelektrolyten selbst auszubilden.

Es ist jedoch ebenso möglich, die mindestens eine Verbindung, beispielsweise das mindestens eine Polymer mit der mindestens einen kovalent gebundenen Gruppe und/oder das mindestens eine Additiv, mit mindestens einem, gegebenenfalls weiteren beziehungsweise anderen, Festelektrolyten und/oder mit mindestens einem Flüssigelektrolyten zu versetzen, oder umgekehrt, mindestens einen, gegebenenfalls weiteren beziehungsweise anderen, Festelektrolyten und/oder mindestens einen Flüssigelektrolyten mit der mindestens einen Verbindung, beispielsweise mit dem mindestens einen Polymer mit der mindestens einen kovalent gebundenen Gruppe und/oder mit dem mindestens einen Additiv, zu versetzen. Zum Beispiel kann das mindestens eine Polymer mit der mindestens einen kovalent gebundenen Gruppe mit dem mindestens einen anderen Festelektrolyten und/oder mit dem mindestens einen Flüssigelektrolyten gefüllt sein.

Die in den Figuren 1 bis 4 gezeigten Ausführungsformen veranschaulichen, dass durch die mindestens eine Funktionsschicht 13,13' eine oder mehrere weitere ionenleitenden Schichten 14,14'. beispielsweise Separatorschichten, funktionalisiert werden können. Die weitere/n ionenleitende/n Schicht/en 14,14' kann/können dabei (jeweils) eine Festelektrolytschicht, beispielsweise aus mindestens einem, gegebenenfalls weiteren beziehungsweise anderen, Polymerelektrolyten und/oder aus mindestens einem anorganischen Ionenleitern, oder eine poröse, mit mindestens einem Flüssigelektrolyten getränkte Polymerschicht, zum Beispiel auf Basis von Polyethylen und Polypropylen, sein. Gegebenenfalls kann/können dabei die ionenleitende/n Schichten 14.14' mit der mindestens einen Funktionsschicht 13,13' beschichtet sein.

Im Rahmen der in Figur 1 gezeigten ersten Ausführungsform umfasst die Zelle 10 eine Funktionsschicht 13, wobei sowohl zwischen der Funktionsschicht 13 und der negativen Elektrode 11 eine weitere, insbesondere zur negativen Elektrode 11 benachbarte, ionenleitende Schicht 14 als auch zwischen der Funktionsschicht 13 und der positiven Elektrode 12 eine weitere, insbesondere zur positiven Elektrode 12 benachbarte, ionenleitende Schicht 14' vorgesehen ist.

Im Rahmen der in Figur 2 gezeigten zweiten Ausführungsform umfasst die Zelle 10 ebenfalls eine Funktionsschicht 13, wobei lediglich zwischen der Funktionsschicht 13 und der negativen Elektrode 11 eine weitere, insbesondere zur negativen Elektrode 11 benachbarte, ionenleitende Schicht 14 vorgesehen ist.

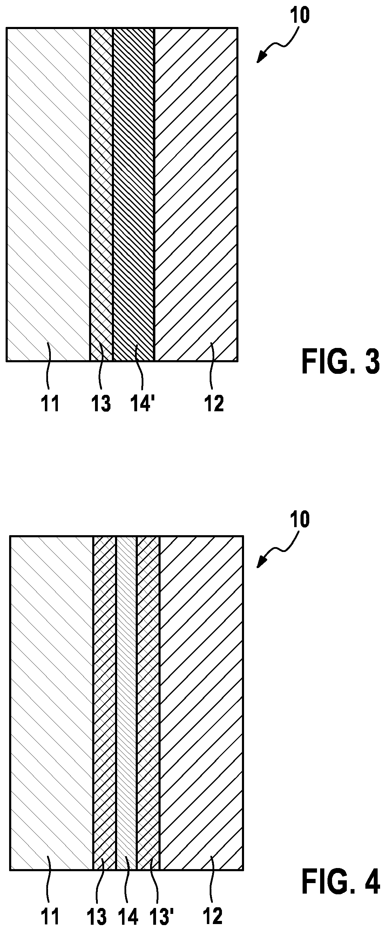

Im Rahmen der in Figur 3 gezeigten dritten Ausführungsform umfasst die Zelle 10 ebenfalls eine Funktionsschicht 13, wobei lediglich zwischen der Funktionsschicht 13 und der positiven Elektrode 12 eine weitere, insbesondere zur positiven Elektrode 12 benachbarte, ionenleitende Schicht 14' vorgesehen ist.

Im Rahmen der in Figur 4 gezeigten vierten Ausführungsform umfasst die Zelle 10 zwei Funktionsschichten 13,13', wobei sowohl zwischen einer weiteren, ionenleitenden Schicht 14 und der negativen Elektrode 11 eine, insbesondere zur negativen Elektrode 11 benachbarte, Funktionsschicht 13 als auch zwischen der weiteren, ionenleitenden Schicht 14 und der positiven Elektrode 12 eine, insbesondere zur positiven Elektrode 12 benachbarte, weitere Funktionsschicht 13' vorgesehen ist.

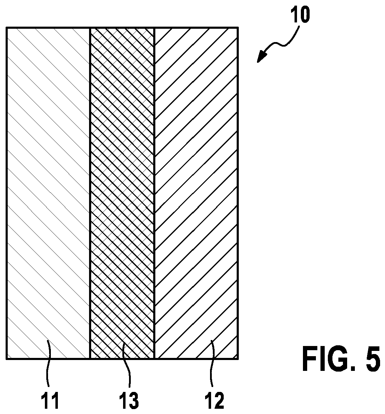

Die in den Figuren 5 gezeigte Ausführungsform veranschaulicht, dass die Funktionsschicht 13 auch selbst als Separatorschicht beziehungsweise Separator beziehungsweise Elektrolytmembran dienen kann, so dass zwischen der negativen Elektrode 11 und der positiven Elektrode 12 lediglich eine Funktionsschicht 13 vorgesehen werden kann. Das mindestens eine Polymer kann dabei insbesondere - beispielsweise unter Zugabe mindestens eines Leitsalzes, zum Beispiel Lithium-Leitsalzes, einen funktionalisierten Polymerelektrolyten ausbilden.

### Ausführungsbeispiel 1: Funktionsschicht auf Basis eines Copolymers mit kovalent daran gebundenen Oxiran-Gruppen

Allylglycidylether (AGE) und (2-Oxo-1,3-dioxolan-4-yl)methylmethacrylat (DOMA) werden in Acetonitril bei etwa 70°C mit Azobis(isobutyronitril) (AlBN) als Polymerisationsstarter, insbesondere radikalisch, zu einem PAGE-PDOMA-Copolymer aus AGE-Wiederholungseinheiten mit kovalent gebundenen Oxiran-Gruppen, und insbesondere einer durch Polymerisation der Allyl-Funktion des Allylglycidylethers ausgebildeten Polymerrücken bildenden Einheit, welche auch als Propylenoxid-Einheit bezeichnet werden kann, und aus DOMA-Wiederholungseinheiten mit ionenleitfähigen funktionellen Gruppen, insbesondere in Form von Ethylencarbonat-Gruppen, polymerisiert. Der Anteil der AGE-Wiederholungseinheiten kann dabei, bezogen auf das Gesamtgewicht des Copolymers, etwa 5 Gew.-% betragen. Das resultierende Copolymer kann dann unter Vakuum getrocknet werden, beispielsweise um verbliebene Edukte, Nebenprodukte und/oder andere Reaktionsprodukte zu entfernen. Dann wird das Copolymer mit Lithium-Bis(trifluormethansulfonyl)imid (LiTFSI) und Platin auf Kohlenstoff-Partikeln in Acetonitril dispergiert und in einer dünnen Schicht auf einen Teflon-Träger gerakelt und unter Vakuum getrocknet. Bezogen auf das Gesamtgewicht des, insbesondere aus dem Copolymer, Lithium-Bis(trifluormethansulfonyl)imid und Platin-Kohlenstoff-Partikeln, ausgebildeten Elektrolyten, kann dabei der Anteil von Lithium-Bis(trifluormethansulfonyl)imid etwa 15 Gew.-% betragen. Der Anteil an Platin auf Kohlenstoffpartikeln kann dabei beispielsweise etwa 2,5 Mol-%, bezogen auf den stöchiometrischen Anteil des eingesetzten Allylglycidylethers (AGE), betragen. Die erhaltene Funktionsschicht wird vom Teflon-Träger gelöst und zwischen einer Lithiummetall-Anode mit ionenleitenden Beschichtung aus Polyethylenoxid (PEO) und Lithium-Bis(trifluormethansulfonyl)imid (LiTFSI) und einer Lithium-Eisen-Phosphat (LFP) basierten Komposit-Kathode gestapelt und zu einer Lithiummetall-Zelle verbaut.

### Ausführungsbeispiel 2: Funktionsschicht auf Basis eines Copolymers mit kovalent daran gebundenen Oxiran-Gruppen

Glycidylmethacrylat (GMA) und (2-Oxo-1,3-dioxolan-4-yl)methylmethacrylat (DOMA) werden in Acetonitril bei etwa 70°C mit Azobis(isobutyronitril) (AIBN) als Polymerisationsstarter, insbesondere radikalisch, zu einem PGMA-PDOMA-Copolymer aus GMA-Wiederholungseinheiten mit kovalent gebundenen Oxiran-Gruppen und DOMA-Wiederholungseinheiten mit ionenleitfähigen funktionellen Gruppen, insbesondere in Form von Ethylencarbonat-Gruppen, polymerisiert. Der Anteil der GMA-Wiederholungseinheiten kann dabei, bezogen auf das Gesamtgewicht des Copolymers, etwa 5 Gew.-% betragen. Das resultierende Copolymer kann dann unter Vakuum getrocknet werden, beispielsweise um verbliebene Edukte, Nebenprodukte und/oder andere Reaktionsprodukte zu entfernen. Dann wird das Copolymer mit Lithium-Bis(trifluormethansulfonyl)imid (LiTFSI) und Platin auf Kohlenstoff-Partikeln in Acetonitril dispergiert und in einer dünnen Schicht auf einen Teflon-Träger gerakelt und unter Vakuum getrocknet. Bezogen auf das Gesamtgewicht des, insbesondere aus dem Copolymer, Lithium-Bis(trifluormethansulfonyl)imid und Platin-Kohlenstoff-Partikeln, ausgebildeten Elektrolyten, kann dabei der Anteil von Lithium-Bis(trifluormethansulfonyl)imid etwa 15 Gew.-% betragen. Der Anteil an Platin auf Kohlenstoffpartikeln kann dabei beispielsweise etwa 2,5 Mol-%, bezogen auf den stöchiometrischen Anteil des eingesetzten Glycidylmethacrylats (GMA), betragen. Die erhaltene Funktionsschicht wird vom Teflon-Träger gelöst und zwischen einer Lithiummetall-Anode mit ionenleitenden Beschichtung aus Polyethylenoxid (PEO) und Lithium-Bis(trifluormethansulfonyl)imid (LiTFSI) und einer Lithium-Eisen-Phosphat (LFP) basierten Komposit-Kathode gestapelt und zu einer Lithiummetall-Zelle verbaut.

### Ausführungsbeispiel 3: Funktionsschicht auf Basis eines Homopolymers mit kovalent daran gebundenen Nitril-Gruppen

2-Cyanoethylacrylat (CEA) wird zu dem Homopolymer Poly(2-cyanoethylacrylat) (PCEA) auf Basis von CEA-Wiederholungseinheiten mit kovalent gebundenen Nitril-Gruppen polymerisiert und in Acetonitril gelöst mit Lithium-Bis(trifluormethansulfonyl)imid (LiTFSI) und Platin auf Kohlenstoff-Partikeln dispergiert und in einer dünnen Schicht auf einen Teflon-Träger gerakelt und unter Vakuum getrocknet. Bezogen auf das Gesamtgewicht des, insbesondere aus dem Poly(2-cyanoethylacrylat), Lithium-Bis(trifluormethansulfonyl)imid und Platin-Kohlenstoff-Partikeln, ausgebildeten Elektrolyten kann dabei der Anteil von Lithium-Bis(trifluormethansulfonyl)imid etwa 15 Gew.-% betragen. Der Anteil an Platin auf Kohlenstoffpartikeln kann dabei beispielsweise etwa 2,5 Mol-%, bezogen auf den stöchiometrischen Anteil des Poly(2-cyanoethylacrylats) (PCEA), welcher als Schadstoffbinder dienen soll und zum Beispiel bei etwa 5 % der Wiederholungseinheiten liegen kann, betragen. Die erhaltene Funktionsschicht wird vom Teflon-Träger gelöst und zwischen einer Lithiummetall-Anode mit ionenleitenden Beschichtung aus Polyethylenoxid (PEO) und Lithium-Bis(trifluormethansulfonyl)imid (LiTFSI) und einer Lithium-Eisen-Phosphat (LFP) basierten Komposit-Kathode gestapelt und zu einer Lithiummetall-Zelle verbaut.

## Patentansprüche

1. Elektrolyt für eine elektrochemische Zelle (10), insbesondere für eine Batteriezelle und/oder Brennstoffzelle und/oder Elektrolysezelle, umfassend
mindestens eine Verbindung mit mindestens einem Dreiring und/oder Vierring und/oder mit mindestens einer Doppelbindung und/oder mit mindestens einer Dreifachbindung und
mindestens einen Katalysator zur Katalyse einer Additionsreaktion an die mindestens eine Verbindung.

2. Elektrolyt nach Anspruch 1,
wobei der Elektrolyt mindestens ein Polymer mit mindestens einer kovalent gebundenen Gruppe umfasst, wobei die mindestens eine kovalent gebundene Gruppe mindestens einen Dreiring und/oder Vierring und/oder mindestens eine Doppelbindung und/oder mindestens eine Dreifachbindung umfasst, und/oder
wobei der Elektrolyt mindestens ein Additiv mit mindestens einem Dreiring und/oder Vierring und/oder mit mindestens einer Doppelbindung und/oder mit mindestens einer Dreifachbindung umfasst.

3. Elektrolyt nach Anspruch 1 oder 2, wobei die mindestens eine Verbindung, insbesondere die mindestens eine kovalent gebundene Gruppe des mindestens einen Polymers und/oder das mindestens eine Additiv, mindestens einen Dreiring und/oder Vierring und/oder mindestens eine Kohlenstoff-Kohlenstoff-Doppelbindung und/oder mindestens eine Kohlenstoff-Sauerstoff-Doppelbindung und/oder mindestens eine Kohlenstoff-Kohlenstoff-Dreifachbindung und/oder mindestens eine Kohlenstoff-Stickstoff-Dreifachbindung umfasst.

4. Elektrolyt nach einem der Ansprüche 1 bis 3, wobei die mindestens eine Verbindung, insbesondere die mindestens eine kovalent gebundene Gruppe des mindestens einen Polymers und/oder das mindestens eine Additiv, mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe und/oder mindestens eine Alken-Gruppe und/oder mindestens eine Carbonyl-Gruppe und/oder mindestens eine Alkin-Gruppe und/oder mindestens eine Nitril-Gruppe und/oder mindestens eine Isonitril-Gruppe umfasst.

5. Elektrolyt nach einem der Ansprüche 1 bis 4, wobei die mindestens eine Verbindung, insbesondere die mindestens eine kovalent gebundene Gruppe des mindestens einen Polymers und/oder das mindestens eine Additiv, mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe und/oder mindestens eine Vinyl-Gruppe und/oder mindestens eine Allyl-Gruppe und/oder mindestens eine Alkenylencarbonat-Gruppe, insbesondere mindestens eine Vinylencarbonat-Gruppe, und/oder mindestens eine Alkenylenlacton-Gruppe, insbesondere mindestens eine Vinylenlacton-Gruppe, und/oder mindestens eine Alkenylcarbonat-Gruppe, insbesondere mindestens eine Vinylcarbonat-Gruppe, und/oder mindestens eine Alkenyllacton-Gruppe, insbesondere mindestens eine Vinyllacton-Gruppe, und/oder mindestens eine Nitril-Gruppe und/oder mindestens eine Isonitril-Gruppe umfasst.

6. Elektrolyt nach einem der Ansprüche 1 bis 5, wobei das mindestens eine Polymer ein Polyalkylenoxid, insbesondere ein Polyethylenoxid und/oder Polypropylenoxid, und/oder ein Polyacrylat und/oder ein Polymethacrylat und/oder ein Polyallylether und/oder ein Polymer auf Basis von mindestens einer polymerisierten, mindestens eine Carbonatgruppe umfassenden Wiederholungseinheit, insbesondere ein Polycarbonat, und/oder ein Polymer, welches mindestens eine Polymerrücken bildenden Einheit mit mindestens einer, mindestens eine Carbonatgruppe enthaltenden Seitengruppe umfasst, und/oder ein Polysiloxan und/oder ein Polyphosphazen und/oder ein Polyacrylnitril und/oder ein Polyolefin umfasst oder ist.

7. Elektrolyt nach einem der Ansprüche 1 bis 6,
wobei das mindestens eine Polymer mit der mindestens einen kovalent gebundenen Gruppe ionenleitfähig und/oder ionenleitend, insbesondere lithiumionenleitfähig und/oder lithiumionenleitend, ist und/oder einen Polymerelektrolyten ausbildet, und/oder
wobei der Elektrolyt die mindestens eine Verbindung, insbesondere das mindestens eine Polymer mit mindestens einer kovalent gebundenen Gruppe und/oder das mindestens eine Additiv, und mindestens einen Festelektrolyten und/oder mindestens einen Flüssigelektrolyten umfasst.

8. Elektrolyt nach Anspruch 7,
wobei das mindestens eine Polymer mit der mindestens einen kovalent gebundenen Gruppe ein Co-Polymer aus mindestens einem Polymer mit mindestens einer kovalent gebundenen Gruppe nach einem der Ansprüche 2 bis 7 und aus mindestens einem weiteren Polymer, insbesondere aus mindestens einem weiteren, ionenleitfähigen und/oder ionenleitenden Polymer und/oder aus mindestens einem weiteren, nicht-ionenleitfähigen und/oder nicht-ionenleitenden Polymer, ist, und/oder wobei der Elektrolyt eine Polymermischung umfasst, welche mindestens ein Polymer mit mindestens einer kovalent gebundenen Gruppe nach einem der Ansprüche 2 bis 7 und mindestens ein weiteres Polymer, insbesondere mindestens ein weiteres, ionenleitfähiges und/oder ionenleitendes Polymer und/oder mindestens ein weiteres, nicht-ionenleitfähigen und/oder nicht-ionenleitenden Polymer, umfasst.

9. Elektrolyt nach Anspruch 7 oder 8, wobei die mindestens eine Verbindung, insbesondere das mindestens eine Polymer mit der mindestens einen kovalent gebundenen Gruppe und/oder das mindestens eine Additiv, mit dem mindestens einen Festelektrolyten und/oder mit dem mindestens einen Flüssigelektrolyten gefüllt ist.

10. Elektrolyt nach einem der Ansprüche 2 bis 9, wobei das mindestens eine Polymer mit der mindestens einen kovalent gebundenen Gruppe:
mindestens eine Wiederholungseinheit mit einer kovalent gebundenen Oxiran-Gruppe der allgemeinen chemischen Formel: 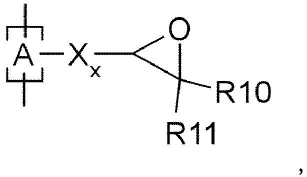 und/oder
mindestens eine Wiederholungseinheit mit einer kovalent gebundenen Oxetan-Gruppe der allgemeinen chemischen Formel: 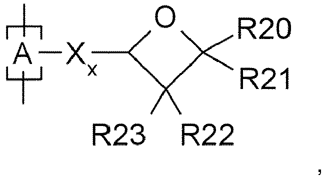 und/oder
mindestens eine Wiederholungseinheit mit einer kovalent gebundenen Cyclopropan-Gruppe der allgemeinen chemischen Formel: 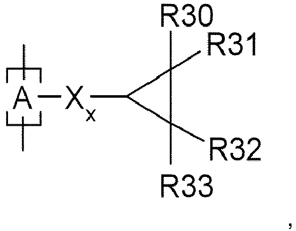 und/oder
mindestens eine Wiederholungseinheit mit einer kovalent gebundenen Cyclobutan-Gruppe der allgemeinen chemischen Formel: 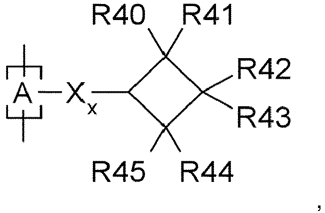 und/oder
mindestens eine Wiederholungseinheit mit einer kovalent gebundenen Alken-Gruppe der allgemeinen chemischen Formel: 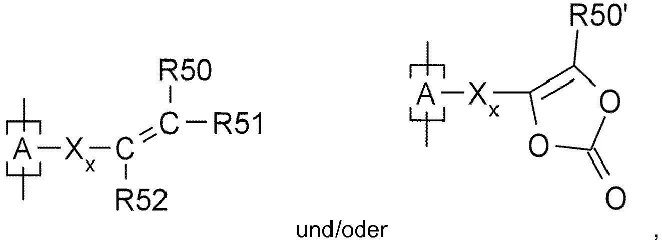 und/oder
mindestens eine Wiederholungseinheit mit einer kovalent gebundenen Alkin-Gruppe der allgemeinen chemischen Formel: 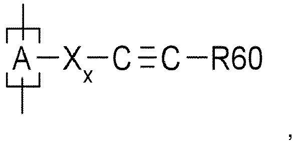 und/oder
mindestens eine Wiederholungseinheit mit einer kovalent gebundenen Nitril-Gruppe der allgemeinen chemischen Formel: 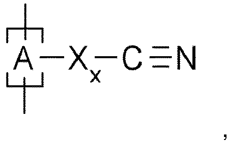 und/oder
mindestens eine Wiederholungseinheit mit einer kovalent gebundenen Isonitril-Gruppe der allgemeinen chemischen Formel: 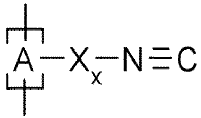 umfasst, wobei
A für eine Polymerrücken bildende Einheit steht,
X für einen, insbesondere kovalent an die Polymerrücken bildende Einheit A gebundenen, Spacer steht,
x für die Anzahl des Spacers X steht, und
R10 und R11 beziehungsweise R20, R21, R22 und R23 beziehungsweise R30, R31, R32 und R33 beziehungsweise R40, R41, R42, R43, R44 und R45 beziehungsweise R50, R51 und R52 beziehungsweise R50' beziehungsweise R60 jeweils unabhängig voneinander für Wasserstoff oder für eine Alkoxy-Gruppe oder für eine Alkyl-Gruppe oder für mindestens eine Alkylenoxid-Gruppe, insbesondere für mindestens eine Ethylenoxid-Gruppe, oder für mindestens eine Alkylen-Gruppe stehen.

11. Elektrolyt nach Anspruch 10,
wobei A für eine ionenleitfähige und/oder ionenleitende, insbesondere lithiumionenleitfähige und/oder lithiumionenleitende, Polymerrücken bildende Einheit, insbesondere für eine Alkylenoxid-Einheit, insbesondere für eine Ethylenoxid-Einheit und/oder für eine Propylenoxid-Einheit, und/oder für eine Acrylat-Einheit und/oder für eine Methacrylat-Einheit und/oder für eine Carbonat-Einheit und/oder für eine Siloxan-Einheit und/oder für eine Phosphazen-Einheit, steht, und/oder wobei X für einen ionenleitfähigen und/oder ionenleitenden, insbesondere lithiumionenleitfähigen und/oder lithiumionenleitenden, Spacer, insbesondere umfassend mindestens eine Alkylenoxid-Gruppe, steht.

12. Elektrolyt nach Anspruch 10 oder 11, wobei das mindestens eine Polymer mit der mindestens einen kovalent gebundenen Gruppe:
mindestens eine Wiederholungseinheit mit einer kovalent gebundenen Oxiran-Gruppe der allgemeinen chemischen Formel: 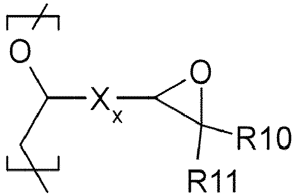 und/oder 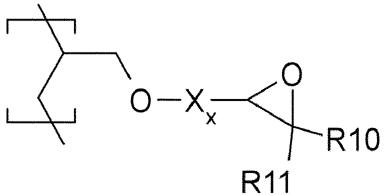 und/oder 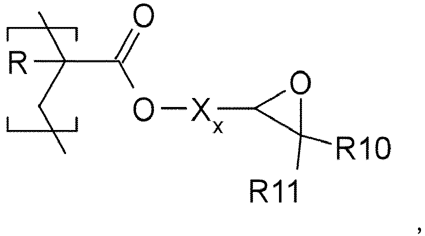 und/oder
mindestens eine Wiederholungseinheit mit einer kovalent gebundenen Oxetan-Gruppe der allgemeinen chemischen Formel: 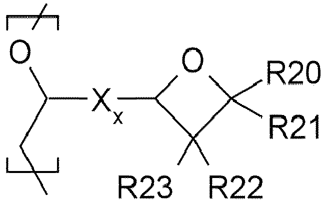 und/oder 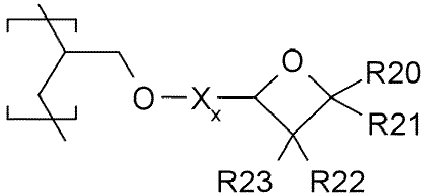 und/oder 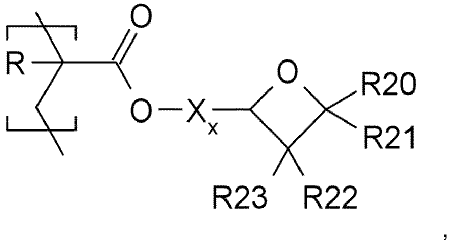 und/oder
mindestens eine Wiederholungseinheit mit einer kovalent gebundenen Cyclopropan-Gruppe der allgemeinen chemischen Formel: 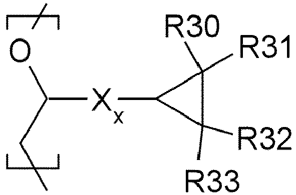 und/oder 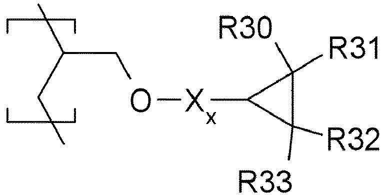 und/oder 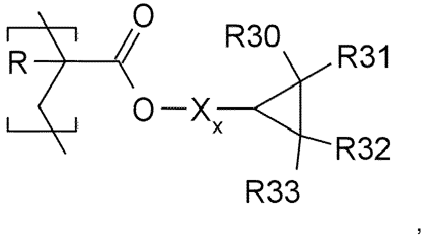 und/oder
mindestens eine Wiederholungseinheit mit einer kovalent gebundenen Cyclobutan-Gruppe der allgemeinen chemischen Formel: 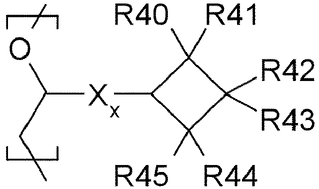 und/oder 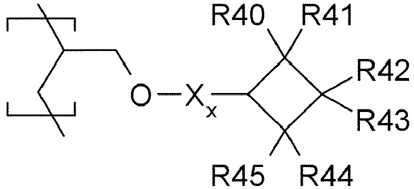 und/oder 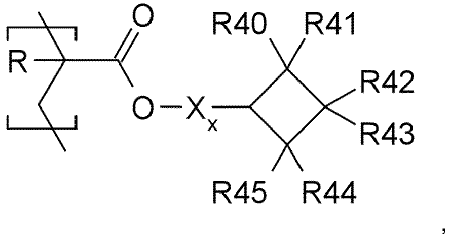 und/oder
mindestens eine Wiederholungseinheit mit einer kovalent gebundenen Alken-Gruppe der allgemeinen chemischen Formel: 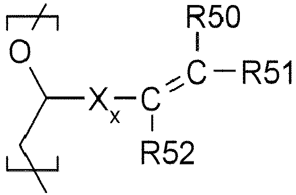 und/oder 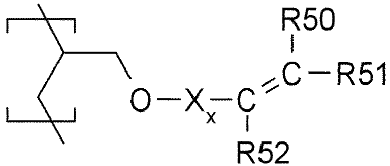 und/oder 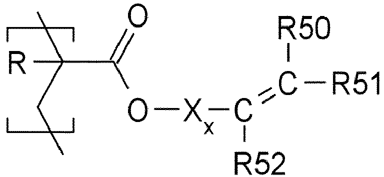 und/oder 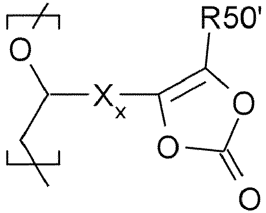 und/oder 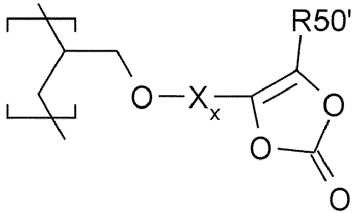 und/oder 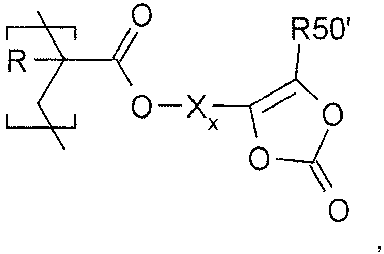 und/oder
mindestens eine Wiederholungseinheit mit einer kovalent gebundenen Alkin-Gruppe der allgemeinen chemischen Formel: 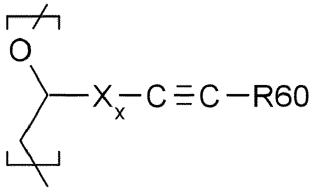 und/oder 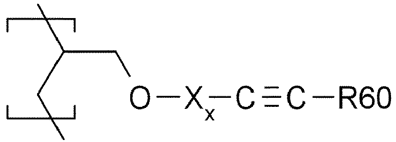 und/oder 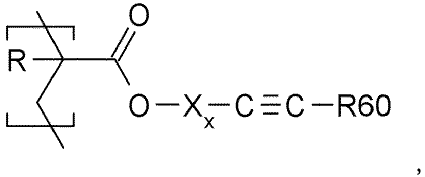 und/oder
mindestens eine Wiederholungseinheit mit einer kovalent gebundenen Nitril-Gruppe der allgemeinen chemischen Formel: 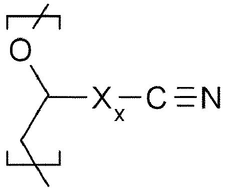 und/oder 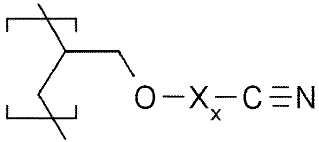 und/oder 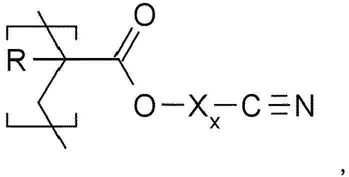 und/oder
mindestens eine Wiederholungseinheit mit einer kovalent gebundenen Isonitril-Gruppe der allgemeinen chemischen Formel: 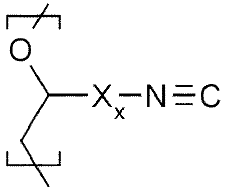 und/oder 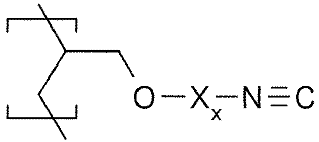 und/oder 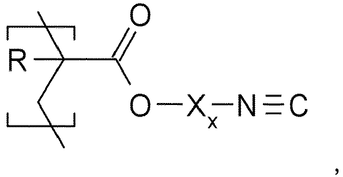 umfasst.

13. Elektrolyt nach einem der Ansprüche 1 bis 12, wobei der mindestens eine Katalysator mindestens ein Metall, insbesondere Übergangsmetall, in metallischer Form und/oder mindestens ein Natrium-Salz und/oder mindestens ein Kalium-Salz und/oder mindestens ein, insbesondere organisches, Ammonium-Salz, insbesondere in Form eines Chlorids und/oder Hydroxids, und/oder mindestens eine Lewis-Säure und/oder mindestens eine Brønsted saure ionische Flüssigkeit und/oder mindestens einen Metall-Komplex, insbesondere Übergangsmetall-Komplex, umfasst oder ist.

14. Elektrolyt nach einem der Ansprüche 1 bis 13, wobei der Elektrolyt weiterhin mindestens ein Leitsalz, insbesondere Lithium-Leitsalz, umfasst.

15. Polymerelektrolyt, umfassend mindestens ein Polymer mit mindestens einer kovalent gebundenen Gruppe, und/oder Polymer zur Ausbildung eines Polymerelektrolyten, umfassend mindestens eine kovalent gebundenen Gruppe,
wobei das Polymer mit der mindestens einen kovalent gebundenen Gruppe ein Polyalkylenoxid, insbesondere ein Polyethylenoxid und/oder Polypropylenoxid, und/oder ein Polyacrylat und/oder ein Polymethacrylat und/oder ein Polyallylether und/oder ein Polymer auf Basis von mindestens einer polymerisierten, mindestens eine Carbonatgruppe umfassenden Wiederholungseinheit, insbesondere ein Polycarbonat, und/oder ein Polymer, welches mindestens eine Polymerrücken bildende Struktureinheiten mit mindestens einer, mindestens eine Carbonatgruppe enthaltenden Seitengruppe umfasst, und/oder ein Polysiloxan und/oder ein Polyphosphazen umfasst oder ist, und
wobei die mindestens eine kovalent gebundene Gruppe mindestens einen Dreiring und/oder Vierring und/oder mindestens eine Kohlenstoff-Kohlenstoff-Doppelbindung, insbesondere mindestens eine Alken-Gruppe, und/oder mindestens eine Kohlenstoff-Kohlenstoff-Dreifachbindung, insbesondere mindestens eine Alkin-Gruppe, und/oder mindestens eine Kohlenstoff-Stickstoff-Dreifachbindung, insbesondere mindestens eine Nitril-Gruppe und/oder mindestens eine Isonitril-Gruppe, umfasst, insbesondere wobei der Polymerelektrolyt und/oder das Polymer mit der mindestens einen kovalent gebundenen Gruppe, bezogen auf das Polymer-Gesamtgewicht, ≥ 0,1 Gew.-% bis ≤ 100 Gew.-%, insbesondere ≥ 0,1 Gew.-% bis ≤ 30 Gew.-%, an mit der mindestens einen kovalent gebundenen Gruppe ausgestatteten Wiederholungseinheiten umfasst.

16. Polymerelektrolyt und/oder Polymer nach Anspruch 15, wobei die mindestens eine kovalent gebundene Gruppe mindestens eine Oxiran-Gruppe und/oder mindestens eine Oxetan-Gruppe und/oder mindestens eine Cyclopropan-Gruppe und/oder mindestens eine Cyclobutan-Gruppe und/oder mindestens eine Cyclopropen-Gruppe und/oder mindestens eine Cyclobuten-Gruppe und/oder mindestens eine Vinyl-Gruppe und/oder mindestens eine Allyl-Gruppe und/oder mindestens eine Alkenylencarbonat-Gruppe, insbesondere mindestens eine Vinylencarbonat-Gruppe, und/oder mindestens eine Alkenylenlacton-Gruppe, insbesondere mindestens eine Vinylenlacton-Gruppe, und/oder mindestens eine Alkenylcarbonat-Gruppe, insbesondere mindestens eine Vinylcarbonat-Gruppe, und/oder mindestens eine Alkenyllacton-Gruppe, insbesondere mindestens eine Vinyllacton-Gruppe, und/oder mindestens eine Nitril-Gruppe und/oder mindestens eine Isonitril-Gruppe umfasst oder ist.

17. Polymerelektrolyt und/oder Polymer nach Anspruch 15 oder 16, wobei das Polymer mit der mindestens einen kovalent gebundenen Gruppe ein Co-Polymer ist, insbesondere welches mindestens ein Polymer mit mindestens einer kovalent gebundenen Gruppe nach Anspruch 15 oder 16 und mindestens ein weiteres Polymer, insbesondere mindestens ein Poly(2-oxo-[1,3]-dioxolan-4-yl)alkylacrylat und/oder mindestens ein Poly(2-oxo-[1,3]-dioxolan-4-yl)alkylmethacrylat, umfasst, und/oder wobei der Polymerelektrolyt eine Polymermischung umfasst, welche mindestens ein Polymer mit mindestens einer kovalent gebundenen Gruppe nach Anspruch 15 oder 16 und mindestens ein weiteres Polymer, insbesondere mindestens ein Poly(2-oxo-[1,3]-dioxolan-4-yl)alkylacrylat und/oder mindestens ein Poly(2-oxo-[1,3]-dioxolan-4-yl)alkylmethacrylat, umfasst und/oder
wobei das Polymer mit der mindestens einen kovalent gebundenen Gruppe durch radikalische Polymerisation mindestens eines Monomers mit mindestens einer kovalent gebundenen Gruppe nach Anspruch 15 oder 16 ausgebildet ist.

18. Polymerelektrolyt und/oder Polymer nach einem der Ansprüche 15 bis 17, wobei das Polymer mit der mindestens einen kovalent gebundenen Gruppe:
mindestens eine Wiederholungseinheit mit einer kovalent gebundenen Oxiran-Gruppe der allgemeinen chemischen Formel: 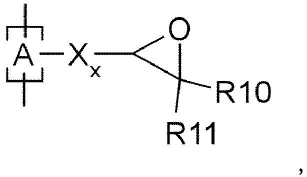 und/oder
mindestens eine Wiederholungseinheit mit einer kovalent gebundenen Oxetan-Gruppe der allgemeinen chemischen Formel: 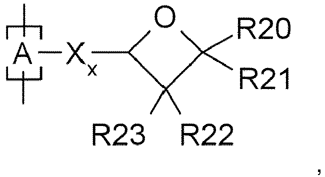 und/oder
mindestens eine Wiederholungseinheit mit einer kovalent gebundenen Cyclopropan-Gruppe der allgemeinen chemischen Formel: 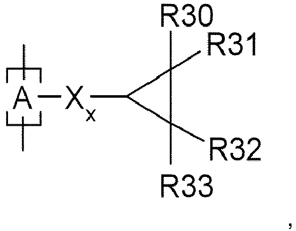 und/oder
mindestens eine Wiederholungseinheit mit einer kovalent gebundenen Cyclobutan-Gruppe der allgemeinen chemischen Formel: 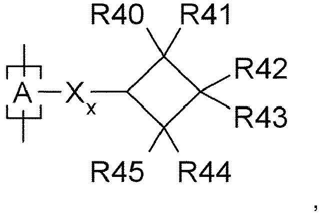 und/oder
mindestens eine Wiederholungseinheit mit einer kovalent gebundenen Alken-Gruppe der allgemeinen chemischen Formel: 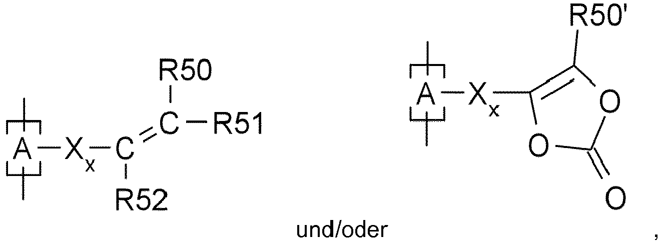 und/oder
mindestens eine Wiederholungseinheit mit einer kovalent gebundenen Alkin-Gruppe der allgemeinen chemischen Formel: 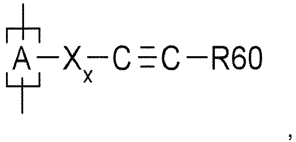 und/oder
mindestens eine Wiederholungseinheit mit einer kovalent gebundenen Nitril-Gruppe der allgemeinen chemischen Formel: 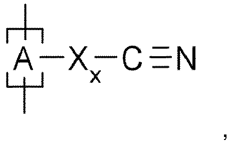 und/oder
mindestens eine Wiederholungseinheit mit einer kovalent gebundenen Isonitril-Gruppe der allgemeinen chemischen Formel: 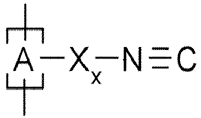
umfasst, wobei A für eine Polymerrücken bildende Einheit steht, insbesondere wobei [A] für eine Alkylenoxid-Einheit, insbesondere Ethylenoxid-Einheit und/oder Propylenoxid-Einheit, und/oder für eine Acrylat-Einheit und/oder für eine Methacrylat-Einheit und/oder für eine Carbonat-Einheit und/oder für eine Siloxan-Einheit und/oder für eine Phosphazen-Einheit steht,
X für einen, insbesondere kovalent an die Polymerrücken bildende Einheit A gebundenen, Spacer steht,
x für die Anzahl des Spacers X steht, und
R10 und R11 beziehungsweise R20, R21, R22 und R23 beziehungsweise R30, R31, R32 und R33 beziehungsweise R40, R41, R42, R43, R44 und R45 beziehungsweise R50, R51 und R52 beziehungsweise R50' beziehungsweise R60 jeweils unabhängig voneinander für Wasserstoff oder für eine Alkoxy-Gruppe oder für eine Alkyl-Gruppe oder für mindestens eine Alkylenoxid-Gruppe, insbesondere für mindestens eine Ethylenoxid-Gruppe, oder für mindestens eine Alkylen-Gruppe stehen.

19. Polymerelektrolyt und/oder Polymer nach einem der Ansprüche 15 bis 18, wobei das Polymer mit der mindestens einen kovalent gebundenen Gruppe ein Polyalkylenoxid, insbesondere ein Polyethylenoxid und/oder Polypropylenoxid, und/oder ein Polyacrylat und/oder ein Polymethacrylat und/oder einen Polyallylether umfasst oder ist und/oder wobei [A] für eine Alkylenoxid-Einheit, insbesondere Ethylenoxid-Einheit und/oder Propylenoxid-Einheit, und/oder für eine Acrylat-Einheit und/oder für eine Methacrylat-Einheit steht und/oder wobei X für einen ionenleitfähigen und/oder ionenleitenden, insbesondere lithiumionenleitfähigen und/oder lithiumionenleitenden, Spacer steht.

20. Polymerelektrolyt und/oder Polymer nach einem der Ansprüche 15 bis 19, wobei das Polymer mit der mindestens einen kovalent gebundenen Gruppe;
mindestens eine Wiederholungseinheit mit einer kovalent gebundenen Oxiran-Gruppe der allgemeinen chemischen Formel: 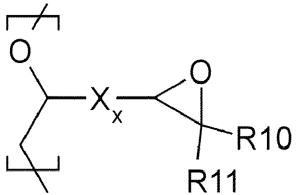 und/oder 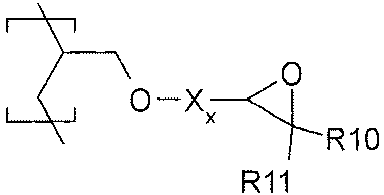 und/oder 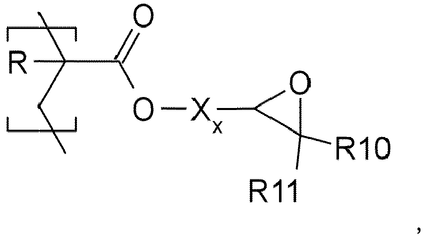 und/oder
mindestens eine Wiederholungseinheit mit einer kovalent gebundenen Oxetan-Gruppe der allgemeinen chemischen Formel: 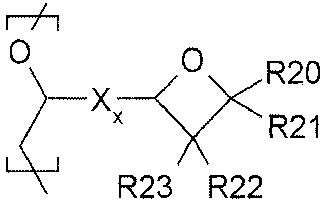 und/oder 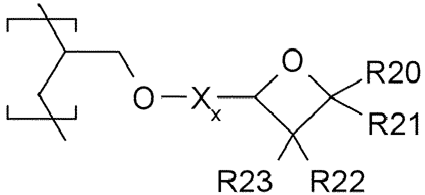 und/oder 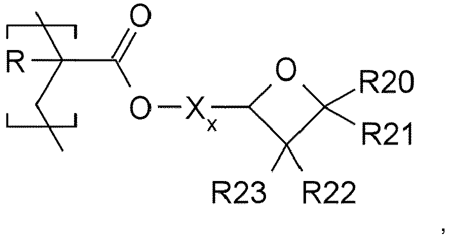 und/oder
mindestens eine Wiederholungseinheit mit einer kovalent gebundenen Cyclopropan-Gruppe der allgemeinen chemischen Formel: 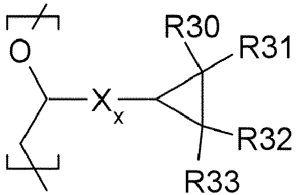 und/oder 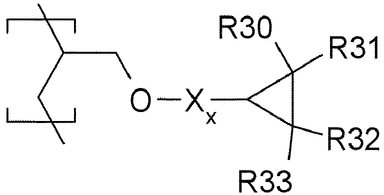 und/oder 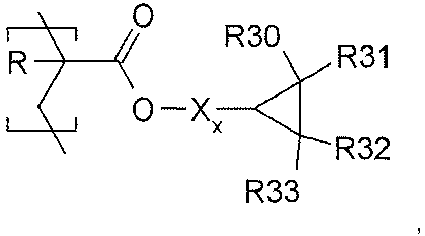 und/oder
mindestens eine Wiederholungseinheit mit einer kovalent gebundenen Cyclobutan-Gruppe der allgemeinen chemischen Formel: 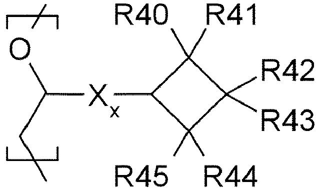 und/oder 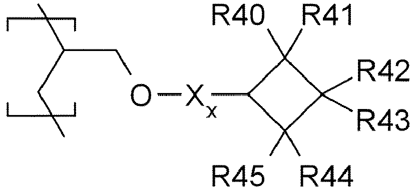 und/oder 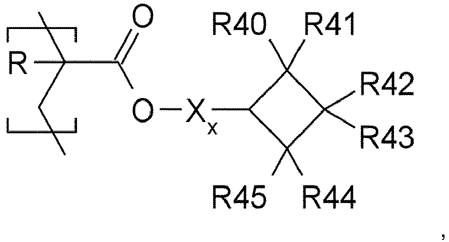 und/oder
mindestens eine Wiederholungseinheit mit einer kovalent gebundenen Alken-Gruppe der allgemeinen chemischen Formel: 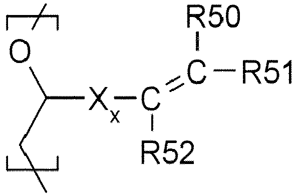 und/oder 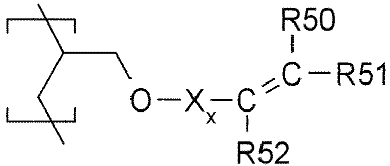 und/oder 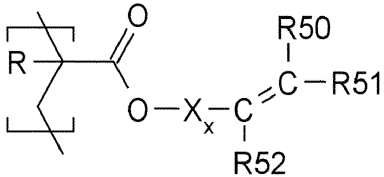 und/oder 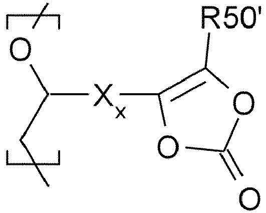 und/oder 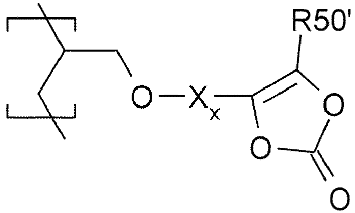 und/oder 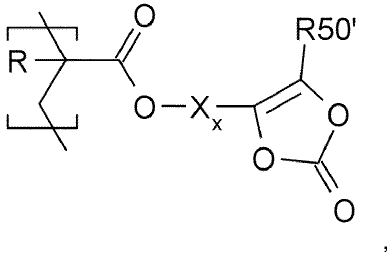 und/oder
mindestens eine Wiederholungseinheit mit einer kovalent gebundenen Alkin-Gruppe der allgemeinen chemischen Formel: 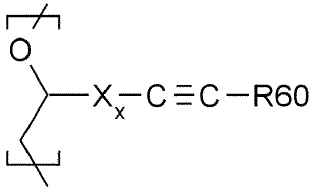 und/oder 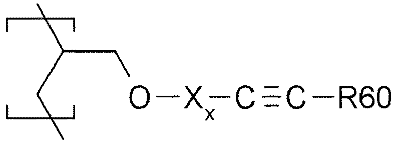 und/oder 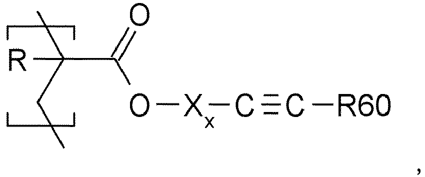 und/oder
mindestens eine Wiederholungseinheit mit einer kovalent gebundenen Nitril-Gruppe der allgemeinen chemischen Formel: 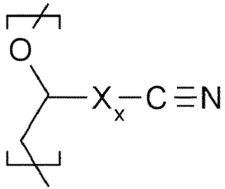 und/oder 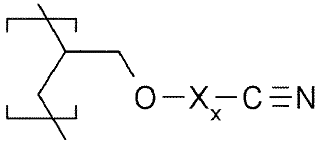 und/oder 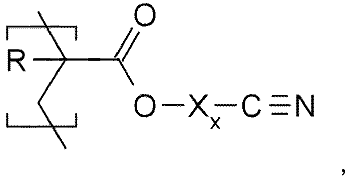 und/oder
mindestens eine Wiederholungseinheit mit einer kovalent gebundenen Isonitril-Gruppe der allgemeinen chemischen Formel: 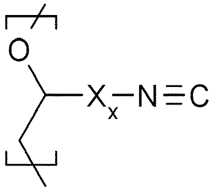 und/oder 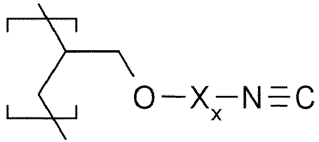 und/oder 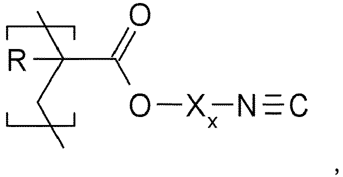 umfasst.

21. Polymerelektrolyt und/oder Polymer nach einem der Ansprüche 15 bis 20, wobei der Polymerelektrolyt und/oder das Polymer mindestens ein Leitsalz, insbesondere Lithium-Leitsalz, umfasst.

22. lonenleitende Funktionsschicht (13,13'), insbesondere Separatorschicht und/oder Elektrolytmembran, für eine elektrochemische Zelle (10), insbesondere für eine Batteriezelle und/oder Brennstoffzelle und/oder Elektrolysezelle, umfassend mindestens einen Elektrolyten nach einem der Ansprüche 1 bis 14 und/oder mindestens einen Polymerelektrolyten und/oder Polymer nach einem der Ansprüche 15 bis 21.

23. Elektrochemische Zelle (10), insbesondere Batteriezelle und/oder Brennstoffzelle und/oder Elektrolysezelle, mit einer negativen Elektrode (11), mit einer positiven Elektrode (12) und mit mindestens einer zwischen der negativen Elektrode (11) und der positiven Elektrode (12) angeordneten ionenleitenden Schicht (13,13',14,14'), umfassend mindestens einen Elektrolyten nach einem der Ansprüche 1 bis 14 und/oder mindestens einen Polymerelektrolyten und/oder Polymer nach einem der Ansprüche 15 bis 21 und/oder mindestens eine Funktionsschicht (13,13') nach Anspruch 22.

24. Zelle nach Anspruch 23, wobei die mindestens eine Funktionsschicht (13,13') zwischen der negativen Elektrode (11) und der positiven Elektrode (12) angeordnet ist, und
- wobei die Zelle (10) zwischen der mindestens einen Funktionsschicht (13,13') und der negativen Elektrode (11) eine weitere, insbesondere zur negativen Elektrode (11) benachbarte, ionenleitende Schicht (14) und/oder zwischen der mindestens einen Funktionsschicht (13,13') und der positiven Elektrode (12) eine weitere, insbesondere zur positiven Elektrode (12) benachbarte, ionenleitende Schicht (14') umfasst, oder
- wobei die mindestens eine ionenleitende Schicht (13,13',14,14') durch die mindestens eine Funktionsschicht (13) ausgebildet ist, insbesondere wobei zwischen der negativen Elektrode (11) und der positiven Elektrode (12) lediglich eine Funktionsschicht (13) vorgesehen ist, oder
- wobei die Zelle (10) zwischen einer weiteren, ionenleitenden Schicht (14) und der negativen Elektrode (11) eine, insbesondere zur negativen Elektrode (11) benachbarte, Funktionsschicht (13) und zwischen der weiteren, ionenleitenden Schicht (14) und der positiven Elektrode (12) eine, insbesondere zur positiven Elektrode (12) benachbarte, weitere Funktionsschicht (13') umfasst.

25. Zelle (10) nach Anspruch 24, wobei die weitere ionenleitende Schicht (14,14') eine Festelektrolytschicht, insbesondere aus mindestens einem Polymerelektrolyten und/oder aus mindestens einem anorganischen lonenleitern, und/oder eine, insbesondere poröse, Schicht, welche mindestens einen Flüssigelektrolyten umfasst, ist.
